# EUROPEAN PATENT SPECIFICATION

(11) **EP 1 653 810 B1**
(45) Date of publication and mention of the grant of the patent: **25.04.2007**
(21) Application number: 04781075.9
(22) Date of filing: 16.08.2004
(51) Int. Cl.: A23G 3/00, A23L 1/236

(54) **CHEWING GUM COMPOSITIONS COMPRISING MONATIN AND METHODS OF MAKING SAME**
MONATINHALTIGE KAUGUMMIZUSAMMENSETZUNGEN UND VERFAHREN ZU IHRER HERSTELLUNG
COMPOSITIONS A BASE DE CHEWING GUM CONTENANT DE LA MONATINE ET PROCEDES DE PREPARATION ASSOCIES

(30) Priority: 14.08.2003 US 495191 P
(43) Date of publication of application: 10.05.2006
(73) Proprietor: CARGILL, INCORPORATED, Wayzata, Minnesota 55391 (US)
(72) Inventor: HICKS, Paula, M., Eden Prairie, MN 55347 (US); ABRAHAM, Timothy W., Minnetonka, Minnesota 55345 (US); CAMERON, Douglas C., Plymouth, Minnesota 55447 (US); GOULSON, Melanie J., Dayton, Minnesota 55327 (US); LINDLEY, Michael G., Crowthorne, Berkshire (GB); MCFARLAN, Sara C., St. Paul, Minnesota 55116 (US); MILLIS, James R., Plymouth, Minnesota 55447 (US); ROSAZZA, John, Iowa City , Iowa 52240 (US); ZHAO, Lishan, Carlsbad, California 92009 (US); WEINER, David P., Del Mar, California 92014 (US)
(74) Representative: Wibbelmann, Jobst
(86) International application number: PCT/US2004/026330
(87) International publication number: WO 2005/016022

(56) References cited:
- US-A- 4 371 614
- US-A- 4 597 970
- US-A- 5 994 559
- US-A1- 2004 063 175
- NAKAMURA K ET AL: "TOTAL SYNTHESIS OF MONATIN" ORGANIC LETTERS, ACS, WASHINGTON, DC, US, vol. 2, no. 19, 2000, pages 2967-2970, XP002964364 ISSN: 1523-7060

## Description

### CROSS-REFERENCE TO RELATED APPLICATIONS

This application claims the benefit of U.S. Provisional Patent Application 60/495,191 filed August 14, 2003.

### FIELD OF INVENTION

The present invention relates to novel chewing gum compositions, including functional gums or bubble gum, comprising monatin and methods for making such compositions. The present invention also relates to chewing gum compositions comprising a specific monatin stereoisomer, specific blends of monatin stereoisomers, and/or monatin produced via a biosynthetic pathway *in vivo* (e.g., inside cells) or *in vitro.*

### BACKGROUND

The use of non-caloric high intensity sweeteners is increasing due to health concerns raised over childhood obesity, type II diabetes, and related illnesses. Thus, a demand exists for sweeteners having a sweetness significantly higher than that in conventional sweeteners, such as granulated sugar (sucrose). Many high intensity sweeteners contain unpleasant off-flavors and/or unexpected and less-than-desirable sweetness profiles. In attempts to overcome these problems, the industry continues to conduct significant research into bitterness inhibitors, off-flavor masking technologies, and sweetener blends to achieve a sweetness profile similar to sucrose.

Monatin (2-hydroxy-2-(indol-3-ylmethyl)-4-aminoglutaric acid) is a naturally-occurring, high intensity sweetener isolated from the plant *Sclerochiton ilicifolius,* found in the Transvaal Region of South Africa. Monatin contains no carbohydrate or sugar, and nearly no calories, unlike sucrose or other nutritive sweeteners at equal sweetness.

### SUMMARY

The present invention relates to chewing gum compositions comprising monatin (2-hydroxy-2-(indol-3-ylmethyl)-4-aminoglutaric acid-also known as 4-amino-2-hydroxy-2-(1H-indol-3-ylmethyl)-pentanedioic acid, or alternatively, based on an alternate numbering system, 4-hydroxy-4-(3-indolylmethyl) glutamic acid), a compound having the formula:

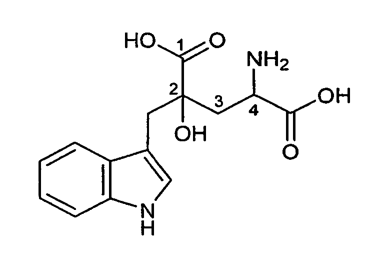

Monatin is a naturally-occurring, high intensity sweetener. Monatin has four stereoisomeric forms: 2R, 4R (the "R,R stereoisomer" or "R,R monatin"), 2S, 4S (the "S,S stereoisomer" or "S,S monatin"), 2R, 4S (the "R,S stereoisomer" or "R,S monatin"), and 2S, 4R (the "S,R stereoisomer" or "S,R monatin"). As used herein, unless stated otherwise, "monatin" refers to all four stereoisomers of monatin, as well as any blends of any combination of monatin stereoisomers (e.g., a blend of the R,R and S,S, stereoisomers of monatin).

Monatin has an excellent sweetness quality. Monatin has a flavor profile that is as clean or cleaner that other known high intensity sweeteners. The dose response curve of monatin is more linear, and therefore more similar to sucrose than other high intensity sweeteners, such as saccharin. Monatin's excellent sweetness profile makes monatin desirable for use in chewing gum compositions, tabletop sweeteners, foods, beverages and other products.

Different stereoisomers of monatin, including the R,R and S,S stereoisomers, have potential in the sweetener industry, either as separate ingredients or in blends. Monatin, and blends of stereoisomers of monatin with other sweeteners, are thought to have superior taste characteristics and/or physical qualities, as compared to other high intensity sweeteners. For example, monatin is more stable than aspartame (also known as "APM"), has a cleaner taste than saccharin, and one stereoisomer (R,R monatin) is more sweet than sucralose. Likewise, monatin sweeteners do not have the bitter aftertaste associated with saccharin, or the metallic, acidic, astringent or throat burning aftertastes of some other high potency sweeteners. In addition, monatin sweeteners do not exhibit the licorice aftertaste associated with certain natural sweeteners, such as stevioside and glycyrrhizin.

Furthermore, unlike aspartame sweeteners, monatin sweeteners do not require a phenylalanine warning for patients with phenylketonuria. Likewise, it is expected that monatin is not cariogenic (i.e., does not promote tooth decay) because it does not contain fermentable carbohydrates. It is also expected that monatin will not cause a drop below pH ~5.7 (which can be harmful to teeth) when mixed with saliva, as measured in a pH drop test. Because of its intense sweetness, the R,R stereoisomer in particular should be economically competitive compared to other high intensity sweeteners.

In one aspect, the present invention provides a chewing gum composition that includes a gum base portion and a soluble portion, wherein the soluble portion includes monatin, such as R,R, S,S, R,S, or S,R monatin or a blend of different stereoisomers. In one embodiment, the gum base portion comprises 3 to 50 wt % of an elastomer; 0.5 to 25 wt % of a softener; 2 to 30 wt % of an emulsifier; 5 to 75 wt % of a resin; and 0 to 20 wt% of a filler. The term "wt %" means weight percent. For example, 1 wt % refers to 1 gram per 100 grams, or 10 grams per 1 kg. In another embodiment, the gum base portion can be 15 to 30 wt % of the composition. In other embodiments, the elastomer can be chosen from a natural rubber, a natural gum, a biodegradable gum, a synthetic elastomer and a combination thereof.

For example, the natural rubber may be chosen from smoked latex, liquid latex, and guayule. The natural and/or biodegradable gum can be chosen from, for example, jelutong, perillo, sorva, massaranduba balata, massaranduba chocolate, nispero, rosindinha, chicle, gutta hang kang, arabinogalactan, guar, xanthan and gums made from proteins, such as gluten and zein. The term "natural" means existing in or formed by nature. The term "biodegradable" means capable of decaying or decomposing through the action of biological processes or agents, such as living organisms. In some embodiments, the biodegradable gum is less sticky or non-sticky. The synthetic elastomer can be chosen from, for example, butadiene-styrene copolymers, isobutylene-isoprene copolymers, polybutadiene, polyisobutylene, and vinyl polymeric elastomers.

In some embodiments, a softener (also known as a plasticizer) can include one or more of tallow, hydrogenated tallow, hydrogenated vegetable oils, partially hydrogenated vegetable oils, cocoa butter, glycerol monostearate, glycerol triacetate, lecithin, monoglycerides, diglycerides, triglycerides, acetylated monoglycerides, fatty acids, syrups, such as polyol syrups (e.g., maltitol syrup, glycerol syrup and glycerol) and mixed polyol syrups, and a combination thereof. In other embodiments, the filler can be one or more of lecithin, inulin, polydextrin, calcium carbonate, magnesium carbonate, magnesium silicate, ground limestone, aluminum silicate, talc, clay, alumina, titanium dioxide, and calcium phosphate. In other embodiments, the emulsifier can be glycerol monostearate, lecithin, polyglycerol polyricinoleic acid, or magnesium stearate. In other embodiments, the resin can be a rosin ester, a terpene resin, polyvinal acetate, polyvinyl alcohol, ethylene vinyl acetate, or vinyl acetate-vinyl laurate copolymer. In other embodiments, the rosin ester can be a glycerol ester of partially hydrogenated rosin, a glycerol ester of polymerized rosin, a glycerol ester of partially dimerized rosin, a glycerol ester of rosin, a pentaerythritol ester of partially hydrogenated rosin, a methyl ester of rosin, or a methyl ester of partially hydrogenated rosin.

In embodiments, the emulsifier and the softener, the emulsifier and the filler, and the softener and the filler can be different compounds.

In other embodiments, the soluble portion further can include a bulk sweetener, e.g., a corn sweetener, sucrose, dextrose, invert sugar, dextrin, fructose, levulose, corn syrup solids, galactose, trehalose, isomaltulose, or a combination thereof. Alternatively, the soluble portion further can include a high-intensity sweetener or lower glycemic carbohydrate (i.e., one less glycemic than sucrose). For example, the high-intensity sweetener or lower glycemic carbohydrate can be chosen from sorbitol (including amorphous and crystalline sorbitol), mannitol, maltitol, hydrogenated starch hydrolysates, xylitol, alitame, thaumatin, sucralose, aspartame, acesulfame K, a dihydrochalcone, saccharin, neotame, a cyclamate, stevioside, mogroside, tagatose, erythritol, isomalt, lactitol, glycyrrhizin, phyllodulcin, monellin, mabinlin, brazzein, curculin, miraculin, and pentadin.

Alternatively, the soluble portion further can include a flavoring agent. For example, the flavoring agent can be an essential oil or a synthetic flavor, or a combination thereof. The essential oil can be, for example, peppermint oil, spearmint oil, or oil of wintergreen. Alternatively, the flavoring agent can be, for example, a fruit-flavoring agent (e.g., orange oil, lemon oil, banana, cherry, apple, pineapple, grape, strawberry, tutti-frutti, watermelon, or combinations thereof).

In certain embodiments, the present invention provides chewing gum formulations comprising the R,R stereoisomer of monatin, the S,S stereoisomer of monatin, and/or a blend of stereoisomers of monatin. One can provide monatin, such as in a blend of stereoisomers, in solid (e.g., freezed-dried, crystalline, amorphous and/or powder) and liquid form. In one embodiment, chewing gum compositions comprise monatin or salt thereof in an amount that provides a sweetness comparable to the sweetness provided by the amount of sucrose (and/or other carbohydrates) presented in known chewing gum compositions. "A sweetness comparable" means that an experienced sensory evaluator, on average, will determine that the sweetness presented in a first composition is within a range of 80% to 120% of the sweetness presented a second composition. In another embodiment, a chewing gum composition comprises monatin or salt thereof in an amount that provides enhanced long-term sweetness. "Enhanced long-term sweetness" means enhanced sweetness over time as compared to sweetness provided over time by aspartame or sucralose in similar chewing gum compositions.

In one embodiment, the R,R stereoisomer of monatin is about 0.009 to about 0.1 wt% of the composition (e.g., about 0.015 to about 0.025 wt % of the composition). In another embodiment, the S,S stereoisomer of monatin is about 0.1 to about 1.1 wt % of the composition (e.g., about 0.15 to about 0.88 wt % of the composition). In other embodiments, the soluble portion includes a blend of the S,S stereoisomer of monatin and acesulfame K (e.g., about 0.1 to about 1.1 wt % monatin and about 0.1 to about 0.3 wt % acesulfame K). In other embodiments, the monatin is encapsulated, either alone or in combination with other substances.

The term "about" encompasses the range of experimental error that occurs in any measurement. Unless otherwise stated, all measurement numbers are presumed to have the word "about" in front of them even if the word "about" is not expressly used. "Encapsulated" means enclosed or held within a covering or microcapsule, where, for example, the microcapsule protects the enclosed substance(s), allowing it/them to be released more slowly upon chewing.

In certain embodiments, the soluble portion further can include a bulk sweetener, a high-intensity sweetener or lower glycemic carbohydrate, and a flavoring agent. In other embodiments, the soluble portion can include a blend of monatin and a cyclamate. In other embodiments multiple sweeteners (including monatin), as well as sweetener (including monatin) /flavor blends, can be encapsulated, and coprocessed and codried.

In some embodiments, the chewing gum compositions comprise monatin that consists essentially of S,S or R,R monatin. In other embodiments, the compositions contain predominantly S,S or R,R monatin. "Predominantly" means that of the monatin stereoisomers present in the composition, the monatin contains greater than 90% of a particular stereoisomer. In some embodiments, the compositions are substantially free of S,S or R,R monatin. "Substantially free" means that of the monatin stereoisomers present in the composition, the composition contains less than 2% of a particular stereoisomer. Additionally or alternatively, when used to describe monatin produced in a biosynthetic pathway, "substantially free" encompasses the amount of a stereoisomer (e.g., S,S monatin) produced as a by-product in a biosynthetic pathway involving chiral-specific enzymes (e.g., D-amino acid dehydrogenases or D-amino acid aminotransferases) and/or chiral-specific substrates (e.g., one having a carbon in the R-stereoconfiguration) to produce a different specific stereoisomer (e.g., R,R monatin)

In another aspect of the present invention, a chewing gum composition is provided, which includes a stereoisomerically-enriched monatin mixture produced in a biosynthetic pathway. "Stereoisomerically-enriched monatin mixture" means that the mixture contains more than one monatin stereoisomer and at least 60% of the monatin stereoisomers in the mixture is a particular stereoisomer, such as R,R, S,S, S,R or R,S. In other embodiments, the mixture contains greater than 65%, 70%, 75%, 80%, 85%, 90%, 95%, 98% or 99% of a particular monatin stereoisomer. In another embodiment, a chewing gum composition comprises an stereoisomerically-enriched R,R or S,S monatin. "Stereoisomerically-enriched" R,R monatin means that the monatin comprises at least 60% R,R monatin. "Stereoisomerically-enriched" S,S monatin means that the monatin comprises at least 60% S,S monatin. In other embodiments, "stereoisomerically-enriched" monatin comprises greater than 65%, 70%, 75%, 80%, 85%, 90%, 95%, 98% or 99% of R,R or S,S monatin.

In another aspect of the present invention, a method of making a chewing gum composition is provided. The method includes biosynthetically producing monatin either *in vivo* or *in vitro.* A "biosynthetic pathway" comprises at least one biological conversion step. In some embodiments, the biosynthetic pathway is a multi-step process and at least one step is a biological conversion step. In other embodiments, the biosynthetic pathway is a multi-step process involving both biological and chemical conversion steps. In some embodiments, the monatin produced is a stereoisomerically-enriched monatin mixture.

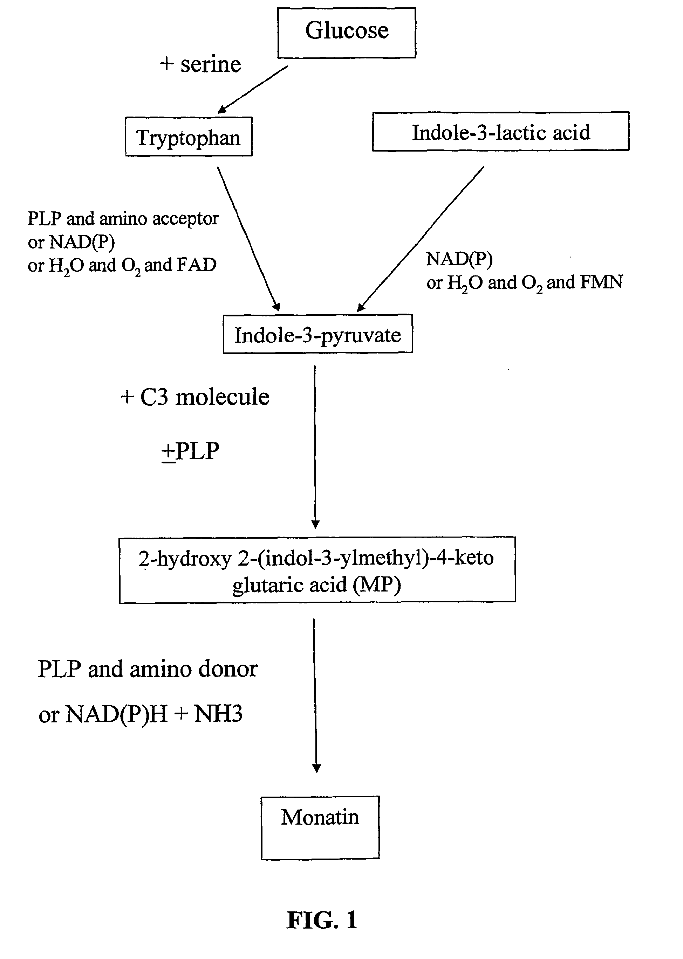

In another aspect of the present invention, several biosynthetic pathways exist for making monatin from substrates chosen from glucose, tryptophan, indole-3-lactic acid, as well as indole-3-pyruvate and 2-hydroxy 2-(indole-3-ylmethyl)-4-keto glutaric acid (also known as "the monatin precursor," "MP" or the alpha-keto form of monatin). Examples of biosynthetic pathways for producing or making monatin or its intermediates are disclosed in FIGS. 1-3 and 11-13, which show potential intermediate products and end products in boxes. For example, a conversion from one product to another, such as glucose to tryptophan, tryptophan to indole-3-pyruvate, indole-3-pyruvate to MP, MP to monatin, or indole-3-lactic acid (indolelactate) to indole-3-pyruvate, occurs in these pathways.

These conversions within the biosynthetic pathways can be facilitated via chemical and/or biological conversions. The term "convert" refers to the use of either chemical means or at least one polypeptide in a reaction to change a first intermediate into a second intermediate. Conversions can take place *in vivo* or *in vitro.* The term "chemical conversion" refers to a reaction that is not actively facilitated by a polypeptide. The term "biological conversion" refers to a reaction that is actively facilitated by one or more polypeptides. When biological conversions are used, the polypeptides and/or cells can be immobilized on supports such as by chemical attachment on polymer supports. The conversion can be accomplished using any reactor known to one of ordinary skill in the art, for example in a batch or a continuous reactor.

Examples of polypeptides, and their coding sequences, that can be used to perform biological conversions are shown in FIGS. 1-3 and 11-13. Polypeptides having one or more point mutations that allow the substrate specificity and/or activity of the polypeptides to be modified, can be used to make monatin. Isolated and recombinant cells expressing such polypeptides can be used to produce monatin. These cells can be any cell, such as a plant, animal, bacterial, yeast, algal, archaeal, or fungal cell.

For example, monatin-producing cells can include one or more (such as two or more, or three or more) of the following activities: tryptophan aminotransferase (EC 2.6.1.27), tyrosine (aromatic) aminotransferase (EC 2.6.1.5), tryptophan dehydrogenase (EC 1.4.1.19), glutamate dehydrogenase (EC 1.4.1.2, 1.4.1.3, 1.4.1.4), phenylalanine dehydrogenase (EC 1.4.1.20), tryptophan-phenylpyruvate transaminase (EC2.6.1.28), multiple substrate aminotransferase (EC 2.6.1.-), aspartate aminotransferase (EC 2.6.1.1), L-amino acid oxidase (EC 1.4.3.2), tryptophan oxidase (no EC number, Hadar et al., *J Bacteriol* 125:1096-1104, 1976 and Furuya et al., *Biosci Biotechnol Biochem* 64:1486-93, 2000), D-tryptophan aminotransferase (Kohiba and Mito, Proceedings of the 8^{th} International Symposium on Vitamin B₆ and Carbonyl Catalysis, Osaka, Japan 1990), D-amino acid dehydrogenase (EC 1.4.99.1), D-amino acid oxidase (EC 1.4.3.3), D-alanine aminotransferase (EC 2.6.1.21), synthase/lyase (EC 4.1.3.-), such as 4-hydroxy-2-oxoglutarate aldolase (EC 4.1.3.16) or 4-hydroxy-4-methyl-2-oxoglutarate aldolase (EC 4.1.3.17), and/or synthase/lyase (4.1.2.-).

In another example, cells can include one or more (such as two or more, or three or more) of the following activities: indolelactate dehydrogenase (EC 1.1.1.110), R-4-hydroxyphenyllactate dehydrogenase (EC 1.1.1.222), 3-(4)-hydroxyphenylpyruvate reductase (EC 1.1.1.237), lactate dehydrogenase (EC 1.1.1.27, 1.1.1.28, 1.1.2.3), (3-imidazol-5-yl) lactate dehydrogenase (EC 1.1.1.111), lactate oxidase (EC 1.1.3.-), synthase/lyase (4.1.3.-) such as 4-hydroxy-2-oxoglutarate aldolase (EC 4.1.3.16) or 4-hydroxy-4-methyl-2-oxoglutarate aldolase (EC 4.1.3.17), synthase/lyase (4.1.2.-), tryptophan aminotransferase (EC 2.6.1.27), tyrosine (aromatic) aminotransferase (EC 2.6.1.5), tryptophan dehydrogenase (EC 1.4.1.19), glutamate dehydrogenase (EC 1.4.1.2, 1.4.1.3, 1.4.1.4), phenylalanine dehydrogenase (EC 1.4.1.20), tryptophan-phenylpyruvate transaminase (EC 2.6.1.28), multiple substrate aminotransferase (EC 2.6.1.-), aspartate aminotransferase (EC 2.6.1.1), D-tryptophan aminotransferase, D-amino acid dehydrogenase (EC 1.4.99.1), and/or D-alanine aminotransferase (EC 2.6.1.21).

In addition, the cells can include one or more (such as two or more, or three or more) of the following activities: tryptophan aminotransferase (EC 2.6.1.27), tyrosine (aromatic) aminotransferase (EC 2.6.1.5), tryptophan dehydrogenase (EC 1.4.1.19), glutamate dehydrogenase (EC 1.4.1.2, 1.4.1.3, 1.4.1.4), phenylalanine dehydrogenase (EC 1.4.1.20), tryptophan-phenylpyruvate transaminase (EC 2.6.1.28), multiple substrate aminotransferase (EC 2.6.1.-), aspartate aminotransferase (EC 2.6.1.1), L-amino acid oxidase (EC 1.4.3.2), tryptophan oxidase, D-tryptophan aminotransferase, D-amino acid dehydrogenase (EC 1.4.99.1), D-amino acid oxidase (EC 1.4.3.3), D-alanine aminotransferase (EC 2.6.1.21), indolelactate dehydrogenase (EC 1.1.1.110), R-4-hydroxyphenyllactate dehydrogenase (EC 1.1.1.222), 3-(4)-hydroxyphenylpyruvate reductase (EC 1.1.1.237), lactate dehydrogenase (EC 1.1.1.27, 1.1.1.28, 1.1.2.3), (3-imidazol-5-yl) lactate dehydrogenase (EC 1.1.1.111), lactate oxidase (EC 1.1.3.-), synthase/lyase (EC 4.1.3.-), such as 4-hydroxy-2-oxoglutarate aldolase (EC 4.1.3.16) or 4-hydroxy-4-methyl-2-oxoglutarate aldolase (EC 4.1.3.17), and/or synthase/lyase (4.1.2.-).

As further example, the cells can include one or more of the following aldolase activities: KHG aldolase, ProA aldolase, KDPG aldolase and/or related polypeptides (KDPH), transcarboxybenzalpyruvate hydratase-aldolase, 4-(2-carboxyphenyl)-2-oxobut-3-enoate aldolase, trans-O-hydroxybenzylidenepyruvate hydratase-aldolase, 3-hydroxyaspartate aldolase, benzoin aldolase, dihydroneopterin aldolase, L-threo-3-phenylserine benzaldehyde-lyase (phenylserine aldolase), 4-hydroxy-2-oxovalerate aldolase, 1,2-dihydroxybenzylpyruvate aldolase, and/or 2-hydroxybenzalpyruvate aldolase.

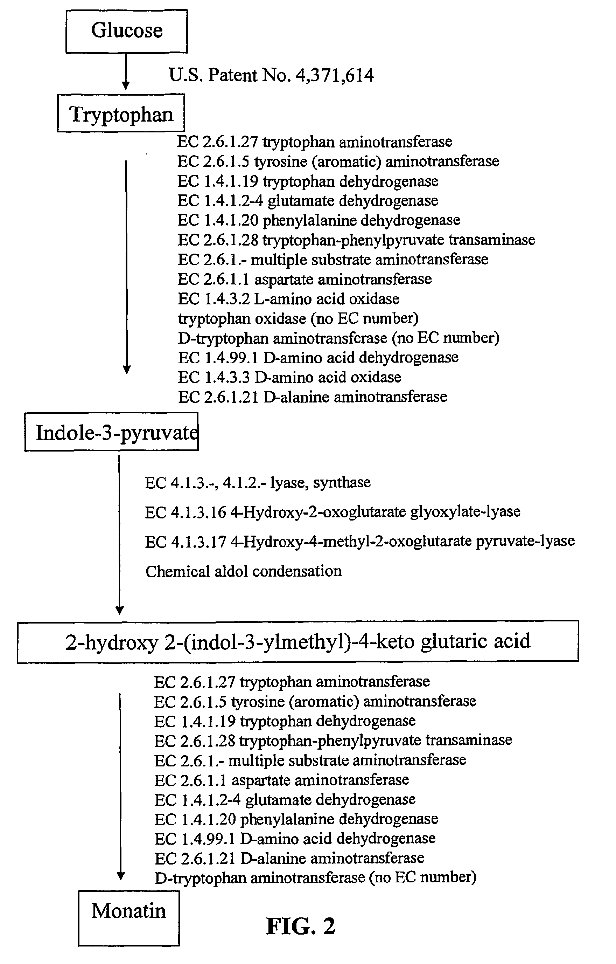

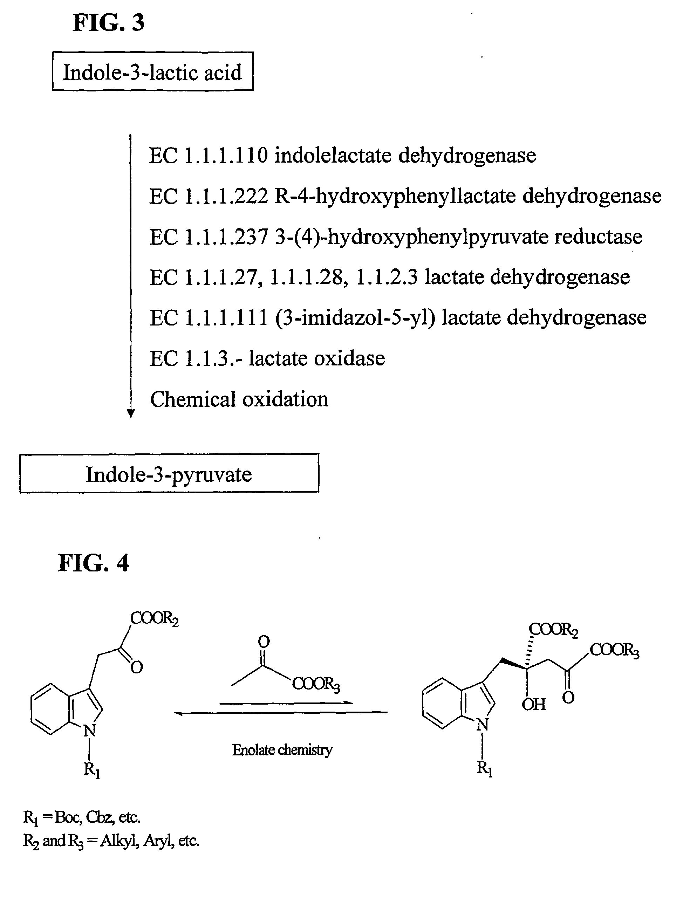

Monatin can be produced by methods that include contacting tryptophan and/or indole-3-lactic acid with a first polypeptide, wherein the first polypeptide converts tryptophan and/or indole-3-lactic acid to indole-3-pyruvate (either the D or the L form of tryptophan or indole-3-lactic acid can be used as the substrate that is converted to indole-3-pyruvate; one of skill in the art will appreciate that the polypeptides chosen for this step ideally exhibit the appropriate specificity), contacting the resulting indole-3-pyruvate with a second polypeptide, wherein the second polypeptide converts the indole-3-pyruvate to 2-hydroxy 2-(indol-3-ylmethyl)-4-keto glutaric acid (MP), and contacting the MP with a third polypeptide, wherein the third polypeptide converts MP to monatin. Exemplary polypeptides that can be used for these conversions are shown in FIGS. 2 and 3.

Producing monatin in a biosynthetic pathway via one or more biological conversions provides certain advantages. For example, by using specific polypeptides and/or certain substrates in the biosynthetic pathway, one can produce a mixture enriched in a specific stereoisomer, and/or produce a monatin mixture that is substantially free of one or more stereoisomers.

A monatin composition may include impurities as a consequence of the method used for monatin synthesis. Monatin compositions produced by purely synthetic means (i.e., not involving at least one biological conversion) will contain different impurities than monatin compositions produced via a biosynthetic pathway. For example, based on raw materials used, monatin compositions produced by purely synthetic means may include petrochemical, toxic and/or other hazardous contaminants inappropriate for human consumption. Examples of such contaminants are hazardous chemicals, such as LDA, hydrogen-Pd/C, diazomethane, KCN, Grignard's reagent and Na/Hg. On the other hand, it is expected that a monatin composition produced via a biosynthetic pathway may contain edible or potable impurities, but will not contain petrochemical, toxic and/or other hazardous material.

It is expected that a method for producing monatin in a biosynthetic pathway via one or more biological conversions produces fewer toxic or hazardous contaminants and/or can provide a higher percentage of a particular stereoisomer, as compared to purely synthetic means. For example, it is expected that when making monatin using D-amino acid dehydrogenases, D-alanine (aspartate) aminotransferases, D-aromatic aminotransferases or D-methionine aminotranferases, one can obtain at least 60% R,R monatin and less than 40 % S,S, S,R and/or R,S monatin. It is also expected, for example, that when making monatin using the above-mentioned D-enzymes, as well as at least one substrate (e.g., the monatin precursor) having a carbon in the R-stereoconfiguration, one can obtain at least 95 % R,R monatin and less than 5% S,S, S,R and/or R,S monatin. In contrast, it is expected that when making monatin by purely synthetic means, one obtains about 25%-50% of the desired stereoisomer.

In one embodiment, a method for producing monatin via a biosynthetic pathway, for example, involving one or more biological conversion, produces no petrochemical, toxic or hazardous contaminants. "Petrochemical, toxic or hazardous contaminants" means any material that is petrochemical, toxic, hazardous and/or otherwise inappropriate for human consumption, including those contaminants provided as raw material or created when producing monatin via purely synthetic means. In another embodiment, a method for producing monatin via a biosynthetic pathway, for example, involving one or more biological conversion, produces only edible or potable material. "Edible or potable material" means one or more compounds or material that are fit for eating or drinking by humans, or otherwise safe for human consumption. Examples of edible or potable material include monatin, tryptophan, pyruvate, glutamate, other amino acids, as well as other compounds or material that are naturally present in the body.

In one embodiment, a chewing gum composition comprises a gum base portion and a soluble portion, wherein the soluble portion comprises monatin or salt thereof. In another embodiment, the soluble portion further comprises a citrus flavor. In another embodiment, the soluble portion further comprises a citrus flavor, wherein the monatin or salt thereof is present in an amount that enhances the flavor provided by the citrus flavor. In other embodiments, the soluble portion further comprises a cyclamate and/ or erythritol.

In other embodiments, a chewing gum composition comprising monatin or salt thereof contains less calories and carbohydrates than the same amount of the chewing gum composition containing sucrose in place of the monatin or salt thereof. In another embodiment, the chewing gum composition comprises monatin or salt thereof, and is non-cariogenic. In another embodiment, a chewing gum composition comprises monatin or salt thereof present in an amount that provides an extended sweetness and unmasked or enhanced flavor, as compared to other high intensity sweeteners, such as aspartame or sucralose, substituted for monatin in the chewing gum composition.

In another embodiment, a method for making a monatin-sweetened chewing gum composition having enhanced long-term sweetness provided by the monatin, comprises the steps of: (a) producing monatin or salt thereof through a biosynthetic pathway; (b) combining the monatin or salt thereof with other ingredients; and (c) forming the chewing gum composition. In another embodiment, a chewing gum composition comprises monatin or salt thereof, wherein the monatin or salt thereof is present in an amount that provides an enhanced long-term sweetness. In one embodiment, a chewing gum composition comprises monatin or salt thereof present in an amount that provides a prolonged sweetness as compared to aspartame or sucralose.

In another embodiment, a chewing gum composition comprises from about 0.001 to about 1.1 wt % monatin or salt thereof. For example, the chewing gum composition may comprise more than about 0.25 wt % to about 1.1 wt % monatin or salt thereof. In another embodiment, a chewing gum composition comprises from about 0.009 to about 0.1 wt % R,R monatin or salt thereof. For example, the chewing gum composition may comprise from about 0.015 to about 0.025 wt % R,R monatin or salt thereof. In another embodiment, a chewing gum composition comprises from about from about 0.1 to about 1.1 wt % S,S monatin or salt thereof. For example, the chewing gum composition may comprise from more than about 0.25 wt % to about 1.1 wt % S,S monatin or salt thereof, or comprise from about 0.15 to about 0.88 wt % of S,S monatin or salt thereof, or comprise from more than about 0.25 wt % to about 0.88 wt % S,S monatin or salt thereof. In another embodiment, a chewing gum composition comprises from about 0 to about 1.1 wt % of S,S monatin or salt thereof, and from about 0 to about 0.1 wt % R,R monatin or salt thereof.

In other embodiments, a chewing gum composition comprises monatin or salt thereof that is substantially free of S,S monatin or salt thereof, or is substantially free of R,R monatin or salt thereof. In other embodiments, the chewing gum composition comprises about 0.1 or less wt % R,R monatin or salt thereof, and is substantially free of S,S, S,R or R,S monatin or salt thereof. In other embodiments, the chewing gum composition comprises about 1.1 or less wt % S,S monatin or salt thereof, and is substantially free of R,R, S,R or R,S monatin or salt thereof.

In other embodiments, a chewing gum composition consists essentially of R,R monatin or salt thereof, or consists essentially of S,S monatin or salt thereof. In other embodiments, a chewing gum composition comprises a stereoisomerically-enriched R,R monatin or salt thereof, or a stereoisomerically-enriched S,S monatin or salt thereof. In one embodiment, a monatin or salt thereof comprises at least 95% R,R monatin or salt thereof, or at least 95% S,S monatin or salt thereof.

In one embodiment, a chewing gum composition comprises monatin or salt thereof produced in a biosynthetic pathway. In one embodiment, a chewing gum composition comprises a gum base portion and a soluble portion comprising monatin or salt thereof, wherein all components of the portions are natural. In another embodiment, a chewing gum composition comprising monatin or salt thereof is biodegradable. The biodegradable chewing composition can comprise, for example, lactic acid copolymers, proteins, jelutong, perillo, sorva, massaranduba balata, massaranduba chocolate, nispero, rosindinha, chicle, gutta hang kang, arabinogalactan, guar, xanthan, or a combination thereof.

In other embodiments, a chewing gum composition comprises a gum base portion and a soluble portion, wherein the soluble portion comprises a stereoisomerically-enriched monatin mixture, and wherein the monatin mixture is produced via a biosynthetic pathway. In another embodiment, the biosynthetic pathway is a multi-step pathway and at least one step of the multi-step pathway is a chemical conversion. In other embodiments, the monatin mixture is predominantly R,R monatin or salt thereof, or is predominantly S,S monatin or salt thereof. In other embodiments, a chewing gum composition comprises a gum base portion and a soluble portion, wherein the soluble portion comprises a monatin composition produced in a biosynthetic pathway, and wherein the monatin composition does not contain petrochemical, toxic or hazardous contaminants. In other embodiments, a chewing gum composition comprises monatin or salt thereof produced in a biosynthetic pathway and isolated from a recombinant cell, and wherein the recombinant cell does not contain petrochemical, toxic or hazardous contaminants.

In certain embodiments, a chewing gum composition comprises a gum base portion and a soluble portion, wherein gum base portion comprises 3 to 50 wt % of an elastomer; 0.5 to 25 wt % of a softener; 2 to 30 wt % of an emulsifier; 5 to 75 wt % of a resin; and 0 to 20 wt% of a filler. In some embodiments, the elastomer is selected from the group consisting of a natural rubber, a natural gum, and a synthetic elastomer. In some embodiments, the natural rubber is selected from the group consisting of smoked latex, liquid latex, and guayule. In some embodiments, the natural gum is selected from the group consisting of jelutong, perillo, sorva, massaranduba balata, massaranduba chocolate, nispero, rosindinha, chicle, and gutta hang kang. In some embodiments, the synthetic elastomer is selected from the group consisting of butadiene-styrene copolymers, isobutylene-isoprene copolymers, polybutadiene, polyisobutylene, and vinyl polymeric elastomers.

In some embodiments, the softener comprises one or more of tallow, hydrogenated tallow, hydrogenated vegetable oils, partially hydrogenated vegetable oils, cocoa butter, glycerol monostearate, glycerol triacetate, lecithin, monoglycerides, diglycerides, triglycerides, acetylated monoglycerides, and fatty acids. In some embodiments, the filler comprises one or more of lecithin, inulin, polydextrin, calcium carbonate, magnesium carbonate, magnesium silicate, ground limestone, aluminum silicate, talc, clay, alumina, titanium dioxide, and calcium phosphate. In some embodiments, the emulsifier is glycerol monostearate, lecithin, polyglycerol polyricinoleic acid, or magnesium stearate. In some embodiments, the resin is a rosin ester, a terpene resin, polyvinal acetate, polyvinyl alcohol, ethylene vinyl acetate, or vinyl acetate-vinyl laurate copolymer. In some embodiments, the rosin ester is a glycerol ester of partially hydrogenated rosin, a glycerol ester of polymerized rosin, a glycerol ester of partially dimerized rosin, a glycerol ester of rosin, a pentaerythritol ester of partially hydrogenated rosin, a methyl ester of rosin, or a methyl ester of partially hydrogenated rosin. In one embodiment, the emulsifier and the softener are different compounds. In another embodiment, the emulsifier and the filler are different compounds. In another embodiment, the softener and the filler are different compounds.

In one embodiment, the soluble portion further comprises a bulk sweetener. The bulk sweetener can be, for example, a corn sweetener, sucrose, dextrose, invert sugar, dextrin, fructose, levulose, corn syrup solids, galactose, trehalose, isomaltulose, or a combination thereof. In one embodiment, the soluble portion further comprises a high-intensity sweetener or lower glycemic carbohydrate. The high-intensity sweetener or lower glycemic carbohydrate can be, for example, sorbitol, mannitol, maltitol, hydrogenated starch hydrolysates, xylitol, alitame, thaumatin, sucralose, aspartame, acesulfame K, a dihydrochalcone, saccharin, neotame, a cyclamate, stevioside, mogroside, tagatose, erythritol, isomalt, lactitol, glycyrrhizin, phyllodulcin, monellin, mabinlin, brazzein, curculin, miraculin or pentadin.

In one embodiment, the soluble portion further comprises a flavoring agent. The flavoring agent may be, for example, an essential oil, a fruit flavoring agent, a synthetic flavor, or a combination thereof. The essential oil may be, for example, peppermint oil, spearmint oil, or oil of wintergreen. In some embodiments, the fruit-flavoring agent comprises extract, essence or oil of lemon, lime, orange, tangerine, grapefruit, citron, kumquat, banana, cherry, apple, pineapple, grape, strawberry, tutti-frutti, watermelon, or combinations thereof.

In one embodiment, a chewing gum composition comprises a gum base portion and a soluble portion, wherein the soluble portion comprises a blend of R,R and S,S, monatin or salt thereof. In other embodiments, the soluble portion comprises a blend of monatin or salt thereof and acesulfame K. In certain embodiments, a chewing gum composition comprises from about 0.1 to about 1.1 wt % S,S monatin or salt thereof and from about 0.1 to about 0.3 wt % acesulfame K, or comprises from more than about 0.25 wt % to about 1.1 wt % S,S monatin or salt thereof and from about 0.1 to about 0.3 wt % acesulfame K. In other embodiments, a chewing gum composition comprises from about 0.05 to about 0.7 wt % S,S monatin or salt thereof and from about 0.01 to about 0.2 wt % acesulfame K, or comprises from about 0.009 to about 0.1 wt % R,R monatin or salt thereof and from about 0.01 to about 0.3 wt % acesulfame K.

In one embodiment, a chewing gum composition comprises a gum base portion and a soluble portion, wherein the soluble portion comprises monatin or salt thereof that is encapsulated. In some embodiments, the gum base portion comprises 15 to 30 wt % of the composition. In other embodiments, the soluble portion further comprises a bulk sweetener, a high-intensity sweetener or lower glycemic carbohydrate, and a flavoring agent.

In one embodiment, a method for making a chewing gum composition comprising monatin or salt thereof comprises producing monatin or salt thereof from at least one substrate chosen from glucose, tryptophan, indole-3-lactic acid, indole-3-pyruvate and the monatin precursor. In certain embodiments, the method comprises combining the monatin or salt thereof with at least one other ingredient that is not monatin or salt thereof. In certain embodiments, the chewing gum composition made by the method comprises from about 0 to about 1.1 wt % of S,S monatin or salt thereof, and from about 0 to about 0.1 wt % R,R monatin or salt thereof. In certain embodiments, the chewing gum composition made by the method comprises from more than about 0.25 wt % to about 1.1 wt % monatin or salt thereof.

In another embodiment, a method for making a chewing gum composition comprising monatin or salt thereof comprises producing monatin or salt thereof through a biosynthetic pathway. In another embodiment, a method for making a chewing gum composition comprising monatin or salt thereof comprises producing monatin or salt thereof using at least one biological conversion.

In one embodiment, a method for making a chewing gum composition comprising a monatin composition comprises: (a) producing monatin or salt thereof in a biosynthetic pathway in a recombinant cell; (b) isolating the monatin composition from the recombinant cell, wherein the monatin composition consists of monatin or salt thereof and other edible or potable material. In another embodiment, a chewing gum composition comprises monatin or salt thereof and at least one other ingredient chosen from erythritol, trehalose, sorbitol, mannitol, maltitol, xylitol, alitame, thaumatin, sucralose, aspartame, acesulfame K, a dihydrochalcone, saccharin, neotame, a cyclamate, stevioside, mogroside, tagatose, isomalt, lactitol, glycyrrhizin, phyllodulcin, monellin, mabinlin, brazzein, curculin, miraculin, and pentadin.

In one embodiment, a method for making a chewing gum composition comprising a monatin composition comprises producing the monatin composition in a biosynthetic pathway, and wherein the monatin composition does not contain petrochemical, toxic or hazardous contaminants. In another embodiment, a method for making a chewing gum composition comprising a monatin composition comprises producing the monatin composition from a substrate in a multi-step pathway, wherein one or more steps in the multi-step pathway is a biological conversion, and wherein the monatin composition does not contain petrochemical, toxic or hazardous contaminants.

In one embodiment, a method for making a chewing gum composition comprising a monatin composition comprises producing the monatin composition in a biosynthetic pathway, and wherein the monatin composition consists of monatin or salt thereof and other edible or potable material. In another embodiment, a method for making a chewing gum composition comprising a monatin composition comprises producing the monatin composition from a substrate in a multi-step pathway, wherein one or more steps in the multi-step pathway is a biological conversion, and wherein the monatin composition consists of monatin or salt thereof and other edible or potable material.

It will be apparent to one of ordinary skill in the art from the teachings herein that specific embodiments of the present invention may be directed to one or a combination of the above-indicated aspects, as well as other aspects.

### BRIEF DESCRIPTION OF THE FIGURES

**FIG. 1** shows biosynthetic pathways used to produce monatin and/or indole-3-pyruvate. One pathway produces indole-3-pyruvate via tryptophan, while another produces indole-3-pyruvate via indole-3-lactic acid. Monatin is subsequently produced via a MP intermediate.
   Compounds shown in boxes are substrates and products produced in the biosynthetic pathways. Compositions adjacent to the arrows are cofactors, or reactants that can be used during the conversion of a substrate to a product. The cofactor or reactant used will depend upon the polypeptide used for the particular step of the biosynthetic pathway. The cofactor PLP (pyridoxal 5' - phosphate) can catalyze reactions independent of a polypeptide, and therefore, merely providing PLP can allow for the progression from substrate to product.
**FIG. 2** is a more detailed diagram of the biosynthetic pathway that utilizes the MP intermediate. The substrates for each step in the pathways are shown in boxes. The polypeptides allowing for the conversion between substrates are listed adjacent to the arrows between the substrates. Each polypeptide is described by its common name and an enzymatic class (EC) number.
**FIG. 3** shows a more detailed diagram of the biosynthetic pathway of the conversion of indole-3-lactic acid to indole-3-pyruvate. The substrates are shown in boxes, and the polypeptides allowing for the conversion between the substrates are listed adjacent to the arrow between the substrates. Each polypeptide is described by its common name and an EC number.
**FIG. 4** shows one possible reaction for making MP via chemical means.
**FIGS. 5A and 5B** are chromatograms showing the LC/MS identification of monatin produced enzymatically.
**FIG. 6** is an electrospray mass spectrum of enzymatically synthesized monatin.
**FIGS. 7A and 7B** are chromatograms of the LC/MS/MS daughter ion analyses of monatin produced in an enzymatic mixture.
**FIG. 8** is a chromatogram showing the high-resolution mass measurement of monatin produced enzymatically.
**FIGS. 9A-9C** are chromatograms showing the chiral separation of (A) R-tryptophan, (B) S-tryptophan, and (C) monatin produced enzymatically.
**FIG.10** is a bar graph showing the relative amount of monatin produced in bacterial cells following IPTG induction. The (-) indicates a lack of substrate addition (no tryptophan or pyruvate was added).
**FIGS. 11-12** are schematic diagrams showing pathways used to increase the yield of monatin produced from tryptophan or indole-3-pyruvate.
**FIG. 13** is a schematic diagram showing a pathway that can be used to increase the yield of monatin produced from tryptophan or indole-3-pyruvate.
**FIG. 14** presents a dose response curve obtained with an R,R, stereoisomer of monatin.
**FIG. 15** presents a dose response curve obtained with an R,R/S,S stereoisomer mixture of monatin.
**FIG. 16** compares the dose response curve obtained with an R,R/S,S stereoisomer mixture of monatin to a dose response curve obtained with saccharin.
**FIG.17** shows reversed phase chromatography of standards of synthetically produced monatin.
**FIG. 18** shows chiral chromatography of monatin standards.

### DETAILED DESCRIPTION

### Overview of Biosynthetic pathways for Monatin Production

The following explanations of terms and methods are provided to better describe the present disclosure and to guide those of ordinary skill in the art in the practice of the present disclosure. As used herein, "including" means "comprising." In addition, the singular forms "a" or "an" or "the" include plural references unless the context clearly dictates otherwise. As used herein, "chewing gum" refers to all types of chewing gum, including functional gums and bubble gum. "Functional gum" refers to a chewing gum that comprises at least one functional or medicinal component. For example, functional gums can deliver medication, such as nicotine, aspirin or travel sickness medication (e.g., dimenhydrinate), or nutrients (e.g., vitamins and/or minerals), or cosmetic components (e.g., tooth whitening and/or breath freshening ingredients).

As shown in FIGS. 1-3 and 11-13, many biosynthetic pathways can be used to produce monatin or its intermediates such as indole-3-pyruvate or MP. For the conversion of each substrate (e.g., glucose, tryptophan, indole-3-lactic acid, indole-3-pyruvate, and MP) to each product (e.g., tryptophan, indole-3-pyruvate, MP and monatin), several different polypeptides can be used. Moreover, these reactions can be carried out *in vivo, in vitro,* or through a combination of *in vivo* reactions and *in vitro* reactions, such as *in vitro* reactions that include non-enzymatic chemical reactions. Therefore, FIGS. 1-3 and 11-13 are exemplary, and show multiple different pathways that can be used to obtain desired products.

### Glucose to Tryptophan

Many organisms can synthesize tryptophan from glucose. The construct(s) containing the gene(s) necessary to produce monatin, MP, and/or indole-3-pyruvate from glucose and/or tryptophan can be cloned into such organisms. It is shown herein that tryptophan can be converted into monatin.

In other examples, an organism can be engineered using known polypeptides to produce tryptophan, or overproduce tryptophan. For example, U.S. Patent No. 4,371,614 describes an *E*. *coli* strain transformed with a plasmid containing a wild type tryptophan operon.

Maximum titers of tryptophan disclosed in U.S. Patent No. 4,371,614 are about 230 ppm. Similarly, WO 8701130 describes an *E*. *coli* strain that has been genetically engineered to produce tryptophan and discusses increasing fermentative production of L-tryptophan. Those skilled in the art will recognize that organisms capable of producing tryptophan from glucose are also capable of utilizing other carbon and energy sources that can be converted to glucose or fructose-6-phosphate, with similar results. Exemplary carbon and energy sources include, but are not limited to, sucrose, fructose, starch, cellulose, or glycerol.

### Tryptophan to Indole-3-pyruvate

Several polypeptides can be used to convert tryptophan to indole-3-pyruvate. Exemplary polypeptides include, without limitation, members of the enzyme classes (EC) 2.6.1.27, 1.4.1.19, 1.4.99.1, 2.6.1.28, 1.4.3.2, 1.4.3.3, 2.6.1.5, 2.6.1.-, 2.6.1.1, and 2.6.1.21. These classes include, without limitation, polypeptides termed tryptophan aminotransferase (also termed L-phenylalanine-2-oxoglutarate aminotransferase, tryptophan transaminase, 5-hydroxytryptophan-ketoglutaric transaminase, hydroxytryptophan aminotransferase, L-tryptophan aminotransferase, L-tryptophan transaminase, and L-tryptophan:2-oxoglutarate aminotransferase) which converts L-tryptophan and 2-oxoglutarate to indole-3-pyruvate and L-glutamate; D-tryptophan aminotransferase which converts D-tryptophan and a 2-oxo acid to indole-3-pyruvate and an amino acid; tryptophan dehydrogenase (also termed NAD(P)-L-tryptophan dehydrogenase, L-tryptophan dehydrogenase, L-Trp-dehydrogenase, TDH and L-tryptophan:NAD(P) oxidoreductase (deaminating)) which converts L-tryptophan and NAD(P) to indole-3-pyruvate and NH₃ and NAD(P)H; D-amino acid dehydrogenase, which converts D-amino acids and FAD to indole-3-pyruvate and NH₃ and FADH₂; tryptophan-phenylpyruvate transaminase (also termed L-tryptophan-α-ketoisocaproate aminotransferase and L-tryptophan:phenylpyruvate aminotransferase) which converts L-tryptophan and phenylpyruvate to indole-3-pyruvate and L-phenylalanine; L-amino acid oxidase (also termed ophio-amino-acid oxidase and L-amino-acid:oxygen oxidoreductase (deaminating)) which converts an L-amino acid and H₂O and O₂ to a 2-oxo acid and NH₃ and H₂O₂; D-amino acid oxidase (also termed ophio-amino-acid oxidase and D-amino-acid:oxygen oxidoreductase (deaminating)) which converts a D-amino acid and H₂O and O₂ to a 2-oxo acid and NH₃ and H₂O₂; and tryptophan oxidase which converts L-tryptophan and H₂O and O₂ to indole-3-pyruvate and NH₃ and H₂O₂. These classes also contain tyrosine (aromatic) aminotransferase, aspartate aminotransferase, D-amino acid (or D-alanine) aminotransferase, and broad (multiple substrate) aminotransferase which have multiple aminotransferase activities, some of which can convert tryptophan and a 2-oxo acid to indole-3-pyruvate and an amino acid.

Eleven members of the aminotransferase class that have such activity are described below in Example 1, including a novel aminotransferase shown in SEQ ID NOS: 11 and 12. Therefore, this disclosure provides isolated nucleic acid and amino acid sequences having at least 80%, at least 85%, at least 90%, at least 95%, at least 98%, or even at least 99% sequence identity to the sequences set forth in SEQ ID NOS: 11 and 12, respectively. Also encompassed by this disclosure are fragments and fusions of the sequences set forth in SEQ ID NOS: 11 and 12 that encode a polypeptide having aminotransferase activity or retaining aminotransferase activity. Exemplary fragments include, but are not limited to, at least 10, 12, 15, 20, 25, 50, 100, 200, 500, or 1000 contiguous nucleotides of SEQ ID NO: 11 or at least 6, 10, 15, 20, 25, 50, 75, 100, 200, 300 or 350 contiguous amino acids of SEQ ID NO: 12. The disclosed sequences (and variants, fragments, and fusions thereof) can be part of a vector. The vector can be used to transform host cells, thereby producing recombinant cells which can produce indole-3-pyruvate from tryptophan, and in some examples can further produce MP and/or monatin.

L-amino acid oxidases (1.4.3.2) are known, and sequences can be isolated from several different sources, such as *Vipera lebetine* (sp P81375), *Ophiophagus hannah* (sp P81383), *Agkistrodon rhodostoma* (spP81382), *Crotalus atrox* (sp P56742), *Burkholderia cepacia, Arabidopsis thaliana, Caulobacter cresentus, Chlamydomonas reinhardtii, Mus musculus, Pseudomonas syringae,* and *Rhodococcus* str. In addition, tryptophan oxidases are described in the literature and can be isolated, for example, from *Coprinus* sp. SF-1, Chinese cabbage with club root disease, *Arabidopsis thaliana,* and mammalian liver. One member of the L-amino acid oxidase class that can convert tryptophan to indole-3-pyruvate is discussed below in Example 3, as well as alternative sources for molecular cloning. Many D-amino acid oxidase genes are available in databases for molecular cloning.

Tryptophan dehydrogenases are known, and can be isolated, for example, from spinach, *Pisum sativum, Prosopis juliflora,* pea, mesquite, wheat, maize, tomato, tobacco, *Chromobacterium violaceum,* and *Lactobacilli.* Many D-amino acid dehydrogenase gene sequences are known.

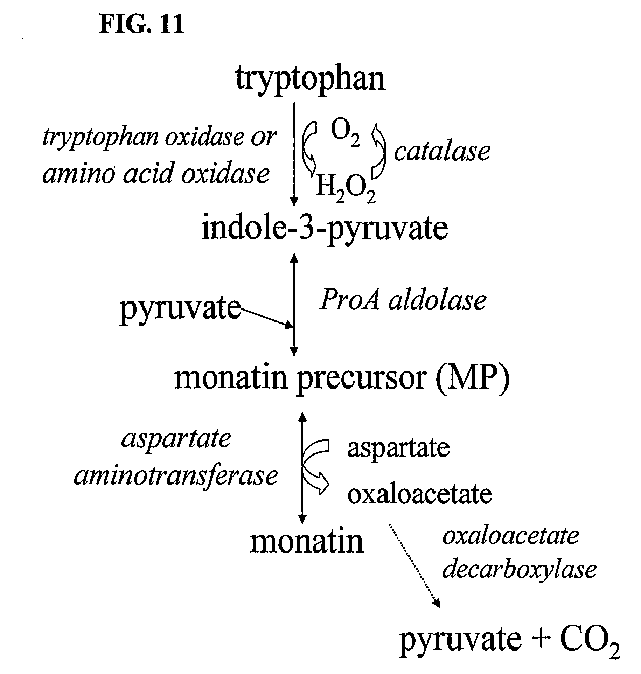

As shown in FIGS. 11-13, if an amino acid oxidase, such as tryptophan oxidase, is used to convert tryptophan to indole-3-pyruvate, catalase can be added to reduce or even eliminate the presence of hydrogen peroxide.

### Indole-3-lactate to Indole-3-pyruvate

The reaction that converts indole-3-lactate to indole-3-pyruvate can be catalyzed by a variety of polypeptides, such as members of the 1.1.1.110, 1.1.1.27, 1.1.1.28, 1.1.2.3, 1.1.1.222, 1.1.1.237, 1.1.3.-, or 1.1.1.111 classes of polypeptides. The 1.1.1.110 class of polypeptides includes indolelactate dehydrogenases (also termed indolelactic acid: NAD⁺ oxidoreductase). The 1.1.1.27, 1.1.1.28, and 1.1.2.3 classes include lactate dehydrogenases (also termed lactic acid dehydrogenases, lactate: NAD⁺ oxidoreductase). The 1.1.1.222 class contains (R)-4-hydroxyphenyllactate dehydrogenase (also termed D-aromatic lactate dehydrogenase, R-aromatic lactate dehydrogenase, and R-3-(4-hydroxyphenyl)lactate:NAD(P)⁺ 2-oxidoreductase) and the 1.1.1.237 class contains 3-(4-hydroxyphenylpyruvate) reductase (also termed hydroxyphenylpyruvate reductase and 4-hydroxyphenyllactate: NAD⁺ oxidoreductase). The 1.1.3.- class contains lactate oxidases, and the 1.1.1.111 class contains (3-imidazol-5-yl) lactate dehydrogenases (also termed (S)-3-(imidazol-5-yl)lactate:NAD(P)⁺ oxidoreductase). It is likely that several of the polypeptides in these classes allow for the production of indole-3-pyruvate from indole-3-lactic acid. Examples of this conversion are provided in Example 2.

Chemical reactions can also be used to convert indole-3-lactic acid to indole-3-pyruvate. Such chemical reactions include an oxidation step that can be accomplished using several methods, for example: air oxidation using a B2 catalyst (China Chemical Reporter, vol. 13, no. 28, pg. 18(1), 2002), dilute permanganate and perchlorate, or hydrogen peroxide in the presence of metal catalysts.

### Indole-3-pyruvate to 2-hydroxy 2-(indol-3ylmethyl)-4-keto glutaric acid (MP)

Several known polypeptides can be used to convert indole-3-pyruvate to MP. Exemplary polypeptide classes include 4.1.3.-, 4.1.3.16, 4.1.3.17, and 4.1.2.-. These classes include carbon-carbon synthases/lyases, such as aldolases that catalyze the condensation of two carboxylic acid substrates. Polypeptide class EC 4.1.3.- are synthases/lyases that form carbon-carbon bonds utilizing oxo-acid substrates (such as indole-3-pyruvate) as the electrophile, while EC 4.1.2.- are synthases/lyases that form carbon-carbon bonds utilizing aldehyde substrates (such as benzaldehyde) as the electrophile.

For example, the polypeptide described in EP 1045-029 (EC 4.1.3.16, 4-hydroxy-2-oxoglutarate glyoxylate-lyase also termed 4-hydroxy-2-oxoglutarate aldolase, 2-oxo-4-hydroxyglutarate aldolase or KHG aldolase) converts glyoxylic acid and pyruvate to 4-hydroxy-2-ketoglutaric acid, and the polypeptide 4-hydroxy-4-methyl-2-oxoglutarate aldolase (EC 4.1.3.17, also termed 4-hydroxy-4-methyl-2-oxoglutarate pyruvate-lyase or ProA aldolase), condenses two keto-acids such as two pyruvates to 4-hydroxy-4-methyl-2-oxoglutarate. Reactions utilizing these lyases are described herein.

FIGS. 1-2 and 11-13 show schematic diagrams of these reactions in which a 3-carbon (C3) molecule is combined with indole-3-pyruvate. Many members of EC 4.1.2.- and 4.1.3.-, particularly PLP-utilizing polypeptides, can utilize C3 molecules that are amino acids such as serine, cysteine, and alanine, or derivatives thereof. Aldol condensations catalyzed by representatives of EC 4.1.2.- and 4.1.3.- require the three carbon molecule of this pathway to be pyruvate or a derivative of pyruvate. However, other compounds can serve as a C3 carbon source and be converted to pyruvate. Alanine can be transaminated by many PLP-utilizing transaminases, including many of those mentioned above, to yield pyruvate. Pyruvate and ammonia can be obtained by beta-elimination reactions (such as those catalyzed by tryptophanase or β-tyrosinase) of L-serine, L-cysteine, and derivatives of serine and cysteine with sufficient leaving groups, such as O-methyl-L-serine, O-benzyl-L-serine, S-methylcysteine, S-benzylcysteine, S-alkyl-L-cysteine, O-acyl-L-serine, and 3-chloro-L-alanine. Aspartate can serve as a source of pyruvate in PLP-mediated beta-lyase reactions such as those catalyzed by tryptophanase (EC 4.1.99.1) and/or β-tyrosinase (EC 4.1.99.2, also termed tyrosine-phenol lyase). The rate of beta-lyase reactions can be increased by performing site-directed mutagenesis on the (4.1.99.1-2) polypeptides as described by *Mouratou et al.* (*J. Biol. Chem* 274:1320-5, 1999) and in Example 8. These modifications allow the polypeptides to accept dicarboxylic amino acid substrates. Lactate can also serve as a source of pyruvate, and is oxidized to pyruvate by the addition of lactate dehydrogenase and an oxidized cofactor or lactate oxidase and oxygen. Examples of these reactions are described below. For example, as shown in FIG. 2 and FIGS. 11-13, ProA aldolase can be contacted with indole-3-pyruvate when pyruvate is used as the C3 molecule.

The MP can also be generated using chemical reactions, such as the aldol condensations provided in Example 5.

### MP to Monatin

Conversion of MP to monatin can be catalyzed by one or more of: tryptophan aminotransferases (2.6.1.27), tryptophan dehydrogenases (1.4.1.19), D-amino acid dehydrogenases (1.4.99.1), glutamate dehydrogenases (1.4.1.2-4), phenylalanine dehydrogenase (EC 1.4.1.20), tryptophan-phenylpyruvate transaminases (2.6.1.28), or more generally members of the aminotransferase family (2.6.1.-) such as aspartate aminotransferase (EC 2.6.1.1), tyrosine (aromatic) aminotransferase (2.6.1.5), D-tryptophan aminotransferase, or D-alanine (2.6.1.21) aminotransferase (FIG. 2). Eleven members of the aminotransferase class are described below (Example 1), including a novel member of the class shown in SEQ ID NOS: 11 and 12, and reactions demonstrating the activity of aminotransferase and dehydrogenase enzymes are provided in Example 7.

This reaction can also be performed using chemical reactions. Amination of the keto acid (MP) is performed by reductive amination using ammonia and sodium cyanoborohydride.

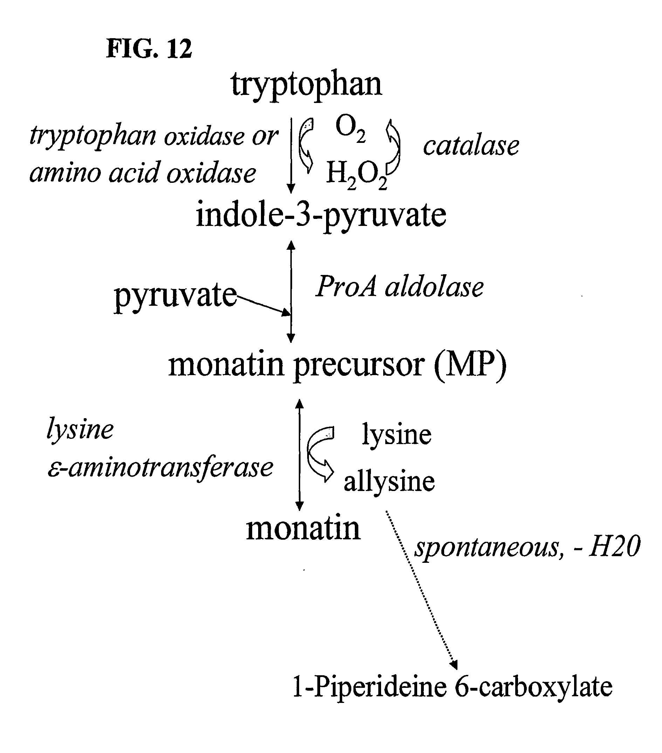

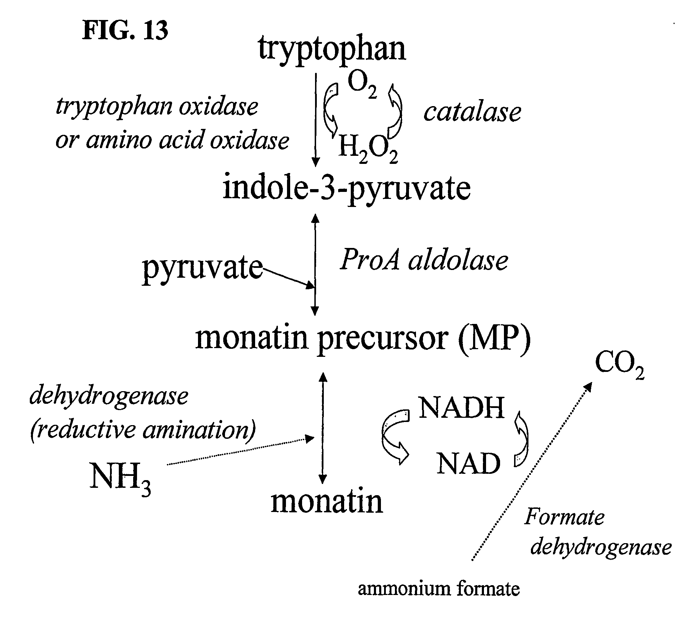

FIGS. 11-13 show additional polypeptides that can be used to convert MP to monatin, as well as providing increased yields of monatin from indole-3-pyruvate or tryptophan. For example, if aspartate is used as the amino donor, aspartate aminotransferase can be used to convert the aspartate to oxaloacetate (FIG. 11). The oxaloacetate is converted to pyruvate and carbon dioxide by a decarboxylase, such as oxaloacetate decarboxylase (FIG. 11). In addition, if lysine is used as the amino donor, lysine epsilon aminotransferase can be used to convert the lysine to allysine (FIG. 12). The allysine is spontaneously converted to 1-piperideine 6-carboxylate (FIG. 12). If a polypeptide capable of catalyzing reductive amination reactions (e.g., glutamate dehydrogenase) is used to convert MP to monatin, a polypeptide that can recycle NAD(P)H and/or produce a volatile product (FIG. 13) can be used, such as formate dehydrogenase.

### Additional Considerations in the Design of the Biosynthetic Pathways

Depending on which polypeptides are used to generate indole-3-pyruvate, MP, and/or monatin, cofactors, substrates, and/or additional polypeptides can be provided to the production cell to enhance product formation. In addition, genetic modification can be designed to enhance production of products such as indole-3-pyruvate, MP, and/or monatin. Similarly, a host cell used for monatin production can be optimized.

### Removal of Hydrogen Peroxide

Hydrogen peroxide (H₂O₂) is a product that, if generated, can be damaging to production cells, polypeptides or products (e.g., intermediates) produced. The L-amino acid oxidase described above generates H₂O₂ as a product. Therefore, if L-amino acid oxidase is used, the resulting H₂O₂ can be removed or its levels decreased to reduce potential injury to the cell or product.

Catalases can be used to reduce the level of H₂O₂ in the cell (FIGS. 11-13). The production cell can express a gene or cDNA sequence that encodes a catalase (EC 1.11.1.6), which catalyzes the decomposition of hydrogen peroxide into water and oxygen gas. For example, a catalase can be expressed from a vector transfected into the production cell. Examples of catalases that can be used include, but are not limited to: tr/Q9EV50 *(Staphylococcus xylosus),* tr|Q9KBE8 *(Bacillus halodurans),* tr|Q9URJ7 *(Candida albicans),* tr|P77948 *(Streptomyces coelicolor),* tr|Q9RBJ5 *(Xanthomonas campestris)* (SwissProt Accession Nos.). Biocatalytic reactors utilizing L-amino acid oxidase, D-amino acid oxidase, or tryptophan oxidase can also contain a catalase polypeptide.

### Modulation of pyridoxal-5' phosphate (PLP) Availability

As shown in FIG. 1, PLP can be utilized in one or more of the biosynthetic steps described herein. The concentration of PLP can be supplemented so that PLP does not become a limitation on the overall efficiency of the reaction.

The biosynthetic pathway for vitamin B₆ (the precursor of PLP) has been thoroughly studied in *E. coli,* and some of the proteins have been crystallized (Laber *et al., FEBS Letters,* 449:45-8, 1999). Two of the genes *(epd* or *gapB* and *serC)* are required in other metabolic pathways, while three genes *(pdxA, pdxB,* and *pdxJ)* are unique to pyridoxal phosphate biosynthesis. One of the starting materials in the *E. coli* pathway is 1-deoxy-D-xylulose-5-phosphate (DXP). Synthesis of this precursor from common 2 and 3 carbon central metabolites is catalyzed by the polypeptide 1-deoxy-D-xylulose-5-phosphate synthase (DXS). The other precursor is a threonine derivative formed from the 4-carbon sugar, D-erythrose 4-phosphate. The genes required for the conversion to phospho-4-hydroxyl-L threonine (HTP) are *epd, pdxB,* and *serC.* The last reaction for the formation of PLP is a complex intramolecular condensation and ring-closure reaction between DXP and HTP, catalyzed by the gene products of *pdxA* and *pdxJ.*

If PLP becomes a limiting nutrient during the fermentation to produce monatin, increased expression of one or more of the pathway genes in a production host cell can be used to increase the yield of monatin. A host organism can contain multiple copies of its native pathway genes or copies of non-native pathway genes can be incorporated into the organism's genome. Additionally, multiple copies of the salvage pathway genes can be cloned into the host organism.

One salvage pathway that is conserved in all organisms recycles the various derivatives of vitamin B₆ to the active PLP form. The polypeptides involved in this pathway are *pdxK* kinase, *pdxH* oxidase, and *pdxY* kinase. Over-expression of one or more of these genes can increase PLP availability.

Vitamin B₆ levels can be elevated by elimination or repression of the metabolic regulation of the native biosynthetic pathway genes in the host organism. PLP represses polypeptides involved in the biosynthesis of the precursor threonine derivative in the bacterium *Flavobacterium sp.* strain 238-7. This bacterial strain, freed of metabolic control, overproduces pyridoxal derivatives and can excrete up to 20 mg/L of PLP. Genetic manipulation of the host organism producing monatin in a similar fashion will allow the increased production PLP without over-expression of the biosynthetic pathway genes.

### Ammonium Utilization

Tryptophanase reactions can be driven toward the synthetic direction (production of tryptophan from indole) by making ammonia more available or by removal of water. Reductive amination reactions, such as those catalyzed by glutamate dehydrogenase, can also be driven forward by an excess of ammonium.

Ammonia can be made available as an ammonium carbonate or ammonium phosphate salt in a carbonate or phosphate buffered system. Ammonia can also be provided as ammonium pyruvate or ammonium formate. Alternatively, ammonia can be supplied if the reaction is coupled with a reaction that generates ammonia, such as glutamate dehydrogenase or tryptophan dehydrogenase. Ammonia can be generated by addition of the natural substrates of EC 4.1.99.- (tyrosine or tryptophan), which will be hydrolyzed to phenol or indole, pyruvate and NH₃. This also allows for an increased yield of synthetic product over the normal equilibrium amount by allowing the enzyme to hydrolyze its preferred substrate.

### Removal of products and byproducts

The conversion of tryptophan to indole-3-pyruvate via a tryptophan aminotransferase can adversely affect the production rate of indole-3-pyruvate because the reaction produces glutamate and requires the co-substrate 2-oxoglutarate (α-ketoglutarate). Glutamate can cause inhibition of the aminotransferase, and the reaction can consume large amounts of the co-substrate. Moreover, high glutamate concentrations can be detrimental to downstream separation processes.

The polypeptide glutamate dehydrogenase (GLDH) converts glutamate to 2-oxoglutarate, thereby recycling the co-substrate in the reaction catalyzed by tryptophan aminotransferase. GLDH also generates reducing equivalents (NADH or NADPH) that can be used to generate energy for the cell (ATP) under aerobic conditions. The utilization of glutamate by GLDH also reduces byproduct formation. Additionally, the reaction generates ammonia, which can serve as a nitrogen source for the cell or as a substrate in a reductive amination for the final step shown in FIG. 1. Therefore, a production cell that over-expresses a GLDH polypeptide can be used to increase the yield and reduce the cost of media and/or separation processes.

In the tryptophan to monatin pathway, the amino donor of step three (e.g., glutamate or aspartate) can be converted back to the amino acceptor required for step 1 (e.g., 2-oxo-glutarate or oxaloacetate), if an aminotransferase from the appropriate enzyme classes is used. Utilization of two separate transaminases for this pathway, in which the substrate of one transaminase does not competitively inhibit the activity of the other transaminase, can increase the efficiency of this pathway.

Many of the reactions in the described pathways are reversible and can, therefore, reach an equilibrium between substrates and products. The yield of the pathway can be increased by continuous removal of the products from the polypeptides. For example, secretion of monatin into the fermentation broth using a permease or other transport protein, or selective crystallization of monatin from a biocatalytic reactor stream with concomitant recycle of substrates will increase the reaction yield.

Removal of byproducts via additional enzymatic reactions or via substitution of amino donor groups is another way to increase the reaction yield. Several examples are discussed in Example 13 and shown in FIGS. 11-13. For example, a byproduct can be produced that is unavailable to react in the reverse direction, either by phase change (evaporation) or by spontaneous conversion to an unreactive end product, such as carbon dioxide.

### Modulation of the Substrate Pools

The indole pool can be modulated by increasing production of tryptophan precursors and/or altering catabolic pathways involving indole-3-pyruvate and/or tryptophan.

For example, the production of indole-3-acetic acid from indole-3-pyruvate can be reduced or eliminated by functionally deleting the gene coding for EC 4.1.1.74 in the host cell. Production of indole from tryptophan can be reduced or eliminated by functionally deleting the gene coding for EC 4.1.99.1 in the host cell. Alternatively, an excess of indole can be utilized as a substrate in an *in vitro* or *in vivo* process in combination with increased amounts of the gene coding for EC 4.1.99.1 (Kawasaki *et al., J. Ferm. and Bioeng.,* 82:604-6, 1996). In addition, genetic modifications can be made to increase the level of intermediates such as D-erythrose-4-phosphate and chorismate.

Tryptophan production is regulated in most organisms. One mechanism is via feedback inhibition of certain enzymes in the pathway; as tryptophan levels increase, the production rate of tryptophan decreases. Thus, when using a host cell engineered to produce monatin via a tryptophan intermediate, an organism can be used that is not sensitive to tryptophan concentrations. For example, a strain of *Catharanthus roseus* that is resistant to growth inhibition by various tryptophan analogs was selected by repeated exposure to high concentrations of 5-methyltryptophan (Schallenberg and Berlin, Z Naturforsch 34:541-5, 1979). The resulting tryptophan synthase activity of the strain was less effected by product inhibition, likely due to mutations in the gene. Similarly, a host cell used for monatin production can be optimized.

Tryptophan production can be optimized through the use of directed evolution to evolve polypeptides that are less sensitive to product inhibition. For example, screening can be performed on plates containing no tryptophan in the medium, but with high levels of non-metabolizable tryptophan analogs. U.S. Pat. Nos. 5,756,345; 4,742,007; and 4,371,614 describe methods used to increase tryptophan productivity in a fermentation organism. The last step of tryptophan biosynthesis is the addition of serine to indole; therefore the availability of serine can be increased to increase tryptophan production.

The amount of monatin produced by a fermentation organism can be increased by increasing the amount of pyruvate produced by the host organism. Certain yeasts, such as *Trichosporon cutaneum* (Wang et al., Lett. Appl. Microbiol. 35:338-42, 2002) and *Torulopsis glabrata* (Li et al., Appl Microbiol. Biotechnol. 57:451-9, 2001) overproduce pyruvate and can be used to practice the methods disclosed herein. In addition, genetic modifications can be made to organisms to promote pyruvic acid production, such as those in *E. coli* strain W1485*lip2* (Kawasaki et al., J. Ferm. and Bioeng. 82:604-6, 1996).

### Controlling Chirality

The taste profile of monatin can be altered by controlling its stereochemistry (chirality). For example, different monatin stereoisomers may be desired in different blends of concentrations for different food systems. Chirality can be controlled via a combination of pH and polypeptides.

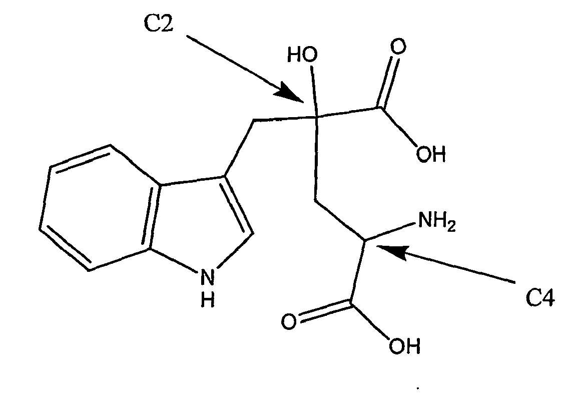

Racemization at the C-4 position of monatin (see numbered molecule above) can occur by deprotonation and reprotonation of the alpha carbon, which can occur by a shift in pH or by reaction with the cofactor PLP bound to an enzyme such as a racemase or free in solution. In a microorganism, the pH is unlikely to shift enough to cause the racemization, but PLP is abundant. Methods to control the chirality with polypeptides depend upon the biosynthetic route utilized for monatin production.

When monatin is formed using the pathway shown in FIG. 2, the following can be considered. In a biocatalytic reaction, the chirality of carbon-2 can be determined by an enzyme that converts indole-3-pyruvate to MP. Multiple enzymes (e.g., from EC 4.1.2.-, 4.1.3.-) can convert indole-3-pyruvate to MP, thus, the enzyme that forms the desired stereoisomer can be chosen. Alternatively, the enantiospecificity of the enzyme that converts indole-3-pyruvate to MP can be modified through the use of directed evolution, or catalytic antibodies can be engineered to catalyze the desired reaction. Once MP is produced (either enzymatically or by chemical condensation), the amino group can be added stereospecifically using a transaminase, such as those described herein. Either the R or S configuration of carbon-4 can be generated depending on whether a D- or L- aromatic acid aminotransferase is used. Most aminotransferases are specific for the L-stereoisomer; however, D-tryptophan aminotransferases exist in certain plants (Kohiba and Mito, Proceedings of the 8th International Symposium on Vitamin B₆ and Carbonyl Catalysis, Osaka, Japan 1990). Moreover, D-alanine aminotransferases (2.6.1.21), D-methionine-pyruvate aminotransferases (2.6.1.41), and both (R)-3-amino-2-methylpropanoate aminotransferase (2.6.1.61) and (S)-3-amino-2-methylpropanoate aminotransferase (2.6.1.22) have been identified. Certain aminotransferases may only accept the substrate for this reaction with a particular configuration at the C2 carbon. Therefore, even if the conversion to MP is not stereospecific, the stereochemistry of the final product can be controlled through the appropriate selection of a transaminase. Since the reactions are reversible, the unreacted MP (undesired stereoisomer) can be recycled back to its constituents, and a racemic mixture of MP can be reformed.

### Activating Substrates

Phosphorylated substrates, such as phosphoenolpyruvate (PEP), can be used in the reactions disclosed herein. Phosphorylated substrates can be more energetically favorable and, therefore, can be used to increase the reaction rates and/or yields. In aldol condensations, the addition of a phosphate group stabilizes the enol tautomer of the nucleophilic substrate, making it more reactive. In other reactions, a phosphorylated substrate can provide a better leaving group. Similarly, substrates can be activated by conversion to CoA derivatives or pyrophosphate derivatives.

### Use of monatin in a chewing gum composition

The S,S stereoisomer of monatin is approximately 50-200 times sweeter than sucrose by weight. The R,R stereoisomer of monatin is approximately 2000-2400 times sweeter than sucrose by weight. The sweetness of the monatin is calculated using experienced sensory evaluators in a sweetness comparison procedure, where a test sweetener solution is matched for sweetness intensity against one of a series of reference solutions.

Specifically, one may assess sweetness of a sweetener relative to sucrose by using a panel of trained sensory evaluators experienced in the sweetness estimation procedure. All samples (in same buffers) are served in duplicate at a temperature of 22°C ± 1°C. Sample solutions may be prepared, for example, using a buffer comprising 0.16% (v/w) citric acid and 0.02% (v/w) sodium citrate at ~pH 3.0. Test solutions, coded with 3 digit random number codes, are presented individually to panelists, in random order. Sucrose reference standards, ranging from 2.0 - 10.0% (w/v) sucrose, increasing in steps of 0.5% (w/v) sucrose are also provided. Panelists are asked to estimate sweetness by comparing the sweetness of the test solution to the sucrose standards. This is carried out by taking 3 sips of the test solution, followed by a sip of water, followed by 3 sips of sucrose standard followed by a sip of water, etc. Panelists estimate the sweetness to one decimal place, e.g., 6.8, 8.5. A five minute rest period is imposed between evaluating the test solutions. Panelists are also asked to rinse well and eat a cracker to reduce any potential carry over effects.

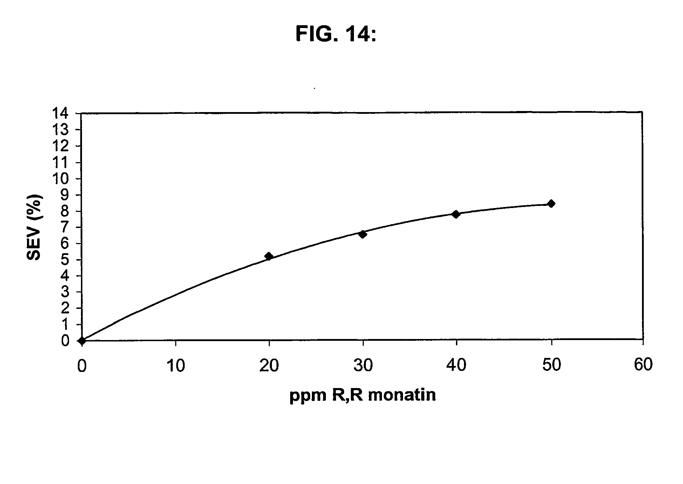

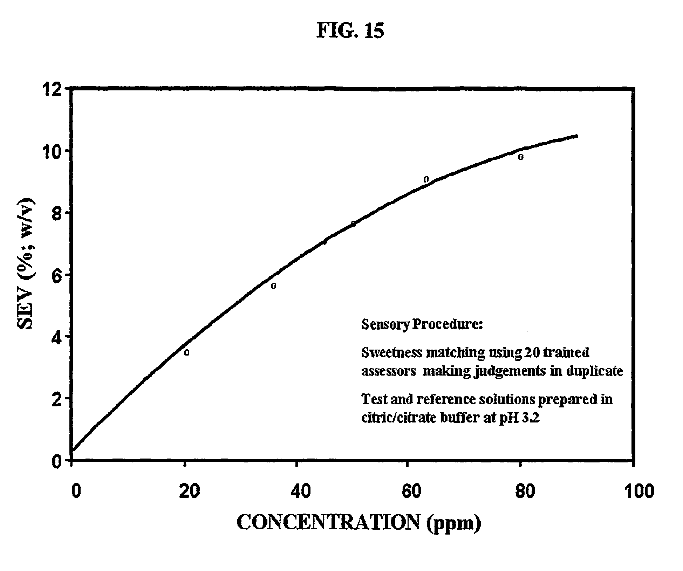

Sucrose equivalent value (SEV) (e.g., % sucrose), determined by the panel of trained sensory evaluators, is plotted as a function of monatin concentration to obtain a dose response curve. A polynomial curve fit is applied to the dose response curve and used to calculate the sweetness intensity or potency at a particular point, e.g., 8% SEV, by dividing the sucrose equivalent value (SEV) by the monatin concentration (e.g., % monatin). *See e.g.,* FIG. 15 (R,R/S,S monatin dose response curve); FIG. 14 (R,R monatin dose response curve).

Monatin is soluble in aqueous solutions in concentrations that are appropriate for consumption. Various blends of monatin stereoisomers may be qualitatively better in certain matrices, or in blending with other sweeteners. Blends of monatin with other sweeteners may be used to maximize the sweetness intensity and/or profile, and minimize cost. Monatin may be used in combination with other sweeteners and/or other ingredients to generate a temporal profile similar to sucrose, or for other benefits.

For example, monatin may be blended with other nutritive and nonnutritive sweeteners to achieve particular flavor profiles or calorie targets. Thus, sweetener compositions can include combinations of monatin with one or more of the following sweetener types: (1) sugar alcohols (such as erythritol, sorbitol, maltitol, mannitol, lactitol, xylitol, isomalt, low glycemic syrups, etc.); (2) other high intensity sweeteners (such as aspartame, sucralose, saccharin, acesulfame-K, stevioside, cyclamate, neotame, thaumatin, alitame, dihydrochalcone, monellin, glycyrrihizin, mogroside, phyllodulcin, mabinlin, brazzein, circulin, pentadin, etc.) and (3) nutritive sweeteners (such as sucrose, tagatose, invert sugar, fructose, corn syrup, high fructose corn syrup (HFCS), glucose/dextrose, trehalose, isomaltulose, etc.). Monatin may be used in such blends as a taste modifier to suppress aftertaste, enhance other flavors such as lemon, or improve the temporal flavor profile. Data also indicate that monatin is quantitatively synergistic with cyclamates (which are used in Europe), but no significant quantitative synergy was noted with aspartame, saccharin, acesulfame-K, sucralose, or carbohydrate sweeteners.

Because monatin is not a carbohydrate, monatin can be used to lower the carbohydrate content in chewing gum compositions. In one embodiment, an amount (e.g., a stick) of a monatin chewing gum composition contains less calories and carbohydrates than the same amount of a chewing gum composition containing sugar (e.g., sucrose or high fructose corn syrup). In other embodiments, chewing gum compositions comprising monatin (e.g., comprising monatin and one or more carbohydrates) provide a mouthfeel, flavor and sweetness over time that is comparable to that provided by similar gum compositions containing only carbohydrates as the sweetener. In one embodiment, an amount of a chewing gum composition comprising monatin contains less calories and carbohydrates than the same amount of the chewing gum composition containing sucrose in place of the monatin.

Monatin is stable in a dry form, and has a desirable taste profile alone or when mixed with carbohydrates. It does not appear to irreversibly break down, but rather forms lactones and/or lactams at low pHs (in aqueous buffers) and reaches an equilibrium. It can racemize at the 4 position slowly over time in solution, but typically this occurs at high pHs. In general, the stability of monatin is comparable to or better than aspartame and the taste profile of monatin is comparable to or better than other quality sweeteners, such aspartame, alitame, and sucralose. Monatin does not have the undesirable aftertaste associated with some other high intensity sweeteners such as saccharin and stevioside.

In certain embodiments, the chewing gum compositions of the invention include a gum base portion and a soluble portion that includes monatin. The term "soluble" in the term "soluble portion" means that this portion can dissolve in the mouth and/or in saliva. The gum base portion is retained in the mouth throughout chewing while the soluble portion dissipates with a portion of the flavor over time during chewing. In some embodiments, the soluble portion contains additional components such as flavoring, colorants, other sweeteners and/or a coating.

Some sugared gum embodiments comprise a coating that is sucrose. In other embodiments, the chewing gum compositions are formulated such that they are considered sugar-free. Certain sugar-free gum embodiments comprise a coating (in syrup or crystalline form) that is sorbital maltitol, isolmalt, xylitol or erythritol. Optionally, chewing gum compositions can comprise a coating that is a flavor, a lyophilized fruit and/or a colorant.

In certain embodiments, monatin is present in an amount that ranges from 0.001 to 1.1 wt % of the chewing gum composition (e.g., 0.009 to 1 wt %, 0.01 to 0.3 wt %, 0.01 to 0.04 wt %, or 0.02 to 0.1 wt %), including any particular value within that range (e.g., 0.001 wt %, 0.005 wt %, 0.01 wt %, 0.015 wt %, 0.02 wt %, or 0.025 wt % of the chewing gum composition). The monatin can be one particular stereoisomer or a blend of different stereoisomers. For example, 0.009 to 0.1 wt % (e.g., 0.015 to 0.025 wt %) of the R,R stereoisomer of monatin or 0.1 to 1.1 wt % (e.g., 0.15 to 0.88 wt %) of the S,S stereoisomer of monatin can be used in a chewing gum composition.

### Gum Base

The composition of the gum base typically determines whether the gum is considered chewing gum, bubble gum, or a functional gum. In certain embodiments, the gum base is inert and non-nutritive and made from combinations of the following components: elastomers, softeners (plasticizers), emulsifiers, resin, and fillers.

Ingredients within the compositions generally are considered food grade, generally recognized as safe (GRAS), and/or are U.S. Food and Drug Administration (FDA)-approved. Elastomers provide the rubbery, cohesive nature to the gums, and can include, for example, one or more natural rubbers (e.g., smoked latex, liquid latex, or guayule), natural gums, or synthetic elastomers. In some embodiments, natural gums include jelutong, perillo, sorva, massaranduba balata, massaranduba chocolate, nispero, rosindinha, chicle, and gutta hang kang. For example, chicle is a particularly useful natural gum. In other embodiments, synthetic elastomers include butadiene-styrene copolymers, isobutylene-isoprene copolymers, polybutadiene, polyisobutylene, and vinyl polymeric elastomers. In certain embodiments, an elastomer is present in a gum base in an amount within the range of 3 to 70 wt % (e.g., 3 to 60 wt %, 3 to 50 wt %, 5 to 45 wt %, 10 to 50 wt %, 15 to 45 wt %, or 20 to 40 wt% of the gum base), including any particular value within the range (e.g., 3, 5, 10, 15, 20, 25, 30, 35, 40, 45, 50, 55, 60, or 65 wt %).

Resins can be used to vary the firmness of the gum base and aid in softening the elastomer component of the gum base. Non-limiting examples of suitable resins include one or more of the following: a rosin ester, a terpene resin such as a terpene resin from α-pinene, β-pinene and/or d-limonene, polyvinal acetate, polyvinyl alcohol, ethylene vinyl acetate, and vinyl acetate-vinyl laurate copolymer. In certain embodiments, a rosin ester can be a glycerol ester of partially hydrogenated rosin, a glycerol ester of polymerized rosin, a glycerol ester of partially dimerized rosin, a glycerol ester of rosin, a pentaerythritol ester of partially hydrogenated rosin, a methyl ester of rosin, or a methyl ester of partially hydrogenated rosin. In some embodiments, the resin is present in an amount that ranges from about 5 to 75 wt % of the gum base, including any particular value within that range. For example, the resin can be present in an amount that ranges from about 5 to 45 wt %, 10 to 75 wt %, 10 to 30 wt %, 15 to 60 wt %, or 20 to 50 wt % of the gum base.

Softeners (also known as plasticizers) can be used to modify the ease of chewing and/or mouthfeel of the chewing gum composition. In certain embodiments, softeners include oils, fats, waxes and emulsifiers. Non-limiting examples that can be used include, for example, tallow, hydrogenated tallow, lard, hydrogenated or partially hydrogenated vegetable oils such as soybean, canola, cottonseed, sunflower, palm, coconut, com, safflower, or palm kernel oil, cocoa butter, glycerol monostearate, glycerol triacetate, glycerol abietate, lecithin, monoglycerides, diglycerides, triglycerides, acetylated monoglycerides, and free fatty acids. Commonly used waxes include, for example, polypropylene/polyethylene/Fisher-Tropsch waxes, paraffin, microcrystalline, and natural waxes such as candelilla, beeswax, and carnauba. Microcrystalline waxes, especially those with a high degree of crystallinity, also may be considered as bodying agents or textural modifiers. In certain embodiments, some corn syrups, such as Globe, provide for softening of the gum base before mixing with other sugars, and for body and humectancy. In other embodiments, softeners are present in an amount that ranges from about 0.5 to 30 wt % (e.g., 0.5 to 25 wt %, 0.5 to 15 wt %, or 1 to 7 wt %) of the gum base, including any particular value within the range.

Emulsifiers aid in forming a uniform dispersion of the nonsoluble/soluble phases and also can have plasticizing properties. In certain embodiments, suitable emulsifiers include glycerol monostearate (GMS), lecithin (phosphatidyl choline), polyglycerol polyricinoleic acid (PPGR), mono and diglycerides of fatty acids, glycerol distearate, triacetin, acetylated monoglyceride, glycerol triacetate, and magnesium stearate. In other embodiments, emulsifiers can be present in an amount that ranges from about 1 to 30 wt% of a gum base, e.g., 2 to 30 wt %, 3 to 20 wt %, or 5 to 15 wt % of the gum base, including any particular value within the range (e.g., 5, 10, 15, 20, or 25 wt %).

In addition, the chewing gum composition optionally may include adjuvants or fillers in either the gum base and/or soluble portion of the composition. Suitable adjuvants or fillers include, for example, lecithin, inulin, polydextrin, calcium carbonate, magnesium carbonate, magnesium silicate, ground limestone, aluminum hydroxide, aluminum silicate, talc, clay, alumina, titanium dioxide, and calcium phosphate. In certain embodiments, lecithin can be used as an inert filler, to decrease the amount of stickiness. In other embodiments, lactic acid copolymers, proteins (such as gluten and/or zein) and/or guar also can be used to create a gum that is more readily biodegradable. In other embodiments, adjuvants or fillers can be present in an amount that ranges up to 20 wt % of the gum base (e.g., 1 to 20 wt %, 1 to 15 wt %, 1 to 10 wt %, 2 to 18 wt %, or 5 to 15 wt % of the gum base), including any particular value within the range.

Likewise, coloring agents and whiteners also can be optionally added to the chewing gum composition, and can include, for example, FD&C types lakes, fruit and vegetable extracts, titanium dioxide, heat-modified amino acids, cocoa powder, or mixtures thereof. In certain embodiments, coloring agents and whiteners can be present in an amount that ranges 0 to 5 wt % (e.g., 0 to 1 wt %) of the gum base, including any particular value within the range.

Additional components of the gum base optionally can include one or more antioxidants or preservatives, such as butylated hydroxyanisole (BHA), butylated hydroxytoluene (BHT), tocopherols, β carotenes, propyl gallate, and acidulants (e.g., Vitamin C). In certain embodiments, antioxidants or preservatives can be 0 to 0.2 wt % of the gum base (e.g., 0 to about 0.05 wt %, 0 to 0.08 wt %, 0.05 wt %, or 0.1 wt%).

In some embodiments, a gum base portion of a composition include 3 to 50 wt % of an elastomer, 0.5 to 25 wt % of a softener, 2 to 30 wt % of an emulsifier, 5 to 75 wt % of a resin, and 0 to 20 wt% of a filler, with the total wt % of the gum base portion being 100. The gum base can include, for example, 30 wt % terpene resin, 15 wt % hydrogenated vegetable oil (e.g., hydrogenated cottonseed oil), 2 wt % lecithin, 2.5 wt % polyisobutylene, 27 wt % polyvinyl acetate; 12.45 wt % calcium carbonate, 11 wt % isobutylene-isoprene copolymer, and 0.05 wt % BHT.

In certain embodiments, the gum base portion can be about 5 to 95 wt % of the chewing gum composition, with the total wt % of the composition being 100. For example, the gum base can be about 5 to 80 wt%, 10 to 50 wt %, 15 to 30 wt %, or about 20 to 35 wt % of the chewing gum composition.

### Soluble Portion

In some embodiments of the invention, the soluble portion of the chewing gum include, in addition to monatin, bulk sweeteners, softeners, high-intensity sweeteners, flavoring agents, coloring agents, adjuvants, fillers, components of a functional gum (e.g., nicotine), or combinations thereof. For example, bulk sweeteners can be used to provide body or viscosity as well as to impart a desired level of sweetness. In certain embodiments, bulk sweeteners include both sugar and sugarless and lower glycemic carbohydrate components, and constitute between about 5 to 95 wt % of the chewing gum composition (e.g., 20 to 80 wt % or 30 to 60 wt %) of the chewing gum. In other embodiments, sugar sweeteners include sucrose, dextrose (e.g., Cerelose dextrose), maltose, dextrin, dried invert sugar, fructose, high fructose corn syrup, levulose, galactose, corn syrup solids, and the like, alone or in combination. Sugarless sweeteners and lower glycemic carbohydrate components may include, but are not limited to, tagatose and sugar alcohols such as sorbitol, mannitol, xylitol, lactitol, erythritol, maltitol, hydrogenated starch hydrolysates, isomalt, trehalose, and the like, alone or in combination.

In certain embodiments, the monatin chewing gum compositions comprise other high intensity sweeteners and/or sugarless sweeteners. A number of high intensity sweeteners are at least 20 times sweeter than sucrose. These include, but are not limited to, sucralose, aspartame, salts of acesulfame (e.g., acesulfame-K), alitame, saccharin and its salts, cyclamic acid and its salts, glycyrrhizin, dihydrochalcones (e.g., neohesperidin dihydrochalcone), thaumatin, monellin, neotame, stevioside (extracted from leaves of *Stevia rebaudiana),* mogroside (extracted from Lo Han Guo fruit), phyllodulcin (extracted from leaves of *Hydrangea macrophylla,* about 400 to 600 times sweeter than sucrose), mabinlin, brazzein, pentadin, and the like, alone or in combination. In some embodiments, high intensity sweeteners range from 0.001 to 5 wt % of the chewing gum composition (e.g., 0.009 to 1 wt % of the chewing gum composition), including any particular value within the range. For example, higher intensity sweeteners such as alitame (2000 times sweeter than sucrose, 2000 X sucrose) and thaumatin (1600-3000X sucrose) can be present at about 0.02 to 0.10 wt % of the chewing gum composition; aspartame and similar compounds (200 X sucrose) can be present at about 0.1 to 0.3 wt % of the chewing gum composition. In other embodiments, monatin and a high-intensity sweetener such as cyclamate or acesulfame K can be used in a chewing gum composition. For example, 0.05 to 0.7 wt % monatin (e.g., the S,S stereoisomer of monatin) and 0.01 to 0.2 wt % of acesulfame K can be used in a chewing gum composition.

In certain embodiments, sweetness enhancers, which only are sweet in the presence of other compounds like acids, also can be used in a chewing gum composition. Non-limiting examples of sweetness enhancers include curculin and miraculin (100 X sucrose).

In other embodiments, aqueous sweetener solutions such as those containing sorbitol, hydrogenated starch hydrolysates, corn syrup, polyol syrup (e.g., maltitol syrup), or combinations thereof, also can be used as softeners and binding agents in the gum composition.

In other embodiments, the monatin chewing gum compositions comprise flavoring agents, including natural or artificial flavors, and combinations thereof. For example, flavoring agents can be present in an amount within the range of about 0.1 to 15 wt % of the chewing gum composition (e.g., 0.1 to 10 wt %, 0.2 to 5 wt %, or 0.5 to 3 wt % of the chewing gum composition). In certain embodiments, the flavoring agent is an essential oil, such as an oil derived from a plant or a fruit, peppermint oil, spearmint oil, other mint oils, clove oil, cinnamon oil, oil of wintergreen, bay, thyme, cedar leaf, nutmeg, allspice, sage, mace, almonds, anise and the like). In other embodiments, the flavoring agent is a plant extract or a fruit essence such as apple, banana, watermelon, pear, peach, grape, strawberry, raspberry, cherry, plum, pineapple, and apricot, or a combination of fruit flavorings (e.g., tutti fruitti). In other embodiments, the flavoring agent is a citrus flavor, such as extract, essence or oil of lemon, lime, orange, tangerine, grapefruit, citron or kumquat. In embodiments, these flavoring agents may be used in liquid or solid form and may be used individually or in admixture.

Optional ingredients, such as coloring agents, emulsifiers, pharmaceutical agents (e.g., nicotine, aspirin, dimenhydrinate, caffeine), or nutrients (e.g., calcium or vitamins), also can be included in chewing gum. Suitable coloring agents and emulsifiers are described above.

In certain embodiments, one or more of the components of the chewing gum composition can be encapsulated. For example, monatin and/or other high-intensity sweeteners, coloring agents, and/or flavoring agents can be encapsulated. Encapsulation of monatin and/or other high-intensity sweeteners can enhance the up front sweetness intensity, prolong the sweetness duration, and improve protection and stability of the sweetener. Encapsulation also can protect flavoring agents. See, for example, U.S. Patent Nos. 4,981,698, 5,004,595, and 5,266,335 for methods of encapsulating such components.

Any gum composition can include monatin. In some embodiments, gum compositions include approximately 17 to 23 wt % gum base (e.g. 20 wt %), 55 to 65 wt % bulk sweetener (e.g., 60 wt %), 15 to 21 wt % glucose syrup (e.g., 18 wt %), 0.05 to 0.15 wt % flavor (e.g., 0.1 wt%), and 0.05 to 0.15 wt % other additives (e.g., 0.1 wt %). In one embodiment, a chewing gum composition contains about 20 wt % of gum base, about 3 wt % glycerin, about 8 wt % glucose, about 0.5 wt % lecithin, about 1% fruit flavoring (e.g., strawberry), about 0.07 wt % colorant (e.g., red colorant), about 47 wt % sugar, about 20 wt % inulin or polydextrin filler, about 0.15 wt % acesulfame K, and 0.5 wt % S,S monatin. In certain embodiments, the R,R monatin can be used in place of the acesulfame K /S,S monatin blend by substituting approximately 0.02 wt % monatin, and the remainder can be filled with bulk sugar or filler.

In another embodiment, a sugar free gum composition includes about 21 to 27 wt % (e.g., 24.5 wt %) of a sugar free gum base, about 13 to 19 wt % (e.g., 16.1 wt %) of a sorbitol solution, about 0.5 to 2.0 wt % (e.g., 1.5 wt %) of a flavoring agent such as a mint flavor, about 2 to 3.5 wt % (e.g., 2.8 wt %) of glycerin, and about 0.009 to 1.1 wt % of monatin, depending on the blend of monatin stereoisomers that are used, and about 50 to 60 wt % (e.g., 55 wt %) of sorbitol powder.

### Preparation of Chewing Gum Compositions

Chewing gum compositions can be prepared using known techniques. In general, chewing gum can be manufactured by sequentially adding the various chewing gum ingredients to any commercially available mixer known in the art (e.g., a sigma blade mixer). See, for example, U.S. Patent Nos. 5,334,397 and 5,800,848. After the ingredients have been thoroughly mixed, the gum mass can be discharged from the mixer and shaped into the desired forms such as by rolling into sheets and cutting into sticks, extruding into chunks, or casting into pellets or tablets. A variety of chewing gum and bubble gum shapes are possible, including sticks, chunks, tablets, center filled, balls, fruit shapes, cigarette-shaped, coins, tube gums, and compressed powder gums.

In one embodiment, the gum base is first melted (e.g., at a temperature ranging from 80 to 125°C) and added to the running mixer. Alternatively, the base can be melted in the mixer itself. Color also can be added at this time. A softener can be added next along with the syrup and a portion of the bulking agent. Further portions of the bulking agents then can be added to the mixer. In certain embodiments, flavor ingredients are added to the gum mixture near the end of the mixing process. Chewing gums can be made in a continuous or batch-wise fashion. Corn starch or talc can be used to dust chewing gum products prior to packaging.

Sensory tests rate the taste and texture of chewing gum compositions and/or its components, such as a coating. Examples of sensory tests include oral ranking tests and triangle tests. In oral ranking tests, chewing gum compositions having same formulations, but comprising different sweeteners, are evaluated side-by-side by three or more panelists. The panelists rank the sweetness intensity of each composition. In triangle tests, three or more panelist are given three samples of chewing gum compositions, where two samples have the same formulation and a third reference/comparison sample has a different formulation. The panelists are asked to determine which one of the formulations has a sweetness or other sensory characteristics that differ from the other two.

It is expected that monatin containing chewing gum, as compared to gums containing other sweeteners, will exhibit longer sweetness while chewing, a longer shelf-life, greater heat and acid stability, as well as better taste characteristics and marketing advantages.

### EXAMPLES

### EXAMPLE 1

### Cloning and Expression of Tryptophan Aminotransferases

This example describes methods that were used to clone tryptophan aminotransferases, which can be used to convert tryptophan to indole-3-pyruvate.

### Experimental Overview

Eleven genes encoding aminotransferases were cloned into *E. coli.* These genes were *Bacillus subtilis* D-alanine aminotransferase (*dat,* Genbank Accession No. Y14082.1 bp 28622-29470 and Genbank Accession No. NP_388848.1, nucleic acid sequence and amino acid sequence, respectively), *Sinorhizobium meliloti* (also termed *Rhizobium meliloti*) tyrosine aminotransferase (*tatA,* SEQ ID NOS: 1 and 2, nucleic acid sequence and amino acid sequence, respectively), *Rhodobacter sphaeroides* strain 2.4.1 tyrosine aminotransferase (*tatA* asserted by homology, SEQ ID NOS: 3 and 4, nucleic acid sequence and amino acid sequence, respectively), *R. sphaeroides* 35053 tyrosine aminotransferase (asserted by homology, SEQ ID NOS: 5 and 6, nucleic acid sequence and amino acid sequence, respectively), *Leishmania major* broad substrate aminotransferase (*bsat,* asserted by homology to peptide fragments from *L. mexicana,* SEQ ID NOS: 7 and 8, nucleic acid sequence and amino acid sequence, respectively), *Bacillus subtilis* aromatic aminotransferase *(araT,* asserted by homology, SEQ ID NOS: 9 and 10, nucleic acid sequence and amino acid sequence, respectively), *Lactobacillus amylovorus* aromatic aminotransferase *(araT* asserted by homology, SEQ ID NOS: 11 and 12, nucleic acid sequence and amino acid sequence, respectively), *R. sphaeroides* 35053 multiple substrate aminotransferase (asserted by homology, SEQ ID NOS: 13 and 14, nucleic acid sequence and amino acid sequence, respectively), *Rhodobacter sphaeroides* strain 2.4.1 multiple substrate aminotransferase *(msa* asserted by homology, Genbank Accession No. AAAE01000093.1, bp 14743-16155 and Genbank Accession No. ZP00005082.1, nucleic acid sequence and amino acid sequence, respectively), *Escherichia coli* aspartate aminotransferase *(aspC,* Genbank Accession No. AE000195.1 bp 2755-1565 and Genbank Accession No. AAC74014.1, nucleic acid sequence and amino acid sequence, respectively), and *E*. *coli* tyrosine aminotransferase (*tyrB*, SEQ ID NOS: 31 and 32, nucleic acid sequence and amino acid sequence, respectively). The genes were cloned, expressed, and tested for activity in conversion of tryptophan to indole-3-pyruvate, along with commercially available enzymes. All eleven clones had activity.

### Identification of Bacterial Strains that Can Contain Polypeptides with the Desired Activity

No genes in the NCBI (National Center for Biotechnology Information) database were designated as tryptophan aminotransferases. However, organisms having this enzymatic activity have been identified. L-tryptophan aminotransferase (TAT) activity has been measured in cell extracts or from purified protein from the following sources: Rhizobacterial isolate from *Festuca octoflora,* pea mitochondria and cytosol, sunflower crown gall cells, *Rhizobium leguminosarum* biovar *trifoli, Erwinia herbicola* pv gypsophilae, *Pseudomonas syringae* pv. savastanoi, *Agrobacterium tumefaciens, Azospirillum lipferunz & brasilense, Enterobacter cloacae, Enterobacter agglomerans, Bradyrhizobium elkanii, Candida maltosa, Azotobacter vinelandii,* rat brain, rat liver, *Sinorhizobium meliloti, Pseudomonas fluorescens* CHA0, *Lactococcus lactis, Lactobacillus casei, Lactobacillus helveticus,* wheat seedlings, barley, *Phaseolus aureus* (mung bean), *Saccharomyces uvarum* (carlsbergensis), *Leishmania* sp., maize, tomato shoots, pea plants, tobacco, pig, *Clostridium sporogenes,* and *Streptomyces griseus.*

### EXAMPLE 2

### Conversion of Indole-3-lactate to Indole-3-pyruvate

As shown in FIGS. 1 and 3, indole-3-lactic acid can be used to produce indole-3-pyruvate. Conversion between lactic acid and pyruvate is a reversible reaction, as is conversion between indole-3-pyruvate and indole-3-lactate. The oxidation of indolelactate was typically followed due to the high amount of background at 340 nm from indole-3-pyruvate.

The standard assay mixture contained 100 mM potassium phosphate, pH 8.0, 0.3 mM NAD⁺, 7 units of lactate dehydrogenase (LDH) (Sigma-L2395, St. Louis, MO), and 2 mM substrate in 0.1 mL. The assay was performed in duplicate in a UV-transparent microtiter plate, using a Molecular Devices SpectraMax Plus platereader. Polypeptide and buffer were mixed and pipetted into wells containing the indole-3-lactic acid and NAD⁺ and the absorbance at 340 nm of each well was read at intervals of 9 seconds after brief mixing. The reaction was held at 25°C for 5 minutes. The increase in absorbance at 340 nm follows the production of NADH from NAD⁺. Separate negative controls were performed without NAD⁺ and without substrate. D-LDH from *Leuconostoc mesenteroides* (Sigma catalog number L2395) appeared to exhibit more activity with the indole-derivative substrates than did L-LDH from *Bacillus stearothermophilus* (Sigma catalog number L5275).

Similar methods were utilized with D-lactic acid and NAD+ or NADH and pyruvate, the natural substrates of D-LDH polypeptides. The Vₘₐₓ for the reduction of pyruvate was 100-1000 fold higher than the Vₘₐₓ for the oxidation of lactate. The Vₘₐₓ for the oxidation reaction of indole-3-lactic with D-LDH was approximately one-fifth of that with lactic acid. The presence of indole-3-pyruvate was also measured by following the change in absorbance at 327 (the enol-borate derivative) using 50 mM sodium borate buffer containing 0.5 mM EDTA and 0.5 mM sodium arsenate. Small, but repeatable, absorbance changes were observed, as compared to the negative controls for both L and D-LDH polypeptides.

Additionally, broad specificity lactate dehydrogenases (enzymes with activity associated with EC 1.1.1.27, EC 1.1.1.28, and/or EC 1.1.2.3) can be cloned and used to make indole-3-pyruvate from indole-3-lactic acid. Sources of broad specificity dehydrogenases include *E. coli, Neisseria gonorrhoeae,* and *Lactobacillus plantarum.*

Alternatively, indole-3-pyruvate can be produced by contacting indole-3-lactate with cellular extracts from *Clostridium sporogenes* which contain an indolelactate dehydrogenase (EC 1.1.1.110); or *Trypanosoma cruzi epimastigotes* cellular extracts which contain p-hydroxyphenylactate dehydrogenase (EC 1.1.1.222) known to have activity on indole-3-pyruvate; or *Pseudomonas acidovorans* or *E. coli* cellular extracts, which contain an imidazol-5-yl lactate dehydrogenase (EC 1.1.1.111); or *Coleus blumei,* which contains a hydroxyphenylpyruvate reductase (EC 1.1.1.237); or *Candida maltosa* which contains a D-aromatic lactate dehydrogenase (EC 1.1.1.222). References describing such activities include, Nowicki *et al. (FEMS Microbiol Lett* 71:119-24, 1992), Jean and DeMoss *(Canadian J. Microbiol.* 14 1968, Coote and Hassall *(Biochem. J.* 111: 237-9, 1969), Cortese *et al. (C.R. Seances Soc. Biol. Fil.* 162 390-5, 1968), Petersen and Alfermann *(Z. Naturforsch. C: Biosci.* 43 501-4, 1988), and Bhatnagar *et al. (J. Gen Microbiol* 135:353-60, 1989). In addition, a lactate oxidase such as the one from *Pseudomonas sp.* (Gu *et al.* J. Mol. Catalysis B: Enzymatic: 18:299-305, 2002), can be utilized for oxidation of indole-3-lactic to indole-3-pyruvate.

### EXAMPLE 3

### Conversion of L-tryptophan to Indole-3-pyruvate utilizing L-amino acid oxidase

This example describes methods used to convert tryptophan to indole-3-pyruvate via an oxidase (EC 1.4.3.2), as an alternative to using a tryptophan aminotransferase as described in Example 1. L-amino acid oxidase was purified from *Crotalus durissus* (Sigma, St. Louis, MO, catalog number A-2805). The accession numbers of L-amino acid oxidases for molecular cloning include: CAD21325.1, AAL14831, NP_490275, BAB78253, A38314, CAB71136, JE0266, T08202, S48644, CAC00499, P56742, P81383, 093364, P81382, P81375, S62692, P23623, AAD45200, AAC32267, CAA88452, AP003600, and Z48565.

Reactions were performed in microcentrifuge tubes in a total volume of 1 mL, incubated for 10 minutes while shaking at 37°C. The reaction mix contained 5 mM L-tryptophan, 100 mM sodium phosphate buffer pH 6.6, 0.5 mM sodium arsenate, 0.5 mM EDTA, 25 mM sodium tetraborate, 0.016 mg catalase (83 U, Sigma C-3515), 0.008 mg FAD (Sigma), and 0.005-0.125 Units of L-amino acid oxidase. Negative controls contained all components except tryptophan, and blanks contained all components except the oxidase. Catalase was used to remove the hydrogen peroxide formed during the oxidative deamination. The sodium tetraborate and arsenate were used to stabilize the enol-borate form of indole-3-pyruvate, which shows a maximum absorbance at 327 nm. Indole-3-pyruvate standards were prepared at concentrations of 0.1-1 mM in the reaction mix.
The purchased L-amino acid oxidase had a specific activity of 540 µg indole-3-pyruvate formed per minute per mg protein. This is the same order of magnitude as the specific activity of tryptophan aminotransferase enzymes.

### EXAMPLE 4

### Converting Indole-3-pyruvate to 2-hydroxy 2-(indol-3-ylmethyl)-4-keto glutaric acid with an Aldolase

This example describes methods that can be used to convert indole-3-pyruvate to MP using an aldolase (lyase) (FIG. 2). Aldol condensations are reactions that form carbon-carbon bonds between the β-carbon of an aldehyde or ketone and the carbonyl carbon of another aldehyde or ketone. A carbanion is formed on the carbon adjacent to the carbonyl group of one substrate, and serves as a nucleophile attacking the carbonyl carbon of the second substrate (the electrophilic carbon). Most commonly, the electrophilic substrate is an aldehyde, so most aldolases fall into the EC 4.1.2.-category. Quite often, the nucleophilic substrate is pyruvate. It is less common for aldolases to catalyze the condensation between two keto-acids or two aldehydes.

However, aldolases that catalyze the condensation of two carboxylic acids have been identified. For example, EP 1045-029 describes the production of L-4-hydroxy-2-ketoglutaric acid from glyoxylic acid and pyruvate using a *Pseudomonas* culture (EC 4.1.3.16). In addition, 4-hydroxy-4-methyl-2-oxoglutarate aldolase (4-hydroxy-4-methyl-2-oxoglutarate pyruvate lyase, EC 4.1.3.17) can catalyze the condensation of two keto acids. Therefore, similar aldolase polypeptides were used to catalyze the condensation of indole-3-pyruvate with pyruvate.

### Cloning

4-Hydroxy-4-methyl-2-oxoglutarate pyruvate lyases (ProA aldolase, EC 4.1.3.17) and 4-hydroxy-2-oxoglutarate glyoxylate-lyase (KHG aldolase, EC 4.1.3.16) catalyze reactions very similar to the aldolase reaction of FIG. 2. Primers were designed with compatible overhangs for the pET30 Xa/LIC vector (Novagen, Madison, WI).

### Activity Results with proA gene products

Both the *C*. *testosteroni proA* and *S. meliloti SMc00502* gene constructs had high levels of expression when induced with IPTG. The recombinant proteins were highly soluble, as determined by SDS-PAGE analysis of total protein and cellular extract samples. The C. *testosteroni* gene product was purified to > 95% purity. Because the yield of the S. *meliloti* gene product was very low after affinity purification using a His-Bind cartridge, cellular extract was used for the enzymatic assays.

Both recombinant aldolases catalyzed the formation of MP from indole-3-pyruvate and pyruvate. The presence of both divalent magnesium and potassium phosphate were required for enzymatic activity. No product was apparent when indole-3-pyruvate, pyruvate, or potassium phosphate was absent. A small amount of the product was also formed in the absence of enzyme (typically one order of magnitude less than when enzyme was present).

The product peak eluted from the reverse phase C18 column slightly later than the indole-3-pyruvate standard, the mass spectrum of this peak showed a collisionally-induced parent ion ([M + H]+) of 292.1, the parent ion expected for the product MP. The major daughter fragments present in the mass spectrum included those with m/z =158 (1*H*-indole-3-carbaldehyde carbonium ion), 168 (3-buta-1,3-dienyl-1*H*-indole carbonium ion), 274 (292 - H₂O), 256 (292 - 2 H₂O) 238 (292 - 3 H2O), 228 (292 - CH403), and 204 (loss of pyruvate). The product also exhibited a UV spectrum characteristic of other indole-containing compounds such as tryptophan, with the λₘₐₓ of 279-280 and a small shoulder at approximately 290 nm.

The amount of MP produced by the *C. testosteroni* aldolase increased with an increase in reaction temperature from room temperature to 37°C, amount of substrate, and amount of magnesium. The synthetic activity of the enzyme decreased with increasing pH, the maximum product observed was at pH 7. Based on tryptophan standards, the amount of MP produced under a standard assay using 20 µg of purified protein was approximately 10-40 µg per one mL reaction.

Due to the high degree of homology of the *S*. *meliloti* and *C*. *testosteroni* ProA aldolase coding sequences with the other genes described above, it is expected that all of the recombinant gene products can catalyze this reaction. Moreover, it is expected that aldolases that have threonine (T) at positions 59 and 87, arginine (R) at 119, aspartate (D) at 120, and histidine (H) at 31 and 71, (based on the numbering system of *C. testosteroni)* will have similar activity.

### Activity Results with khg gene products

Both the *B. subtilis* and *E. coli khg* gene constructs had high levels of expression of protein when induced with IPTG, while the *S. meliloti khg* had a lower level of expression. The recombinant proteins were highly soluble, as judged by SDS-PAGE analysis of total proteins and cellular extracts. The *B. subtilis* and *E. coli khg* gene products were purified to > 95% purity; the yield of the *S*. *meliloti* gene product was not as high after affinity purification using a His-Bind cartridge.

There is no evidence that magnesium and phosphate are required for activity for this enzyme. However, the literature reports performing the assays in sodium phosphate buffer, and the enzyme reportedly is bifunctional and has activity on phosphorylated substrates such as 2-keto-3-deoxy-6-phosphogluconate (KDPG). The enzymatic assays were performed as described above, and in some instances the phosphate was omitted. The results indicate that the recombinant KHG aldolases produced MP, but were not as active as the ProA aldolases. In some cases the level of MP produced by KHG was almost identical to the amount produced by magnesium and phosphate alone. Phosphate did not appear to increase the KHG activities. The *Bacillus* enzyme had the highest activity, approximately 20-25% higher activity than the magnesium and phosphate alone, as determined by SRM (see Example 10). The *Sinorhizobium* enzyme had the least amount of activity, which can be associated with folding and solubility problems noted in the expression. All three enzymes have the active site glutamate (position 43 in *B. subtilis* numbering system) as well as the lysine required for Shiff base formation with pyruvate (position 130); however, the *B. subtilis.* enzyme contains a threonine in position 47, an active site residue, rather than arginine. The *B*. *subtilis* KHG is smaller and appears to be in a cluster distinct from the S. *meliloti* and *E. coli* enzymes, with other enzymes having the active site threonine. The differences in the active site may be the reason for the increased activity of the *B. subtilis* enzyme.

### Improvement of Aldolase Activity

Catalytic antibodies can be as efficient as natural aldolases, accept a broad range of substrates, and can be used to catalyze the reaction shown in FIG. 2.

Aldolases can also be improved by directed evolution, for example as previously described for a KDPG aldolase (highly homologous to KHG described above) evolved by DNA shuffling and error-prone PCR to remove the requirement for phosphate and to invert the enantioselectivity. The KDPG aldolase polypeptides are useful in biochemical reactions since they are highly specific for the donor substrate (herein, pyruvate), but are relatively flexible with respect to the acceptor substrate (i.e. indole-3-pyruvate) (Koeller & Wong, *Nature* 409:232-9, 2001). KHG aldolase has activity for condensation of pyruvate with a number of carboxylic acids. Mammalian versions of the KHG aldolase are thought to have broader specificity than bacterial versions, including higher activity on 4-hydroxy 4-methyl 2-oxoglutarate and acceptance of both stereoisomers of 4-hydroxy-2-ketoglutarate. Bacterial sources appear to have a 10-fold preference for the R stereoisomer. There are nearly 100 KHG homologs available in genomic databases, and activity has been demonstrated in *Pseudomonas, Paracoccus, Providencia, Sinorhizobium, Morganella, E. coli,* and mammalian tissues. These enzymes can be used as a starting point for tailoring the enantiospecificity that is desired for monatin production.

Aldolases that utilize pyruvate and another substrate that is either a keto acid and/or has a bulky hydrophobic group like indole can be "evolved" to tailor the polypeptide's specificity, speed, and selectivity. In addition to KHG and ProA aldolases demonstrated herein, examples of these enzymes include, but are not limited to: KDPG aldolase and related polypeptides (KDPH); transcarboxybenzalpyruvate hydratase-aldolase from *Nocardioides* st; 4-(2-carboxyphenyl)-2-oxobut-3-enoate aldolase (2'-carboxybenzalpyruvate aldolase) which condenses pyruvate and 2-carboxybenzaldehyde (an aromatic ring-containing substrate); trans-O-hydroxybenzylidenepyruvate hydratase-aldolase from *Pseudomonas putida* and *Sphingomonas aromaticivorans,* which also utilizes pyruvate and an aromatic-containing aldehyde as substrates; 3-hydroxyaspartate aldolase (erythro-3-hydroxy-L-aspartate glyoxylate lyase), which uses 2-oxo acids as the substrates and is thought to be in the organism *Micrococcus denitrificans;* benzoin aldolase (benzaldehyde lyase), which utilizes substrates containing benzyl groups; dihydroneopterin aldolase; L-threo-3-phenylserine benzaldehyde-lyase (phenylserine aldolase) which condenses glycine with benzaldehyde; 4-hydroxy-2-oxovalerate aldolase; 1,2-dihydroxybenzylpyruvate aldolase; and 2-hydroxybenzalpyruvate aldolase.

A polypeptide having the desired activity can be selected by screening clones of interest using the following methods. Tryptophan auxotrophs are transformed with vectors carrying the clones of interest on an expression cassette and are grown on a medium containing small amounts of monatin or MP. Since aminotransferases and aldolase reactions are reversible, the cells are able to produce tryptophan from a racemic mixture of monatin. Similarly, organisms (both recombinant and wildtype) can be screened by ability to utilize MP or monatin as a carbon and energy source. One source of target aldolases is expression libraries of various *Pseudomonas* and rhizobacterial strains. Pseudomonads have many unusual catabolic pathways for degradation of aromatic molecules and they also contain many aldolases; whereas the rhizobacteria contain aldolases, are known to grow in the plant rhizosphere, and have many of the genes described for construction of a biosynthetic pathway for monatin.

### EXAMPLE 5

### Chemical Synthesis of the Monatin Precursor

Example 4 described a method of using an aldolase to convert indole-3-pyruvate to MP. This example describes an alternative method of chemically synthesizing MP. MP can be formed using a typical aldol-type condensation (FIG. 4). Briefly, a typical aldol-type reaction involves the generation of a carbanion of the pyruvate ester using a strong base, such as LDA (lithium diisopropylamide), lithium hexamethyldisilazane or butyl lithium. The carbanion that is generated reacts with the indole-pyruvate to form the coupled product.

Protecting groups that can be used for protecting the indole nitrogen include, but are not limited to: t-butyloxycarbonyl (Boc), and benzyloxycarbonyl (Cbz). Blocking groups for carboxylic acids include, but are not limited to, alkyl esters (for example, methyl, ethyl, benzyl esters). When such protecting groups are used, it is not possible to control the stereochemistry of the product that is formed. However, if R2 and/or R3 are chiral protecting groups (FIG. 4), such as (S)-2-butanol, menthol, or a chiral amine, this can favor the formation of one MP enantiomer over the other.

### EXAMPLE 6

### Conversion of Tryptophan or Indole-3-Pyruvate to Monatin

An *in vitro* process utilizing two enzymes, an aminotransferase and an aldolase, produced monatin from tryptophan and pyruvate. In the first step alpha-ketoglutarate was the acceptor of the amino group from tryptophan in a transamination reaction generating indole-3-pyruvate and glutamate. An aldolase catalyzed the second reaction in which pyruvate was reacted with indole-3-pyruvate, in the presence of Mg²⁺ and phosphate, generating the alpha-keto derivative of monatin (MP), 2-hydroxy-2-(indol-3-ylmethyl)-4-ketoglutaric acid. Transfer of the amino group from the glutamate formed in the first reaction produced the desired product, monatin. Purification and characterization of the product established that the stereoisomer formed was S,S-monatin. Alternative substrates, enzymes, and conditions are described as well as improvements that were made to this process.

### Enzymes

The aldolase, 4-hydroxy-4-methyl-2-oxoglutarate pyruvate lyase (ProA aldolase, *proA* gene) (EC 4.1.3.17) from *Comamonas testosteroni* was cloned, expressed and purified as described in Example 4. The 4-hydroxy-2-oxoglutarate glyoxylate lyases (KHG aldolases) (EC 4.1.3.16) from *B. subtilis, E. coli,* and *S*. *meliloti* were cloned, expressed and purified as described in Example 4.

The aminotransferases used in conjunction with the aldolases to produce monatin were L-aspartate aminotransferase encoded by the *E. coli aspC* gene, the tyrosine aminotransferase encoded by the *E*. *coli tyrB* gene, the *S. meliloti* TatA enzyme, the broad substrate aminotransferase encoded by the *L. major bsat* gene, or the glutamic-oxaloacetic transaminase from pig heart (Type IIa). The cloning, expression and purification of the non-mammalian proteins are described in Example 1. Glutamic-oxaloacetic transaminase from pig heart (type IIa) was obtained from Sigma (# G7005).

### Method using ProA aldolase and L-aspartate aminotransferase

The reaction mixture contained 50 mM ammonium acetate, pH 8.0, 4 mM MgCl₂, 3 mM potassium phosphate, 0.05 mM pyridoxal phosphate, 100 mM ammonium pyruvate, 50 mM tryptophan, 10 mM alpha-ketoglutarate, 160 mg of recombinant C. *testosteroni* ProA aldolase (unpurified cell extract, ~30% aldolase), 233 mg of recombinant *E. coli* L-aspartate aminotransferase (unpurified cell extract, ~40% aminotransferase) in one liter. All components except the enzymes were mixed together and incubated at 30°C until the tryptophan dissolved. The enzymes were then added and the reaction solution was incubated at 30°C with gentle shaking (100 rpm) for 3.5 hours. At 0.5 and 1 hour after the addition of the enzymes aliquots of solid tryptophan (50 mmoles each) were added to the reaction. All of the added tryptophan did not dissolve, but the concentration was maintained at 50 mM or higher. After 3.5 hours, the solid tryptophan was filtered off. Analysis of the reaction mixture by LC/MS using a defined amount of tryptophan as a standard showed that the concentration of tryptophan in the solution was 60.5 mM and the concentration of monatin was 5.81 mM (1.05 g).

The following methods were used to purify the final product. Ninety percent of the clear solution was applied to a column of BioRad AG50W-X8 resin (225 mL; binding capacity of 1.7 meq/mL). The column was washed with water, collecting 300 mL fractions, until the absorbance at 280 nm was <5% of the first flow through fraction. The column was then eluted with 1 M ammonium acetate, pH 8.4, collecting 4 300-mL fractions. All 4 fractions contained monatin and were evaporated to 105 mL using a roto-evaporator with a tepid water bath. A precipitate formed as the volume reduced and was filtered off over the course of the evaporation process.

Analysis of the column fractions by LC/MS showed that 99% of the tryptophan and monatin bound to the column. The precipitate that formed during the evaporation process contained >97% tryptophan and <2% of monatin. The ratio of tryptophan to product in the supernatant was approximately 2:1.

The supernatant (7 ml) was applied to a 100 mL Fast Flow DEAE Sepharose (Amersham Biosciences) column previously converted to the acetate form by washing with 0.5 L 1 M NaOH, 0.2 L water, 1.0 L of 1.0 M ammonium acetate, pH 8.4, and 0.5 L water. The supernatant was loaded at <2 mL/min and the column was washed with water at 3-4 mL/min until the absorbance at 280 nm was ~ 0. Monatin was eluted with 100 mM ammonium acetate, pH 8.4, collecting 4 100-mL fractions.

Analysis of the fractions showed that the ratio of tryptophan to monatin in the flow through fractions was 85:15 and the ratio in the eluent fractions was 7:93. Assuming the extinction coefficient at 280 nm of monatin is the same as tryptophan, the eluent fractions contained 0.146 mmole of product. Extrapolation to the total 1 L reaction would produce ~2.4 mmoles (~710 mg) of monatin, for a recovery of 68%.

The eluent fractions from the DEAE Sepharose column were evaporated to <20 mL. An aliquot of the product was further purified by application to a C₈ preparative reversed-phase column using the same chromatographic conditions as those described in Example 10 for the analytical-scale monatin characterization. Waters Fractionlynx^{™} software was employed to trigger automated fraction collection of monatin based on detection of the *m*/*z* = 293 ion. The fraction from the C₈ column with the corresponding protonated molecular ion for monatin was collected, evaporated to dryness, and then dissolved in a small volume of water. This fraction was used for characterization of the product.

### The resulting product was characterized using the following methods.

**UV/Visible Spectroscopy.** UV/visible spectroscopic measurements of monatin produced enzymatically were carried out using a Cary 100 Bio UV/visible spectrophotometer. The purified product, dissolved in water, showed an absorption maximum of 280 nm with a shoulder at 288 nm, characteristics typical of indole containing compounds.

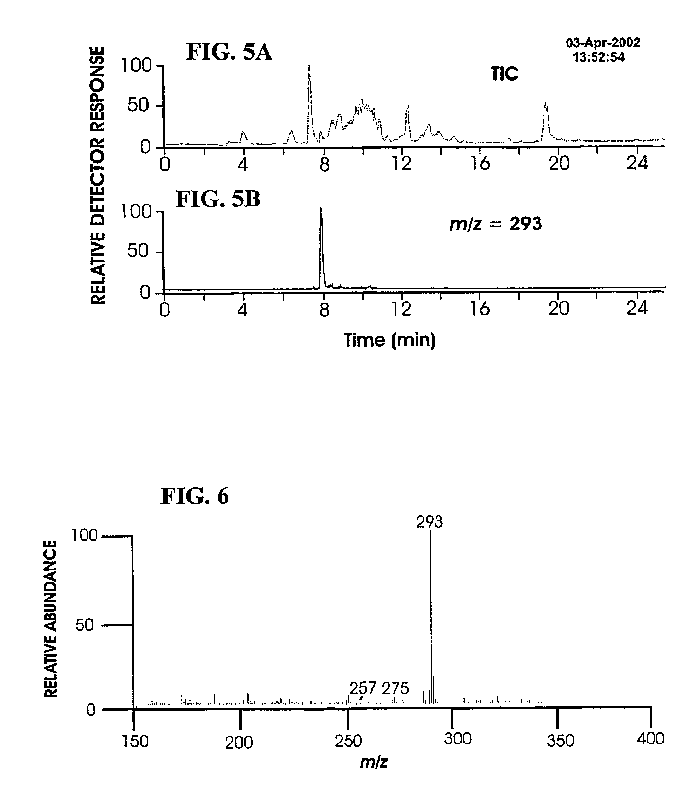

**LC/MS Analysis.** Analyses of mixtures for monatin derived from the *in vitro* biochemical reactions were carried out as described in Example 10. A typical LC/MS analysis of monatin in an *in vitro* enzymatic synthetic mixture is illustrated in FIG. 5. The lower panel of FIG. 5 illustrates a selected ion chromatogram for the protonated molecular ion of monatin at *m*/*z* = 293. This identification of monatin in the mixture was corroborated by the mass spectrum illustrated in FIG. 6. Analysis of the purified product by LC/MS showed a single peak with a molecular ion of 293 and absorbance at 280 nm. The mass spectrum was identical to that shown in FIG. 6.

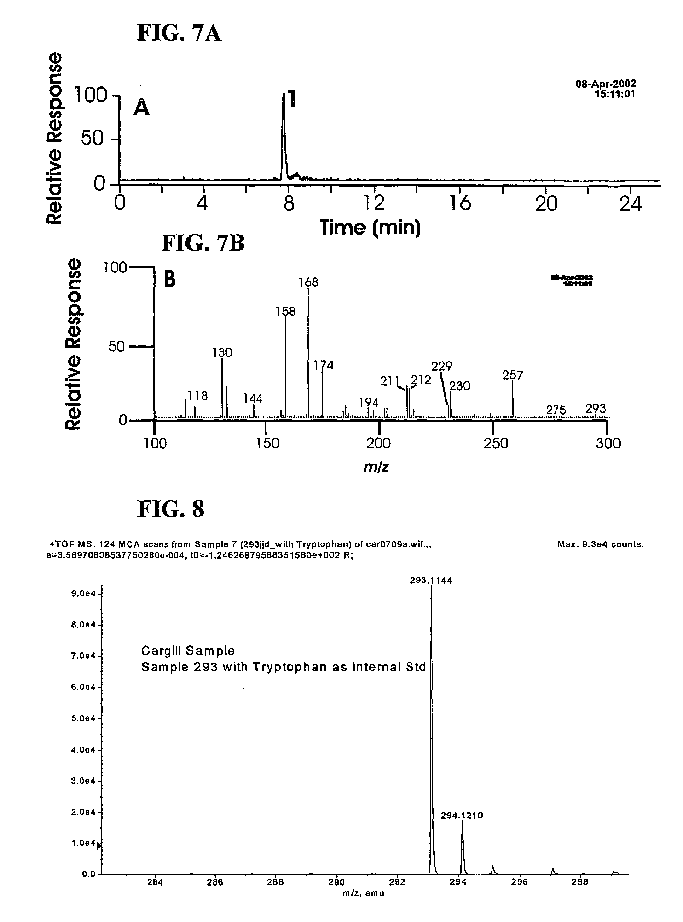

**MS/MS Analysis.** LC/MS/MS daughter ion experiments, as described in Example 10, were also performed on monatin. A daughter ion mass spectrum of monatin is illustrated in FIG. 7. Tentative structural assignments of all fragment ions labeled in FIG. 7 were made. These include fragment ions of *m*/*z* = 275 (293 - H₂O), 257 (293-(2 x H₂O)), 230 (275-COOH), 212 (257-COOH), 168 (3-buta-1,3-dienyl-1*H*-indole carbonium ion), 158 (1*H*-indole-3-carbaldehyde carbonium ion), 144 (3-ethyl-1*H* indole carbonium ion), 130 (3-methylene-1*H*-indole carbonium ion), and 118 (indole carbonium ion). Many of these are the same as those obtained for MP (Example 4), as expected if derived from the indole portion of the molecule. Some are 1 mass unit higher than those seen for MP, due to the presence of an amino group instead of a ketone.

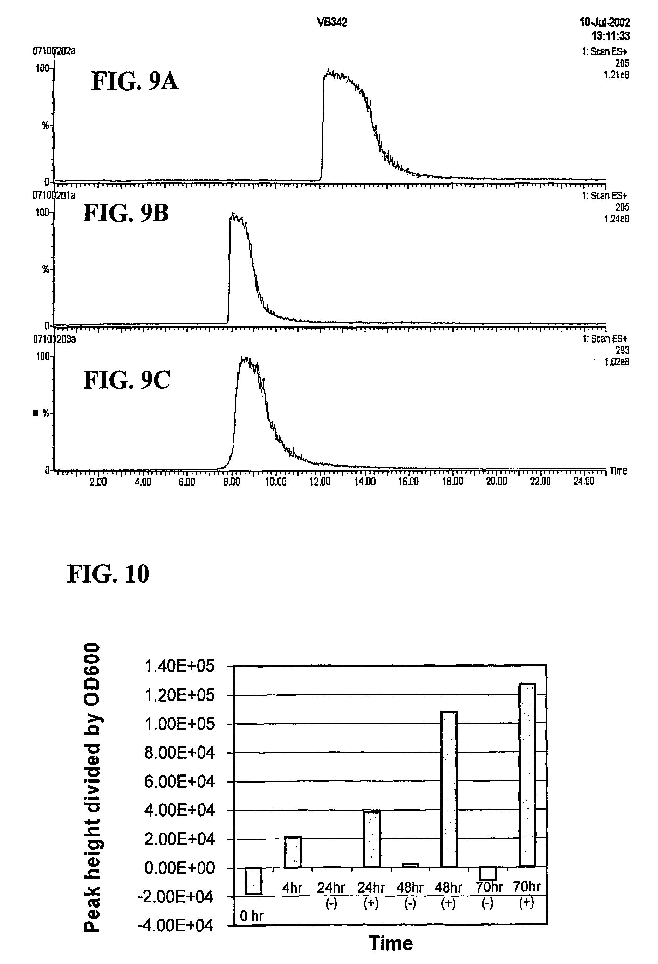

**Accurate Mass Measurement of Monatin.** FIG. 8 illustrates the mass spectrum obtained for purified monatin employing an Applied Biosystems-Perkin Elmer Q-Star hybrid quadrupole/time-of-flight mass spectrometer. The measured mass for protonated monatin using tryptophan as an internal mass calibration standard was 293.1144. The calculated mass of protonated monatin, based on the elemental composition C₁₄H₁₇N₂O₅ is 293.1137. This is a mass measurement error of less than 2 parts per million (ppm), providing conclusive evidence of the elemental composition of monatin produced enzymatically.

**NMR Spectroscopy.** The NMR experiments were performed on a Varian Inova 500 MHz instrument. The sample of monatin (~3 mg) was dissolved in 0.5 ml of D₂O. Initially, the solvent (D₂O) was used as the internal reference at 4.78 ppm. Since the peak for water was large, the ¹H-NMR was run with suppression of the peak for water. Subsequently, due to the broadness of the water peak, the C-2 proton of monatin was used as the reference peak, and set at the published value of 7.192 ppm.

For ¹³C-NMR, an initial run of several hundred scans indicated that the sample was too dilute to obtain an adequate ¹³C spectrum in the allotted time. Therefore, a heteronuclear multiple quantum coherence (HMQC) experiment was performed, which enabled the correlation of the hydrogens and the carbons to which they were attached, and also providing information on the chemical shifts of the carbons.

A summary of the ¹H and HMQC data is shown in Tables 1 and 2. By comparison to published values, the NMR data indicated that the enzymatically produced monatin was either (S,S), (R,R), or a mixture of both.

**Chiral LC/MS Analysis.** To establish that the monatin produced *in vitro* was one stereoisomer, and not a mixture of the (R,R) and (S,S) enantiomers, chiral LC/MS analyses were carried out using the instrumentation described in Example 10.

Chiral LC separations were made using an Chirobiotic T (Advanced Separations Technology) chiral chromatography column at room temperature. Separation and detection, based on published protocols from the vendor, were optimized for the R-(D) and S- (L) stereoisomers of tryptophan. The LC mobile phase consisted of A) water containing 0.05% (v/v) trifluoroacetic acid; B) Methanol containing 0.05% (v/v) trifluoroacetic acid. The elution was isocratic at 70% A and 30% B. The flow rate was 1.0 mL/min, and PDA absorbance was monitored from 200 nm to 400 nm. The instrumental parameters used for chiral LC/MS analysis of tryptophan and monatin are identical to those described in Example 10 for LC/MS analysis. Collection of mass spectra for the region *m*/*z* 150-400 was utilized. Selected ion chromatograms for protonated molecular ions ([M + H]⁺ = 205 for both R- and S-tryptophan and [M + H]⁺ = 293 for monatin) allowed direct identification of these analytes in the mixtures.

The chromatograms of R- and S-tryptophan and monatin, separated by chiral chromatography and monitored by MS, are shown in FIG. 9. The single peak in the chromatogram of monatin indicates that the compound is one stereoisomer, with a retention time almost identical to S-tryptophan.

**TABLE 1**

| **¹H NMR data** | | | | | | |
|---|---|---|---|---|---|---|
| 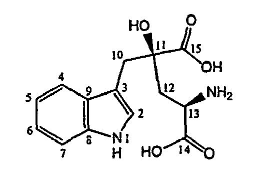 | | | | | | |
| | Cargill | | Vleggaar et al.¹ | | Takeshi et al.² | |
| **Atom** | δ_{H} | **J(HH) Hz** | δ_{H} | **J(HH) Hz** | δ_{H} | **J(HH) Hz** |
| 2 | 7.192 (1H, s) | | 7.192 (s) | | 7.18 (s) | |
| 4 | 7.671 (d) | 7.99 | 7.686 (d) | 7.9 | 7.67 (d) | 8.0 |
| 5 | 7.104 (dd) | 7.99 | 7.102 (dd) | 8.0, 8.0 | 7.11 (dd) | 7.5, 7.5 |
| 6 | 7.178 (dd) | * | 7.176 (dd) | 8.0, 8.0 | 7.17 (dd) | 7.5, 7.5 |
| 7 | 7.439 (d) | 7.99 | 7.439 (d) | 8.1 | 7.43 (d) | 8.0 |
| 10a | 3.242 (d) | 14.5 | 3.243 (d) | 14.3 | 3.24 (d) | 14.5 |
| 10b | 3.033 (d) | 14.5 | 3.051 (d) | 14.3 | 3.05 (d) | 14.5 |
| 12 | 2.626 (dd) | 15.5, 1.5 | 2.657 (dd) | 15.3, 1.7 | 2.62 (dd) | 15.5, 1.8 |
| | 2.015 (dd) | 15.0, 12.0 | 2.006 (dd) | 15.3, 11.7 | 2.01 (dd) | 15.5, 12.0 |
| 13 | 3.571 (dd) | 10.75*, 1.5 | 3.168 (dd) | 11.6, 1.8 | 3.57 (dd) | 12.0, 1.8 |

| | | | | | | |
|---|---|---|---|---|---|---|
| ¹ Vleggaar *et al. (J.C.S. Perkin Trans.* 1:3095-8, 1992). ² Takeshi and Shusuke (JP2002060382, 2002-02-26). | | | | | | |

**TABLE 2**

| **¹³C NMR data (from HMQC spectrum)** | | |
|---|---|---|
| | **Cargill** | **Vleggaar et al.¹** |
| **Atom** | δ_{C} | δ_{C} |
| 2 | 126.1 | 126.03 |
| 3 | * | 110.31 |
| 4 | 120.4 | 120.46 |
| 5 | 120.2 | 120.25 |
| 6 | 122.8 | 122.74 |
| 7 | 112.8 | 112.79 |
| 8 | * | 137.06 |
| 9 | * | 129.23 |
| 10a | 36.4 | 36.53 |
| 12 | 39.5 | 39.31 |
| 13 | 54.9 | 54.89 |
| 14 | * | 175.30 |
| 15 | * | 181.18 |

| | | |
|---|---|---|
| ¹ Vleggaar *et al. (J.C.S. Perkin Trans.* 1:3095-8, 1992). | | |

Polarimetry. The optical rotation was measured on a Rudolph Autopol III polarimeter. The monatin was prepared as a 14.6 mg/mL solution in water. The expected specific rotation ([α]_{D}²⁰) for S,S monatin (salt form) is -49.6 for a 1 g/mL solution in water (Vleggaar *et al).* The observed [α]_{D}²⁰ was -28.1 for the purified, enzymatically produced monatin indicating that it was the S, S stereoisomer.

### Improvements

The reaction conditions, including reagent and enzyme concentrations, were optimized and yields of 5-10 mg/mL were produced using the following reagent mix: 50 mM ammonium acetate pH 8.3, 2 mM MgCl₂, 200 mM pyruvate (sodium or ammonium salt), 5 mM alpha-ketoglutarate (sodium salt), 0.05 mM pyridoxal phosphate, deaerated water to achieve a final volume of 1 mL after the addition of the enzymes, 3 mM potassium phosphate, 50 µg/mL of recombinant ProA aldolase (cell extract; total protein concentration of 167 µg/mL), 1000 µg/mL of L-aspartate aminotransferase encoded by the *E*. *coli aspC* gene (cell extract; total protein concentration of 2500 µg/mL), and solid tryptophan to afford a concentration of > 60 mM (saturated; some undissolved throughout the reaction). The mixture was incubated at 30°C for 4 hours with gentle stirring or mixing.

### Substitutions

The concentration of alpha-ketoglutarate can be reduced to 1 mM and supplemented with 9 mM aspartate with an equivalent yield of monatin. Alternative amino acid acceptors can be utilized in the first step, such as oxaloacetate.

When recombinant *L. major* broad substrate aminotransferase was used in place of the *E. coli* L-aspartate aminotransferase, similar yields of monatin were achieved. However, a second unidentified product (3-10% of the major product) with a molecular mass of 292 was also detected by LC-MS analysis. Monatin concentrations of 0.1-0.5 mg/mL were produced when the *E. coli tyrB* encoded enzyme, the *S*. *meliloti tat A* encoded enzyme or the glutamic-oxaloacetic transaminase from pig heart (type IIa) was added as the aminotransferase. When starting the reaction from indole-3-pyruvate, a reductive amination can be done for the last step with glutamate dehydrogenase and NADH (as in Example 7).

The KHG aldolases from *B. subtilis, E. coli,* and *S. meliloti* were also used with the *E. coli* L-aspartate aminotransferase to produce monatin enzymatically. The following reaction conditions were used: 50 mM NH₄-OAc pH 8.3, 2 mM MgCl₂, 200 mM pyruvate, 5 mM glutamate, 0.05 mM pyridoxal phosphate, deaerated water to achieve a final volume of 0.5 mL after the addition of the enzymes, 3 mM potassium phosphate, 20 µg/mL of recombinant *B. subtilis* KHG aldolase (purified), ca. 400 µg/mL of *E. coli* L-aspartate aminotransferase (AspC) unpurified from cell extract, and 12 mM indole-3-pyruvate. The reactions were incubated at 30°C for 30 minutes with shaking. The amount of monatin produced using the *B. subtilis* enzyme was 80 ng/mL, and increased with increasing amounts of aldolase. If indole-3-pyruvate and glutamate were replaced by saturating amounts of tryptophan and 5 mM alpha-ketoglutarate, the production of monatin was increased to 360 ng/mL. Reactions were repeated with 30 µg/mL of each of the three KHG enzymes in 50 mM Tris pH 8.3, with saturating amounts of tryptophan, and were allowed to proceed for an hour in order to increase detection. The *Bacillus* enzyme had the highest activity as in Example 4, producing approximately 4000 ng/mL monatin. The *E. coli* KHG produced 3000 ng/mL monatin, and the S. *meliloti* enzyme produced 2300 ng/mL.

### EXAMPLE 7

### Interconversion between MP and Monatin

The amination of MP to form monatin can be catalyzed by aminotransferases such as those identified in Examples 1 and 6, or by dehydrogenases that require a reducing cofactor such as NADH or NADPH. These reactions are reversible and can be measured in either direction. The directionality, when using a dehydrogenase enzyme, can be largely controlled by the concentration of ammonium salts.

**Dehydrogenase activity**. The oxidative deamination of monatin was monitored by following the increase in absorbance at 340 nm as NAD(P)+ was converted to the more chromophoric NAD(P)H. Monatin was enzymatically produced and purified as described in Example 6.

A typical assay mixture contained 50 mM Tris-HCl, pH 8.0 to 8.9, 0.33 mM NAD⁺ or NADP⁺, 2 to 22 units of glutamate dehydrogenase (Sigma), and 10-15 mM substrate in 0.2 mL. The assay was performed in duplicate in a LTV-transparent microtiter plate, on a Molecular Devices SpectraMax Plus platereader. A mix of the enzyme, buffer, and NAD(P)⁺ were pipetted into wells containing the substrate and the increase in absorbance at 340 nm was monitored at 10 second intervals after brief mixing. The reaction was incubated at 25°C for 10 minutes. Negative controls were carried out without the addition of substrate, and glutamate was utilized as a positive control. The type III glutamate dehydrogenase from bovine liver (Sigma # G-7882) catalyzed the conversion of the monatin to the monatin precursor at a rate of conversion approximately one-hundredth the rate of the conversion of glutamate to alpha-ketoglutarate.

**Transamination activity.** Monatin aminotransferase assays were conducted with the aspartate aminotransferase (AspC) from *E*. *coli,* the tyrosine aminotransferase (TyrB) from *E*. *coli,* the broad substrate aminotransferase (BSAT) from *L. major,* and the two commercially available porcine glutamate-oxaloacetate aminotransferases described in Example 1. Both oxaloacetate and alpha-ketoglutarate were tested as the amino acceptor. The assay mixture contained (in 0.5 mL) 50 mM Tris-HCl, pH 8.0, 0.05 mM PLP, 5 mM amino acceptor, 5 mM monatin, and 25 µg of aminotransferase. The assays were incubated at 30°C for 30 minutes, and the reactions were stopped by addition of 0.5 mL isopropyl alcohol. The loss of monatin was monitored by LC/MS (Example 10). The highest amount of activity was noted with *L. major* BSAT with oxaloacetate as the amino acceptor, followed by the same enzyme with alpha-ketoglutarate as the amino acceptor. The relative activity with oxaloacetate was: BSAT > AspC > porcine type IIa > porcine type I =TyrB. The relative activity with alpha-ketoglutarate was: BSAT > AspC > porcine type I > porcine type IIa > TyrB.

### EXAMPLE 8

### Production of Monatin from Tryptophan and C3 Sources Other than Pyruvate

As described above in Example 6, indole-3-pyruvate or tryptophan can be converted to monatin using pyruvate as the C3 molecule. However, in some circumstances, pyruvate may not be a desirable raw material. For example, pyruvate may be more expensive than other C3 carbon sources, or may have adverse effects on fermentations if added to the medium. Alanine can be transaminated by many PLP-enzymes to produce pyruvate.

Tryptophanase-like enzymes perform beta-elimination reactions at faster rates than other PLP enzymes such as aminotransferases. Enzymes from this class (4.1.99.-) can produce ammonia and pyruvate from amino acids such as L-serine, L-cysteine, and derivatives of serine and cysteine with good leaving groups such as O-methyl-L-serine, O-benzyl-L-serine, S-methylcysteine, S-benzylcysteine, S-alkyl-L-cysteine, O-acyl-L-serine, 3-chloro-L-alanine.

Processes to produce monatin using EC 4.1.99.- polypeptides can be improved by mutating the β-tyrosinase (TPL) or tryptophanase according to the method of Mouratou *et al. (J. Biol. Chem* 274:1320-5, 1999). Mouratou *et al.* describe the ability to covert the β-tyrosinase into a dicarboxylic amino acid β-lyase, which has not been reported to occur in nature. The change in specificity was accomplished by converting valine (V) 283 to arginine (R) and arginine (R) 100 to threonine (T).
These amino acid changes allow for the lyase to accept a dicarboxylic amino acid for the hydrolytic deamination reaction (such as aspartate). Aspartate, therefore, can also be used as a source of pyruvate for subsequent aldol condensation reactions.

Additionally, cells or enzymatic reactors can be supplied with lactate and an enzyme that converts lactate to pyruvate. Examples of enzymes capable of catalyzing this reaction include lactate dehydrogenase and lactate oxidase.

The reaction mixture consisted of 50 mM Tris-Cl pH 8.3, 2 mM MgCl₂, 200 mM C3 carbon source, 5 mM alpha-ketoglutarate, sodium salt, 0.05 mM pyridoxal phosphate, deaerated water to achieve a final volume of 0.5 mL after the addition of the enzymes, 3 mM potassium phosphate pH 7.5, 25 µg of crude recombinant C. *testosteroni* ProA aldolase as prepared as in Example 4, 500 µg of crude L-aspartate aminotransferase (AspC) as prepared in Example 1, and solid tryptophan to afford a concentration of > 60 mM (saturated; some undissolved throughout the reaction). The reaction mix was incubated at 30°C for 30 minutes with mixing. Serine, alanine, and aspartate were supplied as 3-carbon sources. Assays were performed with and without secondary PLP enzymes (purified) capable of performing beta-elimination and beta-lyase reactions (tryptophanase (TNA), double mutant tryptophanase, β-tyrosinase (TPL)). The results are shown in Table 3:

**TABLE 3**

| Production of monatin utilizing alternative C3-carbon sources | | |
|---|---|---|
| **C3-carbon source** | **Additional PLP** | **Relative Activity** |
| | **Enzyme** | |
| none | None | 0% |
| pyruvate | None | 100% |
| serine | None | 3% |
| serine | 11 µg wildtype TNA (1 U) | 5.1% |
| serine | 80 µg double mutant TNA | 4.6% |
| alanine | None | 32% |
| alanine | 11 µg wildtype TNA | 41.7% |
| alanine | 80 µg mutant TNA | 43.9% |
| aspartate | 110 µg wildtype TNA (10 U) | 7.7% |
| aspartate | 5 U wildtype TPL (crude) | 5.1% |
| aspartate | 80 µg mutant TNA | 3.3% |

The monatin produced from alanine and serine as 3-carbon sources was verified by LC/MS/MS daughter scan analysis, and was identical to the characterized monatin produced in Example 6. Alanine was the best alternative tested, and was transaminated by the AspC enzyme. The amount of monatin produced was increased by addition of the tryptophanase, which is capable of transamination as a secondary activity. The amount of monatin produced with serine as a carbon source nearly doubled with the addition of the tryptophanase enzymes, even though only one-fifth of the amount of tryptophanase was added in comparison to the aminotransferase. AspC is capable of some amount of beta-elimination activity alone. The results with aspartate indicate that the tryptophanase activity on aspartate does not increase with the same site-directed mutations as previously suggested for β-tyrosinase. It is expected that the mutant β-tyrosinase will have higher activity for production of monatin.

### EXAMPLE 9

### Chemical Synthesis of Monatin

The addition of alanine to indole-3-pyruvic acid produces monatin, and this reaction can be performed synthetically with a Grignard or organolithium reagent.

For example, to 3-chloro- or 3-bromo-alanine which has been appropriately blocked at the carboxyl and amino groups, is added magnesium under anhydrous conditions. Indole-3-pyruvate (appropriately blocked) is then added to form the coupled product followed by removal of the protecting groups to form monatin. Protecting groups that are particularly useful include THP (tetrahydropyranyl ether) which is easily attached and removed.

### EXAMPLE 10

### Detection of Tryptophan, Monatin, and MP

This example describes methods used to detect the presence of monatin, or its precursor 2-hydroxy 2-(indol-3-ylmethyl)-4-keto glutaric acid.

### LC/MS Analysis

Analyses of mixtures for monatin, MP, and/or tryptophan derived from *in vitro* or *in vivo* biochemical reactions were performed using a Waters/Micromass liquid chromatography-tandem mass spectrometry (LC/MS/MS) instrument including a Waters 2690 liquid chromatograph with a Waters 996 Photo-Diode Array (PDA) absorbance monitor placed in series between the chromatograph and a Micromass Quattro Ultima triple quadrupole mass spectrometer. LC separations were made using a Supelco Discovery C₁₈ reversed-phase chromatography column, 2.1mm x 150 mm, or an Xterra MS C₈ reversed-phase chromatography column, 2.1mm x 250 mm, at room temperature. The LC mobile phase consisted of A) water containing 0.05% (v/v) trifluoroacetic acid and B) methanol containing 0.05% (v/v) trifluoroacetic acid.

The gradient elution was linear from 5% B to 35% B, 0-9 min, linear from 35% B to 90% B, 9-16 min, isocratic at 90% B, 16-20 min, linear from 90% B to 5% B, 20-22 min, with a 10 min re-equilibration period between runs. The flow rate was 0.25 mL/min, and PDA absorbance was monitored from 200 nm to 400 nm. All parameters of the ESI-MS were optimized and selected based on generation of protonated molecular ions ([M + H]⁺) of the analytes of interest, and production of characteristic fragment ions.

The following instrumental parameters were used for LC/MS analysis of monatin: Capillary: 3.5 kV; Cone: 40 V; Hex 1: 20 V; Aperture: 0 V; Hex 2: 0 V; Source temperature: 100°C; Desolvation temperature: 350°C; Desolvation gas: 500 L/h; Cone gas: 50 L/h; Low mass resolution (Q1): 15.0; High mass resolution (Q1): 15.0; Ion energy: 0.2; Entrance: 50V; Collision Energy: 2; Exit: 50V; Low mass resolution (Q2): 15; High mass resolution (Q2): 15; Ion energy (Q2): 3.5; Multiplier: 650. Uncertainties for reported mass/charge ratios *(mlz)* and molecular masses are ± 0.01%. Initial detection of the alpha-keto acid form of monatin (MP) and monatin in the mixtures was accomplished by LC/MS monitoring with collection of mass spectra for the region *m*/*z* 150-400. Selected ion chromatograms for protonated molecular ions ([M + H]⁺ = 292 for MP, [M + H]⁺ = 293 for monatin) allowed direct identification of these analytes in the mixtures.

### MS/MS Analysis

LC/MS/MS daughter ion experiments were performed on monatin as follows. A daughter ion analysis involves transmission of the parent ion (e.g., *m*/*z* = 293 for monatin) of interest from the first mass analyzer (Q1) into the collision cell of the mass spectrometer, where argon is introduced and chemically dissociates the parent into fragment (daughter) ions. These fragment ions are then detected with the second mass analyzer (Q2), and can be used to corroborate the structural assignment of the parent. Tryptophan was characterized and quantified in the same way via transfmission and fragmentation of *m*/*z* = 205.

The following instrumental parameters were used for LC/MS/MS analysis of monatin: Capillary: 3.5 kV; Cone: 40 V; Hex 1: 20 V; Aperture: 0 V; Hex 2: 0 V; Source temperature: 100 °C; Desolvation temperature: 350 °C; Desolvation gas: 500 L/h; Cone gas: 50 L/h; Low mass resolution (Q1): 13.0; High mass resolution (Q1): 13.0; Ion energy: 0.2; Entrance: -5 V; Collision Energy: 14; Exit: 1V; Low mass resolution (Q2): 15; High mass resolution (Q2): 15; Ion energy (Q2): 3.5; Multiplier: 650.

### High-Throughput Determination of Monatin and Tryptophan

High-throughput analyses (< 5 min/sample) of mixtures for monatin and tryptophan derived from *in vitro* or *in vivo* reactions were carried out using instrumentation described above, and the same parameters as described for LC/MS/MS. LC separations were made using a 4.6 mm x 50 mm Advanced Separation Technologies Chirobiotic T column at room temperature. The LC mobile phase consisted of A) water containing 0.25% acetic acid; B) Methanol containing 0.25% acetic acid. The isocratic elution was at 50% B, 0-5 min. The flow rate was 0.6 mL/min. All parameters of the ESI-MS/MS system were optimized and selected based on optimal in-source generation of the protonated molecular ion of tryptophan and the internal standard ²H₅-tryptophan, as well as collision-induced production of amino acid-specific fragment ions for multiple reaction monitoring (MRM) experiments. The following instrumental parameters were used for LC/MS/MS analysis of monatin and tryptophan in the positive ion multiple reaction monitoring (mrm) mode: Capillary: 3.5 kV; Cone: 20 V; Hex 1: 15 V; Aperture: 1 V; Hex 2: 0 V; Source temperature: 100 °C; Desolvation temperature: 350 °C; Desolvation gas: 500 L/h; Cone gas: 40 L/h; Low mass resolution (Q1): 12.0; High mass resolution (Q1): 12.0; Ion energy: 0.2; Entrance: - 5 V; Collision Energy: 14; Exit: 1 V; Low mass resolution (Q2): 15; High mass resolution (Q2): 15; Ion energy (Q2): 0.5; Multiplier: 650. MRM parameters: Interchannel delay: 0.03 s; Interscan delay: 0.03 s; Dwell: 0.05 s.

### Accurate Mass Measurement of Monatin.

High resolution MS analysis was carried out using an Applied Biosystems-Perkin Elmer Q-Star hybrid quadrupole/time-of flight mass spectrometer. The measured mass for protonated monatin used tryptophan as an internal mass calibration standard. The calculated mass of protonated monatin, based on the elemental composition C₁₄H₁₇N₂O₅ is 293.1137. Monatin produced using the biocatalytic process described in Example A showed a measured mass of 293.1144. This is a mass measurement error of less than 2 parts per million (ppm), providing conclusive evidence of the elemental composition of monatin produced enzymatically.

### EXAMPLE 11

### Production of Monatin in Bacteria

This example describes methods used to produce monatin in *E*. *coli* cells. One skilled in the art will understand that similar methods can be used to produce monatin in other bacterial cells. In addition, vectors containing other genes in the monatin synthesis pathway (FIG. 2) can be used.

Trp-1 + glucose medium, a minimal medium that has been used for increased production of tryptophan in *E. coli* cells *(Zeman et al. Folia Microbiol.* 35:200-4, 1990), was prepared as follows. To 700 mL nanopure water the following reagents were added: 2 g (NH₄)₂SO₄, 13.6 g KH₂PO₄, 0.2 g MgSO_{4*}7H₂O₂, 0.01 g CaCl_{2*}2H₂O, and 0.5 mg FeSO_{4*}7H₂O. The pH was adjusted to 7.0, the volume was increased to 850 mL, and the medium was autoclaved. A 50% glucose solution was prepared separately, and sterile-filtered. Forty mL was added to the base medium (850 mL) for a 1 L final volume.

A 10 g/L L-tryptophan solution was prepared in 0.1 M sodium phosphate pH 7, and sterile-filtered. One-tenth volume was typically added to cultures as specified below. A 10% sodium pyruvate solution was also prepared and sterile-filtered. A 10 mL aliquot was typically used per liter of culture. Stocks of ampicillin (100 mg/mL), kanamycin (25 mg/mL) and IPTG (840 mM) were prepared, sterile-filtered, and stored at -20°C before use. Tween 20 (polyoxyethylene 20-Sorbitan monolaurate) was utilized at a 0.2% (vol/vol) final concentration. Ampicillin was used at non-lethal concentrations, typically 1-10 µg/mL final concentration.

Fresh plates of *E. coli* BL21(DE3)::*C*. *testosteroni proAl*pET 30 Xa/LIC (described in Example 4) were prepared on LB medium containing 50 µg/mL kanamycin. Overnight cultures (5 mL) were inoculated from a single colony and grown at 30°C in LB medium with kanamycin. Typically a 1 to 50 inoculum was used for induction in trp-1 + glucose medium. Fresh antibiotic was added to a final concentration of 50 mg/L. Shake flasks were grown at 37°C prior to induction.

Cells were sampled every hour until an OD₆₀₀ of 0.35-0.8 was obtained. Cells were then induced with 0.1 mM IPTG, and the temperature reduced to 34 °C. Samples (1 ml) were collected prior to induction (zero time point) and centrifuged at 5000 x g. The supernatant was frozen at -20°C for LC/MS analysis. Four hours post-induction, another 1 mL sample was collected, and centrifuged to separate the broth from the cell pellet. Tryptophan, sodium pyruvate, ampicillin, and Tween were added as described above.

The cells were grown for 48 hours post-induction, and another 1 mL sample was taken and prepared as above. At 48 hours, another aliquot of tryptophan and pyruvate were added. The entire culture volume was centrifuged after approximately 70 hours of growth (post-induction), for 20 minutes at 4°C and 3500 rpm. The supernatant was decanted and both the broth and the cells were frozen at -80°C. The broth fractions were filtered and analyzed by LC/MS. The heights and areas of the [M+H]⁺ = 293 peaks were monitored as described in Example 10. The background level of the medium was subtracted. The data was also normalized for cell growth by plotting the height of the [M+H]⁺ = 293 peak divided by the optical density of the culture at 600 nm.

Higher levels of monatin were produced when pyruvate, ampicillin, and Tween were added 4 hours post induction rather than at induction. Other additives such as PLP, additional phosphate, or additional MgCl₂ did not increase the production of monatin. Higher titers of monatin were obtained when tryptophan was utilized instead of indole-3-pyruvate, and when the tryptophan was added post-induction rather than at inoculation, or at induction. Prior to induction, and 4 hours post-induction (at time of substrate addition), there was typically no detectable level of monatin in the fermentation broth or cellular extracts. Negative controls were done utilizing cells with pET30a vector only, as well as cultures where tryptophan and pyruvate were not added. A parent MS scan demonstrated that the compound with (m+1)/z = 293 was not derived from larger molecules, and daughter scans (performed as in Example 10) were similar to monatin made *in vitro.*

The effect of Tween was studied by utilizing 0, 0.2% (vol/vol), and 0.6% final concentrations of Tween-20. The highest amount of monatin produced by shake flasks was at 0.2% Tween. The ampicillin concentration was varied between 0 and 10 µg/mL. The amount of monatin in the cellular broth increased rapidly (2.5 X) between 0 and 1 µg/mL, and increased 1.3 X when the ampicillin concentration was increased from 1 to 10 µg/mL.

A time course experiment showing typical results is shown in FIG. 10. The amount of monatin secreted into the cell broth increased, even when the values are normalized for cell growth. By using the molar extinction coefficient of tryptophan, the amount of monatin in the broth was estimated to be less than 10 µg/mL. The same experiment was repeated with the cells containing vector without *proA* insert. Many of the numbers were negative, indicating the peak height at m/z=293 was less in these cultures than in the medium alone (FIG. 10). The numbers were consistently lower when tryptophan and pyruvate were absent, demonstrating that monatin production is a result of an enzymatic reaction catalyzed by the aldolase enzyme.

The *in vivo* production of monatin in bacterial cells was repeated in 800 mL shake flask experiments and in fermentors. A 250 mL sample of monatin (in cell-free broth) was purified by anion exchange chromatography and preparative reverse-phase liquid chromatography. This sample was evaporated, and submitted for high resolution mass analysis (described in Example 6). The high resolution MS indicated that the metabolite being produced is monatin.

*In vitro* assays indicate that aminotransferase needs to be present at higher levels than aldolase (see Example 6), therefore the aspartate aminotransferase from *E. coli* was overexpressed in combination with the aldolase gene to increase the amount of monatin produced. Primers were designed to introduce *C*. *testosteroni proA* into an operon with *aspC*/pET30 Xa/LIC, as follows: 5' primer: ACTCGGATCCGAAGGAGATATACATATGTACGAACTGGGACT (SEQ ID NO: 67) and 3' primer: CGGCTGTCGACCGTTAGTCAATATATTTCAGGC (SEQ ID NO: 68). The 5' primer contains a BamHI site, the 3' primer contains a SalI site for cloning. PCR was performed as described in Example 4, and gel purified. The *aspC*/pET30 Xa/LIC construct was digested with BamHI and Sall, as was the PCR product. The digests were purified using a Qiagen spin column. The *proA* PCR product was ligated to the vector using the Roche Rapid DNA Ligation kit (Indianapolis, IN) according to manufacturer's instructions. Chemical transformations were done using Novablues Singles (Novagen) as described in Example 1. Colonies were grown up in LB medium containing 50 mg/L kanamycin and plasmid DNA was purified using the Qiagen spin miniprep kit. Clones were screened by restriction digest analysis and sequence was confirmed by Seqwright (Houston, TX). Constructs were subcloned into BLR(DE3), BLR(DE3)pLysS, BL21 (DE3) and BL21(DE3)pLysS (Novagen). The *proA*/pET30 Xa/LIC construct was also transformed into BL21(DE3)pLysS.

Initial comparisons of BLR(DE3) shake flask samples under the standard conditions described above demonstrated that the addition of the second gene *(aspC)* improved the amount of monatin produced by seven-fold. To hasten growth, BL21 (DE3)-derived host strains were used. The *proA* clones and the two gene operon clones were induced in Trp-1 medium as above, the pLysS hosts had chloramphenicol (34 mg/L) added to the medium as well. Shake flask experiments were performed with and without the addition of 0.2% Tween-20 and 1 mg/L ampicillin. The amount of monatin in the broth was calculated using *in vitro* produced purified monatin as a standard. SRM analyses were performed as described in Example 10. Cells were sampled at zero, 4 hours, 24 hours, 48 hours, 72 hours, and 96 hours of growth.

The results are shown in Table 4 for the maximum amounts produced in the culture broths. In most instances, the two gene construct gave higher values than the *proA* construct alone. The pLysS strains, which should have leakier cell envelopes, had higher levels of monatin secreted, even though these strains typically grow at a slower rate. The additions of Tween and ampicillin were beneficial.

**Table 4**

| Amount of Monatin Produced by *E. coli* Bacteria | | | | |
|---|---|---|---|---|
| **Construct** | **Host** | **Tween + Amp** | **µg/mL monatin** | **time** |
| *proA* | BL21(DE3) | - | 0.41 | 72 hr |
| *proA* | BL21(DE3) | + | 1.58 | 48 hr |
| *proA* | BL21(DE3)pLysS | - | 1.04 | 48 hr |
| *proA* | BL21(DE3)pLysS | + | 1.60 | 48 hr |
| *aspC: proA* | BL21(DE3) | - | 0.09 | 48 hr |
| *aspC:proA* | BL21(DE3) | + | 0.58 | 48 hr |
| *aspC:proA* | BL21(DE3)pLysS | - | 1.39 | 48 hr |
| *aspC:proA* | BL21(DE3)pLysS | + | 6.68 | 48 hr |

### EXAMPLE 12

### Production of Monatin in Yeast

This example describes methods used to produce monatin in eukaryotic cells. One skilled in the art will understand that similar methods can be used to produce monatin in any cell of interest. In addition, other genes can be used (e.g., those listed in FIG. 2) in addition to, or alternatively to those described in this example.

The pESC Yeast Epitope Tagging Vector System (Stratagene, La Jolla, CA) was used to clone and express the *E. coli aspC* and *C*. *testosteroni proA* genes into *Saccharomyces cerevisiae.* The pESC vectors contain both the GAL1 and the GAL10 promoters on opposite strands, with two distinct multiple cloning sites, allowing for expression of two genes at the same time. The pESC-His vector also contains the *His3* gene for complementation of histidine auxotrophy in the host (YPH500). The GAL1 and GAL10 promoters are repressed by glucose and induced by galactose; a Kozak sequence is utilized for optimal expression in yeast. The pESC plasmids are shuttle vectors, allowing the initial construct to be made in *E. coli* (with the *bla* gene for selection); however, no bacterial ribosome binding sites are present in the multiple cloning sites.

The following primers were designed for cloning into pESC-His (restriction sites are underlined, Kozak sequence is in bold): *aspC (Bam*HI/*Sal*I*),* GAL1: 5'-CGCGGATCC**ATAATGG**TTGAGAACATTACCG-3 ' (SEQ ID NO: 69) and 5'-ACGCGTCGACTTACAGCACTGCCACAATCG-3'(SEQ ID NO: 70). *proA* (*Eco*RI/*Not*I)*,* GAL10: 5'-CCGGAATTC**ATAATGG**TCGAACTGGGAGTTGT -3' (SEQ ID NO: 71) and 5'-GAATGCGGCCGCTTAGTCAATATATTTCAGGCC-3' (SEQ ID NO: 72).

The second codon for both mature proteins was changed from an aromatic amino acid to valine due to the introduction of the Kozak sequence. The genes of interest were amplified using pET30 Xa/LIC miniprep DNA from the clones described in Examples 1 and Example 4 as template. PCR was performed using an Eppendorf Master cycler gradient thermocycler and the following protocol for a 50 µL reaction: 1.0 µL template, 1.0 µM of each primer, 0.4 mM each dNTP, 3.5 U Expand High Fidelity Polymerase (Roche, Indianapolis, IN), and 1X Expand^{™} buffer with Mg. The thermocycler program used consisted of a hot start at 94°C for 5 minutes, followed by 29 repetitions of the following steps: 94°C for 30 seconds, 50°C for 1 minute 45 seconds, and 72°C for 2 minutes 15 seconds. After the 29 repetitions the sample was maintained at 72°C for 10 minutes and then stored at 4°C. The PCR products were purified by separation on a 1% TAE-agarose gel followed by recovery using a QIAquick Gel Extraction Kit (Qiagen, Valencia, CA).

The pESC-His vector DNA (2.7 µg) was digested with *BamHI*/*SalI* and gel-purified as above. The *aspC* PCR product was digested with *Bam*HI*lSal*I and purified with a QIAquick PCR Purification Column. Ligations were performed with the Roche Rapid DNA Ligation Kit following the manufacturer's protocols. Desalted ligations were electroporated into 40 µl Electromax DH10B competent cells (Invitrogen) in a 0.2 cm Biorad disposable cuvette using a Biorad Gene Pulser II with pulse controller plus, according to the manufacturer's instructions. After 1 hour of recovery in 1 mL of SOC medium, the transformants were plated on LB medium containing 100 µg/mL ampicillin. Plasmid DNA preparations for clones were done using QIAprep Spin Miniprep Kits. Plasmid DNA was screened by restriction digest, and sequenced (Seqwright) for verification using primers designed for the vector.

The *aspC* /pESC-His clone was digested with *Eco*RI and *Not*I*,* as was the *proA* PCR product. DNA was purified as above, and ligated as above. The two gene construct was transformed into DH10B cells and screened by restriction digest and DNA sequencing.

The construct was transformed into *S*. *cerevisiae* strain YPH500 using the S.c. EasyComp^{™} Transformation Kit (Invitrogen). Transformation reactions were plated on SC-His minimal medium (Invitrogen pYES2 manual) containing 2% glucose. Individual yeast colonies were screened for the presence of the *proA* and *aspC* genes by colony PCR using the PCR primers above. Pelleted cells (2 µl) were suspended in 20 µL of Y-Lysis Buffer (Zymo Research) containing 1 µl of zymolase and heated at 37°C for 10 minutes. Four µL of this suspension was then used in a 50 µL PCR reaction using the PCR reaction mixture and program described above.

Five mL cultures were grown overnight on SC-His + glucose at 30°C and 225 rpm. The cells were gradually adjusted to growth on raffinose in order to minimize the lag period prior to induction with galactose. After approximately 12 hours of growth, absorbance measurements at 600 nm were taken, and an appropriate volume of cells was spun down and resuspended to give an OD of 0.4 in the fresh SC-His medium. The following carbon sources were used sequentially: 1% raffinose + 1 % glucose, 0.5% glucose + 1.5% raffinose, 2% raffinose, and finally 1% raffinose + 2% galactose for induction.

After approximately 16 hours of growth in induction medium, the 50 mL cultures were divided into duplicate 25 mL cultures, and the following were added to only one of the duplicates: (final concentrations) 1 g/L L-tryptophan, 5 mM sodium phosphate pH 7.1, 1g/L sodium pyruvate, 1 mM MgCl₂. Samples of broths and cell pellets from the non-induction medium, and from the 16 hour cultures prior to addition of substrates for the monatin pathway, were saved as negative controls. In addition, constructs containing only a functional *aspC* gene (and a truncated *proA* gene) were utilized as another negative control. The cells were allowed to grow for a total of 69 hours post-induction. Occasionally the yeast cells were induced at a lower OD, and only grown for 4 hours prior to addition of tryptophan and pyruvate. However, these monatin substrates appear to inhibit growth and the addition at higher OD was more effective.

The cell pellets from the cultures were lysed with 5 mL of YeastBuster^{™} + 50 µl THP (Novagen) per gram (wet weight) of cells following manufacturer's protocols, with the addition of protease inhibitors and benzonase nuclease as described in previous examples. The culture broth and cell extracts were filtered and analyzed by SRM as described in Example 10. Using this method, no monatin was detected in the broth samples, indicating that the cells could not secrete monatin under these conditions. The proton motive force may be insufficient under these conditions or the general amino acid transporters may be saturated with tryptophan. Protein expression was not at a level that allowed for detection of changes using SDS-PAGE.

Monatin was detectable (approximately 60 ng/mL) transiently in cell extracts of the culture with two functional genes, when tryptophan and pyruvate were added to the medium. Monatin was not detected in any of the negative control cell extracts. *In vitro* assays for monatin were performed in duplicate with 4.4 mg/mL of total protein (about double what is typically used for *E. coli* cell extracts) using the optimized assay described in Example 6. Other assays were performed with the addition of either 32 µg/mL *C*. *testosteroni* ProA aldolase or 400 µg/mL AspC aminotransferase, to determine which enzyme was limiting in the cell extract. Negative controls were performed with no addition of enzyme, or the addition of only AspC aminotransferase (the aldol condensation can occur to some extent without enzyme). Positive controls were performed with partially pure enzymes (30-40%), using 16 µg/mL aldolase and 400 µg/mL aminotransferase.

*In vitro* results were analyzed by SRM. The analysis of cell extracts showed that tryptophan was effectively transported into the cells when it was added to the medium post-induction, resulting in tryptophan levels two orders of magnitude higher than those in which no additional tryptophan was added. The results for *in vitro* monatin analysis are shown in Table 5 (numbers indicate ng/mL).

**Table 5**

| Monatin production with yeast cell extracts | | | | | | |
|---|---|---|---|---|---|---|
| | ***aspC* construct** | **+ aldolase** | **+ AspC** | **two-gene construct** | **+ aldolase** | **+ AspC** |
| repressed (glucose medium) | 0 | 888.3 | 173.5 | 0 | 465.2 | 829 |
| 24 hr induced | 0 | 2832.8 | 642.4 | 0 | 1375.6 | 9146.6 |
| 69 hr induced | 0 | 4937.3 | 340.3 | 71.9 | 1652.8 | 23693.5 |
| 69 hr + subs. | 0 | 556.9 | 659.1 | 21.9 | 755.6 | 16688.2 |
| + control (purified enzymes) | 21853 | | | 21853 | | |
| -control (no enzymes) | 0 | | 254.3 | 0 | | 254.3 |

Positive results were obtained with the full two-gene construct cell extracts with and without substrate added to the growth medium. These results, in comparison to the positive controls, indicate that the enzymes were expressed at levels of close to 1% of the total protein in yeast. The amount of monatin produced when the cell extract of the *aspC* construct (with truncated *proA)* was assayed with aldolase was significantly greater than when cell extracts were assayed alone, and indicates that the recombinant AspC aminotransferase comprises approximately 1-2% of the yeast total protein. The cell extracts of uninduced cultures had a small amount of activity when assayed with aldolase due to the presence of native aminotransferases in the cells. When assayed with AspC aminotransferase, the activity of the extracts from uninduced cells increased to the amount of monatin produced by the negative control with AspC (ca. 200 ng/ml). In contrast, the activity observed when assaying the two gene construct cell extract increases more when aminotransferase is supplemented than when aldolase is added. Since both genes should be expressed at the same level, this indicates that the amount of monatin produced is maximized when the level of aminotransferase is higher than that of aldolase, in agreement with results shown in Example 6.

The addition of pyruvate and tryptophan not only inhibits cellular growth, but apparently inhibits protein expression as well. The addition of the pESC-Trp plasmid can be used to correct for tryptophan auxotrophy of the YPH500 host cells, to provide a means of supplying tryptophan with fewer effects on growth, expression, and secretion.

### EXAMPLE 13

### Improvement of Enzymatic Processes using Coupled Reactions

In theory, if no side reactions or degradation of substrates or intermediates occurs, the maximum amount of product formed from the enzymatic reaction illustrated in FIG. 1 is directly proportional to the equilibrium constants of each reaction, and the concentrations of tryptophan and pyruvate. Tryptophan is not a highly soluble substrate, and concentrations of pyruvate greater than 200 mM appear to have a negative effect on the yield (see Example 6).

Ideally, the concentration of monatin is maximized with respect to substrates, in order to decrease the cost of separation. Physical separations can be performed such that the monatin is removed from the reaction mixture, preventing the reverse reactions from occurring. The raw materials and catalysts can then be regenerated. Due to the similarity of monatin in size, charge, and hydrophobicity to several of the reagents and intermediates, physical separations will be difficult unless there is a high amount of affinity for monatin (such as an affinity chromatography technique). However, the monatin reactions can be coupled to other reactions such that the equilibrium of the system is shifted toward monatin production. The following are examples of processes for improving the yield of monatin obtained from tryptophan or indole-3-pyruvate.

### Coupled reactions using oxaloacetate decarboxylase (EC 4.1.1.3)

FIG. 11 is an illustration of the reaction. Tryptophan oxidase and catalase are utilized to drive the reaction in the direction of indole-3-pyruvate production. Catalase is used in excess such that hydrogen peroxide is not available to react in the reverse direction or to damage the enzymes or intermediates. Oxygen is regenerated during the catalase reaction. Alternatively, indole-3-pyruvate can be used as the substrate.

Aspartate is used as the amino donor for the amination of MP, and an aspartate aminotransferase is utilized. Ideally, an aminotransferase that has a low specificity for the tryptophan/indole-3-pyruvate reaction in comparison to the MP to monatin reaction is used so that the aspartate is not utilized to reaminate the indole-3-pyruvate. Oxaloacetate decarboxylase (from *Pseudomonas sp.)* can be added to convert the oxaloacetate to pyruvate and carbon dioxide. Since CO₂ is volatile, it is not available for reaction with the enzymes, decreasing or even preventing the reverse reactions. The pyruvate produced in this step can also be utilized in the aldol condensation reaction. Other decarboxylase enzymes can be used, and homologs are known to exist in *Actinobacillus actinomycetemcomitans, Aquifex aeolicus, Archaeoglobus fulgidus, Azotobacter vinelandii, Bacteroides fragilis,* several *Bordetella* species, *Campylobacter jejuni, Chlorobium tepidum, Chloroflexus aurantiacus, Enterococcus faecalis, Fusobacterium nucleatum, Klebsiella pneumoniae, Legionella pneumophila, Magnetococcus MC-1, Mannheimia haemolytica, Methylobacillus flagellatus KT, Pasteurella multocida* Pm70, *Petrotoga miotherma, Porphyromonas gingivalis,* several *Pseudomonas* species, several *Pyrococcus* species, *Rhodococcus,* several *Salmonella* species, several *Streptococcus* species, *Thermochromatium tepidum, Thermotoga maritima, Treponemapallidum,* and several *Vibrio* species.

Tryptophan aminotransferase assays were performed with the aspartate aminotransferase (AspC) from *E. coli,* the tyrosine aminotransferase (TyrB) from *E*. *coli,* the broad substrate aminotransferase (BSAT) from *L. major,* and the two commercially available porcine glutamate-oxaloacetate aminotransferases as described in Example 1. Both oxaloacetate and alpha-ketoglutarate were tested as the amino acceptor. The ratio of activity using monatin (Example 7) versus activity using tryptophan was compared, to determine which enzyme had the highest specificity for the monatin aminotransferase reaction. These results indicated that the enzyme with the highest specificity for the monatin reaction verses the tryptophan reaction is the Porcine type II-A glutamate-oxaloacetate aminotransferase, GOAT (Sigma G7005). This specificity was independent of which amino acceptor was utilized. Therefore, this enzyme was used in the coupled reactions with oxaloacetate decarboxylase.

A typical reaction starting from indole-3-pyruvate included (final concentrations) 50 mM Tris-Cl pH 7.3, 6 mM indole-3-pyruvate, 6 mM sodium pyruvate, 6 mM aspartate, 0.05 mM PLP, 3 mM potassium phosphate, 3 mM MgCl₂,25 µg/mL aminotransferase, 50 µg/mL *C*. *testosteroni* ProA aldolase, and 3 Units/mL of decarboxylase (Sigma 04878). The reactions were allowed to proceed for 1 hour at 26°C. In some cases, the decarboxylase was omitted or the aspartate was substituted with alpha-ketoglutarate (as negative controls). The aminotransferase enzymes described above were also tested in place of the GOAT to confirm earlier specificity experiments. Samples were filtered and analyzed by LC/MS as described in Example 10. The results demonstrate that the GOAT enzyme produced the highest amount of monatin per mg of protein, with the least amount of tryptophan produced as a byproduct. In addition, there was a 2-3 fold benefit from having the decarboxylase enzyme added. The *E*. *coli* AspC enzyme also produced large amounts of monatin in comparison to the other aminotransferases.

Monatin production was increased by: 1) periodically adding 2 mM additions of indole-pyruvate, pyruvate, and aspartate (every half hour to hour), 2) performing the reactions in an anaerobic environment or with degassed buffers, 3) allowing the reactions to proceed overnight, and 4) using freshly prepared decarboxylase that has not been freeze-thawed multiple times. The decarboxylase was inhibited by concentrations of pyruvate greater than 12 mM. At concentrations of indole-3-pyruvate higher than 4 mM, side reactions with indole-3-pyruvate were hastened. The amount of indole-3-pyruvate used in the reaction could be increased if the amount of aldolase was also increased. High levels of phosphate (50 mM) and aspartate (50 mM) were found to be inhibitory to the decarboxylase enzyme. The amount of decarboxylase enzyme added could be reduced to 0.5 U/mL with no decrease in monatin production in a one hour reaction. The amount of monatin produced increased when the temperature was increased from 26°C to 30°C and from 30°C to 37°C; however, at 37°C the side reactions of indole-3-pyruvate were also hastened. The amount of monatin produced increased with increasing pH from 7 to 7.3, and was relatively stable from pH 7.3-8.3.

A typical reaction starting with tryptophan included (final concentrations) 50 mM Tris-Cl pH 7.3, 20 mM tryptophan, 6 mM aspartate, 6 mM sodium pyruvate, 0.05 mM PLP, 3 mM potassium phosphate, 3 mM MgCl₂, 25 µg/mL aminotransferase, 50 µg/mL *C*. *testosteroni* ProA aldolase, 4 Units/mL of decarboxylase, 5-200 mU/mL L-amino acid oxidase (Sigma A-2805), 168 U/mL catalase (Sigma C-3515), and 0.008 mg FAD. Reactions were carried out for 30 minutes at 30°C. Improvement was observed with the addition of decarboxylase. The greatest amount of monatin was produced when 50 mU/mL of oxidase was used. Improvements were similar to those observed when indole-3-pyruvate was used as the substrate. In addition, the amount of monatin produced increased when 1) the tryptophan level was low (i.e., below the Kₘ of the aminotransferase enzyme and therefore unable to compete with MP in the active site), and 2) the ratio of oxidase to aldolase and aminotransferase was maintained at a level such that indole-3-pyruvate could not accumulate.

Whether starting with either indole-3-pyruvate or tryptophan, the amount of monatin produced in assays with incubation times of 1-2 hours increased when 2-4 times the amounts of all the enzymes were used while maintaining the same enzyme ratio. Using either substrate, concentrations of approximately 1 mg/mL of monatin were achieved. The amount of tryptophan produced if starting from indole-pyruvate was typically less than 20% of the amount of product, which shows the benefit of utilizing coupled reactions. With further optimization and control of the concentrations of intermediates and side reactions, the productivity and yield can be improved greatly.

### Coupled reactions using lysine epsilon aminotransferase (EC 2.6.1.36)

Lysine epsilon aminotransferase (L-Lysine 6-transaminase) is found in several organisms, including *Rhodococcus, Mycobacterium, Streptomyces, Nocardia, Flavobacterium, Candida utilis,* and *Streptomyces.* It is utilized by organisms as the first step in the production of some beta-lactam antibiotics (Rius and Demain, *J*. *Microbiol. Biotech.,* 7:95-100, 1997). This enzyme converts lysine to L-2-aminoadipate 6-semialdehyde (allysine), by a PLP-mediated transamination of the C-6 of lysine, utilizing alpha-ketoglutarate as the amino acceptor. Allysine is unstable and spontaneously undergoes an intramolecular dehydration to form 1-piperideine 6-carboxylate, a cyclic molecule. This effectively inhibits any reverse reaction from occuring. The reaction scheme is depicted in FIG. 12. An alternative enzyme, lysine-pyruvate 6-transaminase (EC 2.6.1.71), can also be used.

A typical reaction contained in 1 mL: 50 mM Tris-HCl pH 7.3, 20 mM indole-3-pyruvate, 0.05 mM PLP, 6 mM potassium phosphate pH 8, 2-50 mM sodium pyruvate, 1.5 mM MgCl₂, 50 mM lysine, 100 µg aminotransferase (lysine epsilon aminotransferase LAT-101, BioCatalytics Pasadena, CA), and 200 µg C. *testosteroni* ProA aldolase. The amount of monatin produced increased with increasing concentrations of pyruvate. The maximum amount using these reaction conditions (at 50 mM pyruvate) was 10-fold less than what was observed with coupled reactions using oxaloacetate decarboxylase (approximately 0.1 mg/mL).

A peak with [M+H]⁺ = 293 eluted at the expected time for monatin and the mass spectrum contained several of the same fragments observed with other enzymatic processes. A second peak with the correct mass to charge ratio (293) eluted slightly earlier than what is typically observed for the S,S monatin produced in Example 6, and may indicate the presence of another stereoisomer of monatin. Very little tryptophan was produced by this enzyme. However, there is likely some activity on pyruvate (producing alanine as a byproduct). Also, the enzyme is known to be unstable. Improvements can be made by performing directed evolution experiments to increase stability, reduce the activity with pyruvate, and increase the activity with MP. These reactions can also be coupled to L-amino acid oxidase/catalase as described above.

### Other coupled reactions

Another coupling reaction that can improve monatin yield from tryptophan or indole-pyruvate is shown in FIG. 13. Formate dehydrogenase (EC 1.2.1.2 or 1.2.1.43) is a common enzyme. Some formate dehydrogenases require NADH while others can utilize NADPH. Glutamate dehydrogenase catalyzed the interconversion between the monatin precursor and monatin in previous examples, using ammonium based buffers. The presence of ammonium formate and formate dehydrogenase is an efficient system for regeneration of cofactors, and the production of carbon dioxide is an efficient way to decrease the rate of the reverse reactions (Bommarius *et al., Biocatalysis* 10*:*37*,* 1994 and Galkin *et al. Appl. Environ. Microbiol.* 63:4651-6, 1997). In addition, large amounts of ammonium formate can be dissolved in the reaction buffer. The yield of monatin produced by glutamate dehydrogenase reactions (or similar reductive aminations) can be improved by the addition of formate dehydrogenase and ammonium formate.

Other processes can be used to drive the equilibrium toward monatin production. For instance, if aminopropane is utilized as the amino acid donor in the conversion of MP to monatin with an omega-amino acid aminotransferase (EC 2.6.1.18) such as those described by in US patents 5,360,724 and 5,300,437, one of the resulting products would be acetone, a more volatile product than the substrate, aminopropane. The temperature can be raised periodically for short periods to flash off the acetone, thereby alleviating equilibrium. Acetone has a boiling point of 47°C, a temperature not likely to degrade the intermediates if used for short periods of time. Most aminotransferases that have activity on alpha-ketoglutarate also have activity on the monatin precursor. Similarly, if a glyoxylate/aromatic acid aminotransferase (EC 2.6.1.60) is used with glycine as the amino donor, glyoxylate is produced which is relatively unstable and has a highly reduced boiling point in comparison to glycine.

### EXAMPLE 14

A strawberry flavored chewing gum composition is prepared using the ingredients listed in Table 6. The R,R stereoisomer of monatin can be substituted for the acesulfame K and the S,S stereoisomer of monatin.

**TABLE 6**

| **Ingredient** | **% (by weight)** |
|---|---|
| Gum Base | 20 |
| Glycerin | 3 |
| Glucose | 8 |
| Lecithin | 0.5 |
| Strawberry fruit flavoring | 1 |
| Red colorant | 0.07 |
| Sugar | 47.13 |
| Inulin or polydextrin filler | 19.65 |
| Acesulfame K | 0.15 |
| S,S monatin | 0.5 |
| Total | 100.00 |

The gum base is 30% terpene resin, 15% hydrogenated cottonseed oil, 2% lecithin, 2.5% polyisobutylene, 27% polyvinyl acetate, 12.45% calcium carbonate, 11% isobutylene-isoprene copolymer, and 0.05% BHT.

The gum base is pre-heated, added to a sigma-blade mixer, and mixed until soft and pliable. A sorbitol solution and glycerin is heated to 50°C and added to the mixer along with the remaining ingredients. After mixing is complete, the gum is rolled out to a thickness of 1.5 mm thickness, dusted with talc, cut, and wrapped.

It is expected that that the strawberry flavor will be less masked and that the sweetness will last longer in this chewing gum composition containing monatin, as compared to similar chewing gum compositions containing high intensity sweeteners other than monatin.

### EXAMPLE 15: Chewing gum formulations comprising monatin, and method for making same

Below are several example formulations of chewing gum compositions comprising monatin, as well as an example method for processing the compositions.

### Formulation A

200g gum base
340g sorbitol powder (Cerestar P16616)
7g chalk
3.6g maltitol syrup (Cerestar 16303 concentrated to 80 brix)
2g menthol
1.5 g S,S monatin

### Formulation B

200g gum base
340g sorbitol powder (Cerestar P16616)
7g chalk
3.6g maltitol syrup (Cerestar16303 concentrated to 80 brix)
2g menthol
0.05 g R,R monatin

### Formulation C

200g gum base
340g sorbitol powder (Cerestar P16616)
7g chalk
3.6g maltitol syrup (Cerestar 16303 concentrated to 80 brix)
2g menthol
0.038 g S,S monatin
0.038 g R,R monatin

### Formulation D

320g gum base
400g sorbitol powder (Cerestar P16616)
100g maltitol syrup (Cerestar 16303)
40g mannitol (Cerestar 16700)
10g isomalt
14g menthol
18g mint flavor
1g S,S monatin
1g acesulfame K
0.075 g R,R monatin

### Formulation E

200g gum base
400g sorbitol (crystalline)
46g maltitol syrup (80% ds)
add 2% cherry flavor + 0.02% R,R monatin

### Formulation F

211 g sugar free gum base
420g sorbitol
14g glycerol
add 2% flavor + 0.2% S,S monatin + 0.015% R,R monatin

### Formulation G

270g gum base
340g sorbitol
34g sorbitol syrup (70% ds)
add 2% flavor + 0.15% S,S monatin + 0.05% R,R monatin

### Formulation H

300 g gum base
550 g erythritol
100 g maltitol syrup
49.5 g glycerin
0.5 g S,S monatin

### How gum is processed:

The gum base is processed via extrusion and placed in a water bath to cool and solidify. Pellets of approximately 1/2 cm by 1/2 cm are stored until further use. The pellets are mixed using a Z blender (high shear), and temperatures of up to 60°C are reached, softening the mixture. Talcum is added if not already in the gum base. The crystalline sweetener (e.g., sorbitol) and the softener/plasticizer (e.g., liquid sorbitol, liquid maltitol, or glycerol) are added stepwise in an alternating fashion while mixing, to prevent the blender motor from overheating. Flavors, colorants, and sweeteners are added and mixed. The mixture is removed from the blender, a typical batch size is several hundred kilograms. The mixture is pushed through an extruder which homogenizes and shapes the gum. The sheets are flattened and cut, and the pieces are packed for stick gum or coated for pelleted gums.

### EXAMPLE 16: Formulation and method for making sugar-free chewing gum

### An example formulation:

| Ingredients | % (w/w) |
|---|---|
| Sugar Free Gum Base | 24.500 |
| Sorbitol Solution | 16.100 |
| Mint Flavor | 1.500 |
| Glycerin | 2.800 |
| Monatin | As required |
| Sorbitol Powder | 54.800 |

### Example preparation procedure:

1. Preheat the gum base in the microwave, then add to Z-blade mixer and mix until soft and pliable.
2. Heat the sorbitol solution and glycerin in the microwave to 50°C.
3. Add all remaining ingredients to the Z-blade. Mix for 20 minutes, check temperature of mix every 5 minutes.
4. After mixing is complete remove gum from mixer and roll out to 1.5mm thickness. Dust with talc, cut and wrap.

### EXAMPLE 17: Evaluation of monatin.

Monatin formulations, including R,R monatin or R,R monatin/erythritol combinations, were assessed relative to other known sweeteners (aspartame and sucralose) in iced tea. The key sensory parameters assessed included sweetness quality, aftertaste, bitter taste and its aftertaste. Qualitative evaluation has been carried out.

### Product Formulations -- Iced Tea

An ice tea formulation was developed to evaluate sweetener performance (Table 7).

**Table 7. Iced Tea formulation**

| **Ingredient** | **Supplier** | **Concentration (w/v)** |
|---|---|---|
| Citric acid | | 0.200 |
| Sodium citrate | | 0.020 |
| Tea extract 'Assam' 285002 | Plantextrakt | 0.150 |
| Natural black tea flavor extract 31108304010000 | Rudolph Wild | 0.050 |
| Sodium benzoate (20% w/w) | | 0.075 |
| Sweetener | | As required |
| Water | | To volume |

Sweeteners were added to tea at the following concentrations:

| | |
|---|---|
| Aspartame | 0.0450% (w/v) |
| Sucralose | 0.0170% (w/v) |
| R,R monatin | 0.0030, 0.0035, 0.0040% (w/v) plus 1 g maltodextrin |
| R,R, monatin/erythritol | 0.0030, 0.0035, 0.0040% (w/v) plus 1 g erythritol |

### Sensory Evaluation

The evaluation of ice tea drinks was carried out by a panel (n = 6) of experienced sensory evaluators. The results of these evaluations are summarized in Table 8.

**Table 8. Sensory evaluation of tea (200 ml serving size)**

| **Product** | **Sweetener/concentration** | **Comments** |
|---|---|---|
| Iced Tea | Aspartame/450ppm | Good temporal characteristics although the typical aspartame flavor is clearly apparent. Balanced, though quite subtle tea flavor. No evidence of flavor enhancement. |
| " | Sucralose/170ppm | Delay in sweetness onset means first impressions are of acidity. Product flavor and overall impression somewhat out of balance because of sweetness profile not matching acidity or flavor profiles. |
| " | Monatin (40ppm) + Maltodextrin (1 g) (0.5%) | Sweetness and flavor profiles very balanced. The lemon flavor notes are clearly enhanced over those of the other sweeteners. |
| " | Monatin (40ppm) + Erythritol (1 g) (0.5%) | Sweetness and flavor profiles balanced. Lemon flavor notes even more enhanced than monatin/maltodextrin alone. The astringency in the aftertaste is greatly reduced/eliminated. |

### Discussion

Monatin delivered unexpected performance benefits, including clear sensory benefits, in sweetener formulations. In iced-tea, and particularly acidified acid tea (i.e., with lemon), monatin enhanced the lemon flavor notes. This benefit was further enhanced through addition of low concentrations of erythritol, which were able to balance and round the flavor and to speed up sweetness onset times. In beverages, such as tea, monatin delivered improved sensory properties (e.g., less aftertaste, less off-taste), and/or improved solubility and stability characteristics. Monatin used to sweeten ice tea contains close to 0 Calories, as compared to 32 Calories in 2 teaspoons (~8 g) of sucrose used to sweeten ice tea.

It is expected that in chewing gum compositions, as in beverages, monatin exhibits enhancement of citrus flavors, as well as provides a more favorable time/intensity profile for sweetness, as compared to aspartame or sucralose. It is further expected that in chewing gum compositions, a blend of monatin and erythritol further enhances citrus flavors and provides more favorable sweetness profiles, as compared to aspartame or sucralose.

### EXAMPLE 18 Evaluation of monatin in chewing gum

### Introduction

Chewing gums sweetened individually with monatin, aspartame and sucralose were prepared in stick gum format of mint flavor. The gums were prepared to be iso-sweet and evaluated for quality of sweet taste and time-intensity of sweetness delivery.

### Gum formulations and Manufacture

The formulations used in this evaluation are presented in Table 9. A standard method of manufacture was adopted for all three gum formulations, as described.

**Table 9. Chewing gum formulations**

| **Ingredient (%; w/w)** | **APM gum** | **Sucralose gum** | **Monatin (R,R) gum** |
|---|---|---|---|
| Sorbitol powder: P60W | 55.6 | 55.7 | 55.86 |
| Sugar-free gum base: Valencia T | 24.5 | 24.5 | 24.5 |
| Lycasin syrup (80/55) | 16.1 | 16.1 | 16.1 |
| Glycerol | 2.8 | 2.8 | 2.8 |
| Peppermint flavor: 11762-34 (Givaudan) | 0.7 | 0.7 | 0.7 |
| Aspartame | 0.3 | | |
| Sucralose | | 0.2 | |
| Monatin (R,R) | | | 0.04 |

The method of gum manufacture was as follows:
- Pre-warm the gum base to 40-45°C and then add to Z-blade mixer and mix
- Sieve sorbitol powder
- Remove a portion of the sorbitol, disperse sweetener in that portion and mix thoroughly
- Return sweetener/sorbitol mix to remaining bulk of sorbitol powder and mix thoroughly
- Mix lycasin and glycerol into a bowl and pre-heat to 50°C
- Add sorbitol powder to the Z-blade mixer containing the gum base
- Add lycasin/glycerol and flavor to the Z-blade and mix for 20 minutes
- Remove gum from Z-blade mixer
- Roll to a thickness of 1.5mm using a mechanical roller
- Dust with talc in the ratio 3g talc to 100g gum
- Cut into sticks measuring 19mm x 73mm
- Wrap individual sticks in foil

### Sensory Evaluation

Chewing gum compositions were evaluated by a panel of trained sensory assessors (n = 4), all very experienced in the formal sensory evaluation of chewing gums, including an evaluation for time/intensity parameters. Qualitative and temporal characteristics of the gum's flavor and sweetness were evaluated.

The results of the evaluations are presented in Table 10. In these evaluations, monatin delivered clear sensory benefits in the chewing gum compositions, where a clear balance between sweetness and flavor permitted both to be perceived to maximum sensory advantage. The time/intensity profile for sweetness by monatin was also very clearly superior to either aspartame or sucralose. Sweetness was perceived for a significantly longer time when consuming the monatin-sweetened gum.

**Table 10. Sensory evaluation of chewing gums**

| *Time* **(up to)** | **Aspartame Sweetened Chewing Gum** | **Sucralose Sweetened Chewing Gum** | **Monatin Sweetened Chewing Gum** |
|---|---|---|---|
| 30s | Sweetness detected after 25 seconds, slow sweetness build. | Immediate sweetness as the gum hits the tongue but flavor takes longer to be released. | Slow onset of sweetness, detected after 25 seconds. |
| 2 min | Good level of sweetness by 2 minutes but flavor is overpowered by the sweetness. | High level of sweetness by 1 minute. Quite sickly sweet by 1 minute 50 seconds. | Sweetness building by 50 seconds. At 1 minute the sweetness and flavor are building together without either being overpowering. By 2 minutes the sweetness has reached a good intensity without being sickly. |
| 6 min | Sickly sweetness (2 minutes 30 seconds). Sweetness peaked by 3 minutes. Low level of flavor and sweetness by 4 minutes. Very little sweetness or flavor being chewed out by 5 minutes. | Sweetness is overpowering flavor by 2 minutes 30 seconds. Sweetness has peaked by 3 minutes and 20 seconds and starts to drop away quite rapidly. Very little sweetness remaining by 4 minutes 40 seconds. | After 3 minutes the sweetness starts to drop away slowly. Still good levels of flavor and sweetness remaining after 4 minutes and 40 seconds. |
| 10 min | Gum is bland by 8 minutes and only residual sweetness and flavor remaining in the mouth. | No sweetness or flavor being chewed out by 8 minutes 20 seconds. By 9 minutes 40 seconds the bitter taste of the gum base can be detected. | Not a lot of sweetness being chewed out by 6 minutes 30 seconds but still acceptable. By 9 minutes the gum is quite bland but sweetness and flavor still remain in the mouth. |
| *Overall* | Fairly slow onset of sweetness but builds and overpowers flavor. Bland and non-sweet by the end of the chew. | Very rapid onset and decay of sweetness leaving the flavor of the gum base at the end. Sweetness was quite sickly in nature and tended to overpower the flavor. | Slow onset and build of sweetness which doesn't seem to overpower the flavor. Slow decay of sweetness which lasts longer that aspartame or sucralose. |

### EXAMPLE 19: Sweetness dose response curve of monatin and saccharin

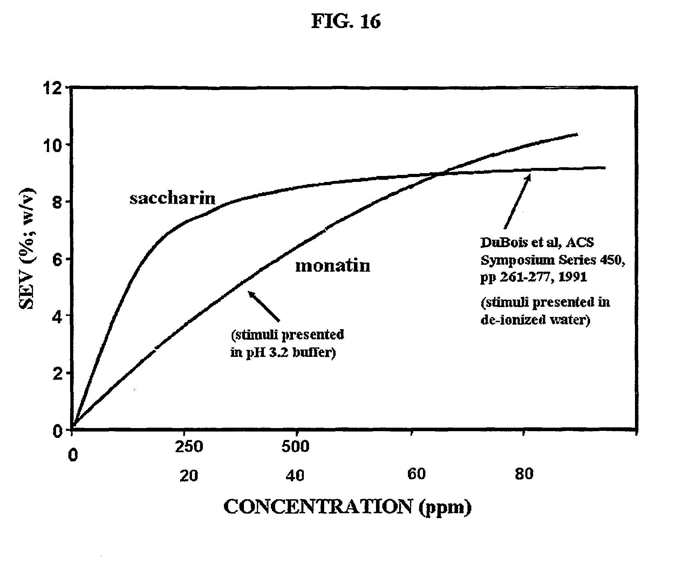

Sweetness of monatin and saccharine was assessed using 20 trained sensory evaluators, making judgements in duplicate. Test and reference solutions were prepared in citric/citrate buffer at pH 3.2. *See* FIG. 16. The more linear response of R,R/S,S monatin, as compared to saccharin, is consistent with the delivery of a more sugar-like taste character. The plateau above 10% SEV indicates absence/low levels of "mixture-suppressing" off-tastes and aftertastes. The shape of monatin's dose-response curve is similar to those of aspartame, sucralose and alitame, all of which are "quality" sweeteners.

With R,R/S,S monatin as a sole sweetener in the model system (pH 3.2), the following characteristics were observed: (1) slight delay in sweet taste onset; (2) sweet taste decay was quite rapid; (3) slight "aspartame-like" aftertaste, slightly sweet aftertaste, no bitterness in the aftertaste; and (4) residual cooling sensation in unflavored systems.

### EXAMPLE 20: Stability of monatin at pH 3 with increasing temperatures

A sample of synthetic monatin was subjected to pH 3 at temperatures of 25°C, 50°C and 100°C. At room temperature and pH 3, a 14% loss in monatin was observed over a period of 48 hours. This loss was attributed to lactone formation. At 50°C and pH 3, a 23% loss in monatin was observed over a period of 48 hours. This loss was attributed to lactone formation and the buildup of an unknown compound after about 15.5 minutes. At 100°C and pH 3, nearly all monatin was lost after 24 hours. The major detectable component was an unknown at 15.5 minutes.

### EXAMPLE 21: Sensory stability of monatin and aspartame at pH 2.5, 3.0, 4.0 at 40°C

The sensory stability of monatin solutions prepared at pH 2.5, 3.0 and 4.0 and stored at 40°C was monitored for 100 days. Loss of sweetness from these solutions was compared with the losses of sweetness from aspartame solutions prepared and stored under identical conditions.

The sensory stability of monatin (8% SEV, ~55 ppm, synthetic blend containing approximately 96% of the 2R,4R/2S, 4S enantiometric pair and 4% of the 2R,4S/2S,4R enantiometric pair) in phosphate/citrate buffers having a pH of 2.5, 3.0, and 4.0 was examined after storage at 40°C. The stability of monatin was compared to that of aspartame (400 ppm) in the same buffers. Three sucrose reference solutions were prepared in the same phosphate/citrate buffers as the monatin and aspartame solutions. All prepared solutions were stored in the dark.

| | | |
|---|---|---|
| Buffer compositions: | pH 2.5 | Phosphoric acid (75% solution) 0.127% (w/v) |
| | | Tri-sodium citrate monohydrate 0.005% (w/v) |
| | pH 3.0 | Phosphoric acid (75% solution) 0.092% (w/v) |
| | | Tri-sodium citrate monohydrate 0.031% (w/v) |
| | pH 4.0 | Phosphoric acid (75% solution) 0.071 % (w/v) |
| | | Tri-sodium citrate monohydrate 0.047% (w/v) |

The sweetness of each sweetener relative to sucrose was assessed in duplicate by a panel (n = 8) of trained sensory evaluators experienced in the sweetness estimation procedure. All samples (in the same buffers) were served in duplicate at a temperature of 22°C ± 1°C. Monatin (test) solutions, coded with 3 digit random number codes were presented individually to panelists, in random order. Sucrose reference standards, ranging from 4.0 - 10.0% (w/v) sucrose, increasing in steps of 0.5% (w/v) sucrose were also provided. Panelists were asked to estimate sweetness by comparing the sweetness of the test solution to the sucrose standards. This was carried out by taking 3 sips of the test solution, followed by a sip of water, followed by 3 sips of sucrose standard followed by a sip of water, etc. Panelists were encouraged to estimate the sweetness to one decimal place, e.g., 6.8, 8.5. A five minute rest period was imposed between evaluating the test solutions. Panelists were also asked to rinse well and eat a cracker to reduce any potential carry over effects.

Tables 11 and 12 present results of the stability studies in the phosphate citrate buffers. At each pH and after 100 days' storage at 40°C in the dark, the percentage retention of monatin sweetness was greater than that retained with aspartame. At pH 4.0, the loss of sweetness of the monatin solution appeared almost to have stabilized since there was very little change in measured sweetness intensity between Days 17 and 100, whereas the aspartame solution continued to lose sweetness.

**TABLE 11**

| Sensory Stability of Monatin: Sweetness after 100 Days Storage at 40°C | | | | | |
|---|---|---|---|---|---|
| A. | | | | | |
| pH | Time (days) | SEV Monatin (% sucrose) | Retention of Monatin Sweetness (%) | SEV Aspartame (% sucrose) | Retention of Aspartame Sweetness (%) |
| 2.5 | 0 | 7.35 | | 7.34 | |
| | 1 | 6.86 | 93.3 | 6.90 | 94.0 |
| | 2 | 6.70 | 91.2 | 6.80 | 92.6 |
| | 3 | 6.50 | 88.4 | 6.60 | 89.9 |
| | 4 | 6.26 | 85.2 | 6.29 | 85.7 |
| | 7 | 6.08 | 82.7 | 6.01 | 81.9 |
| | 8 | 5.98 | 81.4 | 5.98 | 81.5 |
| | 9 | 5.89 | 80.1 | 5.97 | 81.3 |
| | 11 | 5.78 | 78.6 | 5.86 | 79.8 |
| | 50 | 4.61 | 62.7 | 4.19 | 57.1 |
| | 100 | 2.10 | 28.6 | 0.80 | 10.9 |

| B. | | | | | |
|---|---|---|---|---|---|
| pH | Time (days) | SEV Monatin (% sucrose) | Retention of Monatin Sweetness (%) | SEV Aspartame (% sucrose) | Retention of Aspartame Sweetness (%) |
| 3.0 | 0 | 7.08 | | 7.15 | |
| | 1 | 7.05 | 99.6 | 6.90 | 96.5 |
| | 2 | 6.60 | 93.2 | 6.87 | 96.1 |
| | 3 | 6.47 | 91.4 | 6.60 | 92.3 |
| | 4 | 6.49 | 91.6 | 6.43 | 89.9 |
| | 7 | 6.04 | 85.3 | 6.17 | 86.3 |
| | 8 | 5.93 | 83.8 | 5.93 | 82.9 |
| | 9 | 5.88 | 83.1 | 5.94 | 83.1 |
| | 11 | 5.88 | 83.1 | 5.83 | 81.5 |
| | 50 | 5.12 | 72.3 | 4.71 | 65.9 |
| | 100 | 4.10 | 57.9 | 2.20 | 30.8 |

| C. | | | | | |
|---|---|---|---|---|---|
| pH | Time (days) | SEV Monatin (% sucrose) | Retention of Monatin Sweetness (%) | SEV Aspartame (% sucrose) | Retention of Aspartame Sweetness (%) |
| 4.0 | 0 | 7.40 | | 7.10 | |
| | 3 | 7.08 | 95.7 | 6.75 | 95.1 |
| | 8 | 6.42 | 86.8 | 6.23 | 87.8 |
| | 11 | 6.36 | 85.9 | 6.02 | 84.8 |
| | 17 | 6.10 | 82.4 | 5.75 | 81.0 |
| | 24 | 6.25 | 84.5 | 5.85 | 82.4 |
| | 50 | 6.14 | 82.9 | 5.29 | 74.5 |
| | 100 | 5.80 | 78.4 | 4.10 | 57.7 |

**TABLE 12**

| Stability: Amount of sweetness remaining after 100 days storage at stated pH at 40°C | | |
|---|---|---|
| pH | Sweetener | Sweetness Retained (%) |
| 2.5 | Aspartame | 11 |
| 2.5 | Monatin | 29 |
| 3.0 | Aspartame | 31 |
| 3.0 | Monatin | 58 |
| 4.0 | Aspartame | 58 |
| 4.0 | Monatin | 78 |

The respective buffers were effective at maintaining pH, as seen in Table 13:

**TABLE 13**

| Sweetener | Nominal pH | Actual pH (after 50 days) |
|---|---|---|
| Monatin | 2.5 | 2.39 |
| | 3.0 | 3.13 |
| | 4.0 | 4.28 |
| Aspartame | 2.5 | 2.49 |
| | 3.0 | 3.13 |
| | 4.0 | 4.19 |

If a *pseudo*-first order breakdown reaction is assumed, a plot of logₙ percentage retention versus time (logₙ%RTN v. t) allows estimation of the half-life (t½) and rate constant (k) of sweetness loss under any given set of conditions. In so doing, the kinetics of monatin and aspartame sweetness loss may be summarized as follows in Table 14.

**TABLE 14**

| Sweetener | PH | Half-life (t½; days) | Rate constant |
|---|---|---|---|
| | | | (k; day⁻¹) |
| Monatin | 2.5 | 65 days | 0.011 day⁻¹ |
| | 3.0 | 115 days | 0.006day⁻¹ |
| | 4.0 | 230 days | 0.003day⁻¹ |
| Aspartame | 2.5 | 55 days | 0.013day⁻¹ |
| | 3.0 | 75 days | 0.009day⁻¹ |
| | 4.0 | 140 days | 0.005day⁻¹ |

At each pH and after 100 days storage at 40°C, the percentage retention of monatin sweetness is greater than that retained from aspartame. At pH 4.0, the loss of sweetness of the monatin solution appears almost to have stabilized since there has been very little change in measured sweetness intensity between Days 17 and 100, whereas the aspartame solution continues to lose sweetness.

Estimates of the half-life of monatin and aspartame indicate that sweetness derived from monatin is lost at a slower rate than that from aspartame. Half-life estimates for monatin sweetness at pH 2.5, 3.0 and 4.0 were 65 days, 115 days and 230 days, respectively. Aspartame half-life estimates were 55 days, 75 days and 140 days under the same conditions.

Thus, under acidic conditions and storage at 40°C, monatin delivers a more stable sweetness than does aspartame.

### EXAMPLE 22: Chromatography of stereoisomers of monatin

*Sample Preparation -* Approximately 50-75 µg of lyophilized material was placed in a microcentrifuge tube. To this 1.0 mL of HPLC grade methanol was added. The solution was vortexed for 30 minutes, centrifuged and an aliquot of the supernatant was removed for analysis.

*Reversed Phase HPLC-* Chromatography of two distinct diastereomer peaks (R,R/S,S and R,S/S,R) was accomplished using a 2.1 x 250mm Xterra^{™} MS C₈ 5µm (Waters Corporation) HPLC column. Detection was carried out using an Ultima^{™} triple quadrupole mass spectrometer from Micromass. Mobile phase was delivered by the following gradient:

| Time (min) | | 0 | 9 | 16 | 20 | 21 |
|---|---|---|---|---|---|---|
| 0.05%TFA | A% | 95 | 65 | 10 | 10 | 95 |
| Methanol, 0.05% TFA | B% | 5 | 35 | 90 | 90 | 5 |
| Flow mL/min | | 0.25 | 0.25 | 0.25 | 0.25 | 0.25 |

*Chiral HPLC-* Chromatography of two distinct monatin stereoisomers (R,R and S,S) was accomplished using a 250 x 4.6 mm Chirobiotic T(Advanced Separations Technologies, Inc.) HPLC column. Detection was carried out using an Ultima^{™} triple quadrupole mass spectrometer from Micromass. Mobile phase consisted of Methanol with 0.2% Acetic acid and 0.05% ammonium hydroxide.

*Mass Spectrometry (MS*/*MS)* - The presence of monatin was detected by a Selected Reaction Monitoring (SRM) experiment. The protonated molecular ion of monatin ([M+H]⁺) has a *m*/*z*=293.3. Fragmentation of this molecular ion produces a significant ion at *m*/*z*=257.3 arising from multiple dehydrations of the molecular ion. This transition has been shown to be very specific to monatin and was chosen as the transition (293.3 to 257.3) for monitoring during the SRM experiment. This method of detection was employed for both reversed phase and chiral separations of monatin.

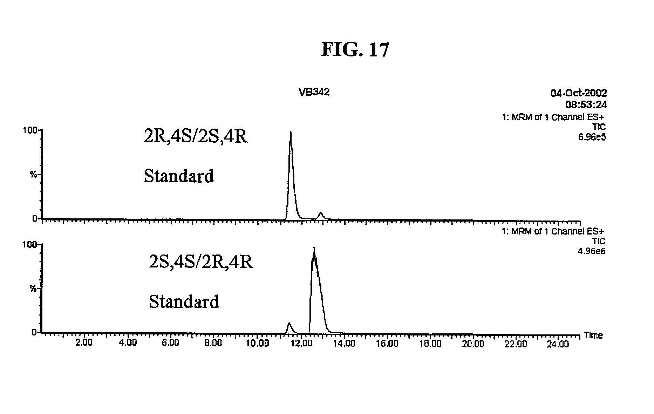

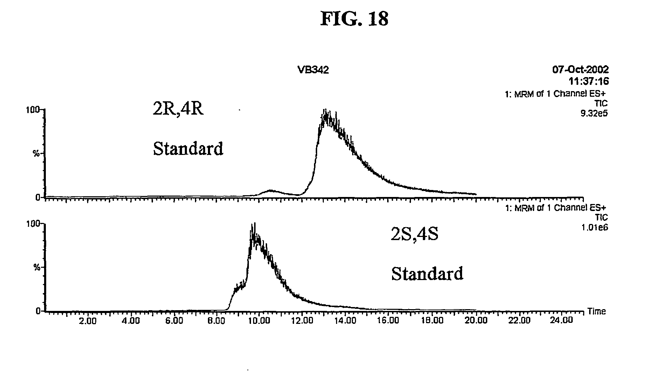

*Results* - The standard samples of R,S/S,R and S,S/R,R were evaluated under Reversed Phase HPLC. The samples were prepared by derivatization and enzymatic resolution. Chromatograms for standard solutions are displayed in FIG. 17. Following the reversed phase analysis, chiral chromatography was performed to evaluate specific stereoisomers present in the samples. Chiral chromatography of standard S,S and R,R, monatin solutions are displayed in FIG. 18.

### EXAMPLE 23: Stability of monatin at high temperature (80 °C) and neutral pH

A 100 milliliter solution of 75 ppm monatin at pH 7 was used as a stock solution. The synthetic monatin sample contained approximately 96% of the 2R,4R/2S,4S enantiomeric pair and 4% of the 2R,4S/2S,4R enantiomeric pair. Samples were incubated at 80°C and pH 7 for the duration of the experiment and samples were withdrawn at 0, 1, 2, 3, 4 hours and 1, 2, 4, 7, 14, 21 and 35 days. All experimental conditions were run in duplicate.

### Separation and Quantification Using LC-MS using Reverse Phase Chromatography -

A response curve was established for both detected diastereomer peaks of the synthetic monatin. A range of 5-150 ppm was bracketed with the synthetic monatin standard dissolved in DI water. Separation of the two diastereomer peaks was accomplished using a 3.9 x 150mm Novapak C18 (Waters Corporation) HPLC column. Ultraviolet-Visible (UV) and Mass Spectrometer (MS) detectors were used in series for detection and quantitation. Monatin and its lactone peak each have a UVₘₐₓ at 279 nm that aided in precise detection. Quantification was done by acquiring Selected Ion Monitoring (SIM) scan of 293.3 m/z and 275.3 m/z in positive-ion electrospray mode.

*Results -* At a neutral pH, the degree of degradation of monatin was determined to be insignificant even after 7-35 days. The disappearance of monatin over time is highly dependent on pH since the primary byproducts are cyclization and possibly very small levels of racemization. During the experiment at 80°C and pH 7, no change in concentration of racemic RR/SS monatin or lactones thereof was detected within the limits of precision afforded by using LC-MS for quantitation. Due to the thermal stability of monatin at neutral pH, it is expected that monatin has a suitable stability for gum processing temperatures, and has longer shelf life in chewing gum compositions, as compared to other high intensity sweeteners, such as aspartame.

In view of the many possible embodiments to which the principles of this disclosure may be applied, it should be recognized that the illustrated embodiments are only particular examples of the disclosure and should not be taken as a limitation on the scope of the disclosure.

## Claims

1. A chewing gum composition comprising a gum base portion and a soluble portion, wherein the soluble portion comprises monatin or salt thereof.

2. The chewing gum composition of claim 1, wherein an amount of the composition contains less calories and carbohydrates than the same amount of the chewing gum composition containing sucrose in place of the monatin or salt thereof.

3. A chewing gum composition comprising monatin or salt thereof, wherein the monatin or salt thereof is present in an amount that provides an extended sweetness and unmasked or enhanced flavor, as compared to other high intensity sweeteners substituted for monatin or salt thereof in the chewing gum composition.

4. The chewing gum composition of claim 3, wherein the other high intensity sweeteners are chosen from aspartame and sucralose.

5. A method for making a monatin-sweetened chewing gum composition having enhanced long-term sweetness provided by monatin or salt thereof, comprising the steps of:
(a) producing monatin or salt thereof through a biosynthetic pathway;
(b) combining the monatin or salt thereof with other ingredients; and
(c) forming the chewing gum composition.

6. A chewing gum composition comprising monatin or salt thereof, wherein the monatin or salt thereof is present in an amount that provides an enhanced long-term sweetness.

7. The chewing gum composition of claim 1, wherein the monatin or salt thereof is present in an amount that provides a prolonged sweetness as compared to aspartame or sucralose.

8. The chewing gum composition of claim 1, wherein the soluble portion further comprises a citrus flavor.

9. The chewing gum composition of claim 1, wherein the soluble portion further comprises a citrus flavor, and wherein the monatin or salt thereof is present in an amount that enhances the flavor provided by the citrus flavor.

10. The chewing gum composition of claim 1, wherein the composition comprises from about 0.001 to about 1.1 wt % monatin or salt thereof.

11. The chewing gum composition of claim 10, wherein the composition is substantially free of S,S monatin or salt thereof.

12. The chewing gum composition of claim 10, wherein the composition is substantially free of R,R monatin or salt thereof.

13. The chewing gum composition of claim 1, wherein the composition comprises from about 0.009 to about 0.1 wt % R,R monatin or salt thereof.

14. The chewing gum composition of claim 13, wherein the composition comprises from about 0.015 to about 0.025 wt % R,R monatin or salt thereof.

15. The chewing gum composition of claim 1, wherein the composition comprises from about 0.1 to about 1.1 wt % S,S monatin or salt thereof.

16. The chewing gum composition of claim 15, wherein the composition comprises from about 0.15 to about 0.88 wt % of S,S monatin or salt thereof.

17. The chewing gum composition of claim 1, wherein the composition comprises from about 0 to about 1.1 wt % of S,S monatin or salt thereof, and from about 0 to about 0.1 wt % R,R monatin or salt thereof.

18. The chewing gum composition of claim 1, wherein the composition comprises about 0.1 or less wt % R,R monatin or salt thereof, and wherein the monatin or salt thereof is substantially free of S,S, S,R or R,S monatin or salt thereof.

19. The chewing gum composition of claim 1, wherein the composition comprises about 1.1 or less wt % S,S monatin or salt thereof, and wherein the monatin or salt thereof is substantially free of R,R, S,R or R,S monatin or salt thereof.

20. The chewing gum composition of claim 1, wherein the monatin or salt thereof consists essentially of R,R monatin or salt thereof.

21. The chewing gum composition of claim 1, wherein the monatin or salt thereof consists essentially of S,S monatin or salt thereof.

22. The chewing gum composition of claim 1, wherein the monatin or salt thereof is a stereoisomerically-enriched R,R monatin or salt thereof.

23. The chewing gum composition of claim 1, wherein the monatin or salt thereof is a stereoisomerically-enriched S,S monatin or salt thereof.

24. The chewing gum composition of claim 1, wherein the monatin or salt thereof comprises at least 95% R,R monatin or salt thereof.

25. The chewing gum composition of claim 1, wherein the monatin or salt thereof comprises at least 95% S,S monatin or salt thereof.

26. The chewing gum composition of claim 1, wherein the monatin or salt thereof is produced in a biosynthetic pathway.

27. The chewing gum composition of claim 1, wherein the soluble portion further comprises a cyclamate.

28. The chewing gum composition of claim 1, wherein the soluble portion further comprises erythritol.

29. The chewing gum composition of claim 1, wherein all components of the portions are natural.

30. The chewing gum composition of claim 1, wherein the composition is biodegradable.

31. The chewing gum composition of claim 30, wherein the composition comprises a component chosen from lactic acid copolymers, proteins, jelutong, perillo, sorva, massaranduba balata, massaranduba chocolate, nispero, rosindinha, chicle, gutta hang kang, arabinogalactan, guar, xanthan, and a combination thereof.

32. The chewing gum composition of claim 1, wherein the composition is non-cariogenic.

33. A chewing gum composition comprising a gum base portion and a soluble portion, wherein the soluble portion comprises a stereoisomerically-enriched monatin mixture, wherein the monatin mixture is produced via a biosynthetic pathway.

34. The chewing gum composition of claim 33, wherein the biosynthetic pathway is a multi-step pathway and at least one step of the multi-step pathway is a chemical conversion.

35. The chewing gum composition of claim 33, wherein the mixture is predominantly R,R monatin or salt thereof.

36. The chewing gum composition of claim 33, wherein the mixture is predominantly S,S monatin or salt thereof.

37. A chewing gum composition comprising a gum base portion and a soluble portion, wherein the soluble portion comprises a monatin composition produced in a biosynthetic pathway, and wherein the monatin composition does not contain petrochemical, toxic or hazardous contaminants.

38. A chewing gum composition comprising a gum base portion and a soluble portion, wherein the soluble portion comprises monatin or salt thereof, wherein the monatin or salt thereof is produced in a biosynthetic pathway and isolated from a recombinant cell, and wherein the recombinant cell does not contain petrochemical, toxic or hazardous contaminants.

39. The chewing gum composition of claim 1, wherein the gum base portion comprises 3 to 50 wt % of an elastomer; 0.5 to 25 wt % of a softener; 2 to 30 wt % of an emulsifier; 5 to 75 wt % of a resin; and 0 to 20 wt% of a filler.

40. The chewing gum composition of claim 39, wherein the elastomer is selected from the group consisting of a natural rubber, a natural gum, and a synthetic elastomer.

41. The chewing gum composition of claim 40, wherein the natural rubber is selected from the group consisting of smoked latex, liquid latex, and guayule.

42. The chewing gum composition of claim 40, wherein the natural gum is selected from the group consisting of jelutong, perillo, sorva, massaranduba balata, massaranduba chocolate, nispero, rosindinha, chicle, and gutta hang kang.

43. The chewing gum composition of claim 40, wherein the synthetic elastomer is selected from the group consisting of butadiene-styrene copolymers, isobutylene-isoprene copolymers, polybutadiene, polyisobutylene, and vinyl polymeric elastomers.

44. The chewing gum composition of claim 39, wherein the softener comprises one or more of tallow, hydrogenated tallow, hydrogenated vegetable oils, partially hydrogenated vegetable oils, cocoa butter, glycerol monostearate, glycerol triacetate, lecithin, monoglycerides, diglycerides, triglycerides, acetylated monoglycerides, and fatty acids.

45. The chewing gum composition of claim 39, wherein the filler comprises one or more of lecithin, inulin, polydextrin, calcium carbonate, magnesium carbonate, magnesium silicate, ground limestone, aluminum silicate, talc, clay, alumina, titanium dioxide, and calcium phosphate.

46. The chewing gum composition of claim 39, wherein the emulsifier is glycerol monostearate, lecithin, polyglycerol polyricinoleic acid, or magnesium stearate.

47. The chewing gum composition of claim 39, wherein the resin is a rosin ester, a terpene resin, polyvinal acetate, polyvinyl alcohol, ethylene vinyl acetate, or vinyl acetate-vinyl laurate copolymer.

48. The chewing gum composition of claim 47, wherein the rosin ester is a glycerol ester of partially hydrogenated rosin, a glycerol ester of polymerized rosin, a glycerol ester of partially dimerized rosin, a glycerol ester of rosin, a pentaerythritol ester of partially hydrogenated rosin, a methyl ester of rosin, or a methyl ester of partially hydrogenated rosin.

49. The chewing gum composition of claim 39, wherein the emulsifier and the softener are different compounds.

50. The chewing gum composition of claim 39, wherein the emulsifier and the filler are different compounds.

51. The chewing gum composition of claim 39, wherein the softener and the filler are different compounds.

52. The chewing gum composition of claim 1, wherein the soluble portion further comprises a bulk sweetener.

53. The chewing gum composition of claim 52, wherein the bulk sweetener is a corn sweetener, sucrose, dextrose, invert sugar, dextrin, fructose, levulose, corn syrup solids, galactose, trehalose, isomaltulose, or a combination thereof.

54. The chewing gum composition of claim 1, wherein the soluble portion further comprises a high-intensity sweetener or lower glycemic carbohydrate.

55. The chewing gum composition of claim 54, wherein the high-intensity sweetener or lower glycemic carbohydrate is chosen from sorbitol, mannitol, maltitol, hydrogenated starch hydrolysates, xylitol, alitame, thaumatin, sucralose, aspartame, acesulfame K, a dihydrochalcone, saccharin, neotame, a cyclamate, stevioside, mogroside, tagatose, erythritol, isomalt, lactitol, glycyrrhizin, phyllodulcin, monellin, mabinlin, brazzein, curculin, miraculin and pentadin.

56. The chewing gum composition of claim 1, wherein the soluble portion further comprises a flavoring agent.

57. The chewing gum composition of claim 56, wherein the flavoring agent is an essential oil, a fruit flavoring agent, a synthetic flavor, or a combination thereof.

58. The chewing gum composition of claim 57, wherein the essential oil is peppermint oil, spearmint oil, or oil of wintergreen.

59. The chewing gum composition of claim 57, wherein the flavoring agent is a fruit-flavoring agent.

60. The chewing gum composition of claim 59, wherein the fruit-flavoring agent comprises extract, essence or oil of lemon, lime, orange, tangerine, grapefruit, citron, kumquat, banana, cherry, apple, pineapple, grape, strawberry, tutti-frutti, watermelon, or combinations thereof.

61. The chewing gum composition of claim 1, wherein the monatin or salt thereof is a blend of R,R and S,S, monatin or salt thereof.

62. The chewing gum composition of claim 1, wherein the soluble portion comprises a blend of monatin or salt thereof and acesulfame K.

63. The chewing gum composition of claim 62, wherein the composition comprises from about 0.1 to about 1.1 wt % S,S monatin or salt thereof and from about 0.1 to about 0.3 wt % acesulfame K.

64. The chewing gum composition of claim 62, wherein the composition comprises from about 0.05 to about 0.7 wt % S,S monatin or salt thereof and from about 0.01 to about 0.2 wt % acesulfame K.

65. The chewing gum composition of claim 62, wherein the composition comprises from about 0.009 to about 0.1 wt % R,R monatin or salt thereof and from about 0.01 to about 0.3 wt % acesulfame K.

66. The chewing gum composition of claim 1, wherein the monatin or salt thereof is encapsulated.

67. The chewing gum composition of claim 1, wherein the gum base portion comprises 15 to 30 wt % of the composition.

68. The chewing gum composition of claim 1, wherein the soluble portion further comprises a bulk sweetener, a high-intensity sweetener or lower glycemic carbohydrate, and a flavoring agent.

69. A method for making a chewing gum composition comprising monatin or salt thereof, wherein the method comprises producing monatin or salt thereof from at least one substrate chosen from glucose, tryptophan, indole-3-lactic acid, indole-3-pyruvate and the monatin precursor.

70. A method for making a chewing gum composition comprising monatin or salt thereof, wherein the method comprises producing monatin or salt thereof through a biosynthetic pathway.

71. A method for making a chewing gum composition comprising monatin or salt thereof, wherein the method comprises producing monatin or salt thereof using at least one biological conversion.

72. The method of claim 69, wherein the method further comprises combining the monatin or salt thereof with at least one other ingredient that is not monatin or salt thereof.

73. The method of claim 72, wherein the chewing gum composition comprises from about 0 to about 1.1 wt % of S,S monatin or salt thereof, and from about 0 to about 0.1 wt % R,R monatin or salt thereof.

74. A method for making a chewing gum composition comprising a monatin composition, wherein the method comprises: (a) producing monatin or salt thereof in a biosynthetic pathway in a recombinant cell; (b) isolating the monatin composition from the recombinant cell, wherein the monatin composition consists of monatin or salt thereof and other edible or potable material.

75. A chewing gum composition comprising monatin or salt thereof and at least one other ingredient chosen from erythritol, trehalose, sorbitol, mannitol, maltitol, xylitol, alitame, thaumatin, sucralose, aspartame, acesulfame K, a dihydrochalcone, saccharin, neotame, a cyclamate, stevioside, mogroside, tagatose, isomalt, lactitol, glycyrrhizin, phyllodulcin, monellin, mabinlin, brazzein, curculin, miraculin and pentadin.

## Patentansprüche

1. Kaugummizusammensetzung, umfassend einen Gummigrundstoffanteil und einen löslichen Anteil, wobei der lösliche Anteil Monatin oder Salz davon umfasst.

2. Kaugummizusammensetzung gemäß Anspruch 1, wobei eine Menge der Zusammensetzung weniger Kalorien und Kohlenhydrate als die gleiche Menge der Sucrose an Stelle des Monatin oder Salzes davon enthaltenden Kaugummizusammensetzung enthält.

3. Kaugummizusammensetzung, umfassend Monatin oder Salz davon, wobei das Monatin oder Salz davon in einer Menge vorliegt, die eine länger anhaltende Süße und ein nicht überdecktes oder verstärktes Aroma vorsieht im Vergleich mit anderen für Monatin oder Salz davon substituierten intensitätsstarken Süßstoffen in der Kaugummizusammensetzung.

4. Kaugummizusammensetzung gemäß Anspruch 3, wobei die anderen intensitätsstarken Süßstoffe aus Aspartam und Sucralose gewählt werden.

5. Verfahren zur Herstellung einer mit Monatin gesüßten Kaugummizusammensetzung mit einer durch Monatin oder Salz davon vorgesehenen verbesserten lang anhaltenden Süße, umfassend die Schritte:
(a) Herstellen von Monatin oder von Salz davon auf biosynthetischem Wege;
(b) Kombinieren des Monatins oder Salzes davon mit anderen Bestandteilen; und
(c) Bilden der Kaugummizusammensetzung.

6. Kaugummizusammensetzung, umfassend Monatin oder Salz davon, wobei das Monatin oder Salz davon in einer Menge vorliegt, die eine verbesserte lang anhaltende Süße vorsieht.

7. Kaugummizusammensetzung gemäß Anspruch 1, wobei das Monatin oder Salz davon in einer Menge vorliegt, die eine lang anhaltende Süße im Vergleich mit Aspartam oder Sucralose vorsieht.

8. Kaugummizusammensetzung gemäß Anspruch 1, wobei der lösliche Anteil ferner ein Citrus-Aroma umfasst.

9. Kaugummizusammensetzung gemäß Anspruch 1, wobei der lösliche Anteil ferner ein Citrus-Aroma umfasst und wobei das Monatin oder Salz davon in einer Menge vorliegt, die das durch das Citrus-Aroma vorgesehene Aroma verstärkt.

10. Kaugummizusammensetzung gemäß Anspruch 1, wobei die Zusammensetzung etwa 0,001 bis etwa 1,1 Gew.-% Monatin oder Salz davon umfasst.

11. Kaugummizusammensetzung gemäß Anspruch 10, wobei die Zusammensetzung im Wesentlichen frei von S,S-Monatin oder von Salz davon ist.

12. Kaugummizusammensetzung gemäß Anspruch 10, wobei die Zusammensetzung im Wesentlichen frei von R,R-Monatin oder von Salz davon ist.

13. Kaugummizusammensetzung gemäß Anspruch 1, wobei die Zusammensetzung etwa 0,009 bis etwa 0,1 Gew.-% R,R-Monatin oder Salz davon umfasst.

14. Kaugummizusammensetzung gemäß Anspruch 13, wobei die Zusammensetzung etwa 0,015 bis etwa 0,025 Gew.-% R,R-Monatin oder Salz davon umfasst.

15. Kaugummizusammensetzung gemäß Anspruch 1, wobei die Zusammensetzung etwa 0,1 bis etwa 1,1 Gew.-% S,S-Monatin oder Salz davon umfasst.

16. Kaugummizusammensetzung gemäß Anspruch 15, wobei die Zusammensetzung etwa 0,15 bis etwa 0,88 Gew.-% S,S-Monatin oder Salz davon umfasst.

17. Kaugummizusammensetzung gemäß Anspruch 1, wobei die Zusammensetzung etwa 0 bis etwa 1,1 Gew.-% S,S-Monatin oder Salz davon und etwa 0 bis etwa 0,1 Gew.-% R,R-Monatin oder Salz davon umfasst.

18. Kaugummizusammensetzung gemäß Anspruch 1, wobei die Zusammensetzung etwa 0,1 Gew.-% oder weniger R,R-Monatin oder Salz davon umfasst und wobei das Monatin oder Salz davon im Wesentlichen frei von S,S-, S,R- oder R,S-Monatin oder Salz davon ist.

19. Kaugummizusammensetzung gemäß Anspruch 1, wobei die Zusammensetzung etwa 1,1 Gew.-% oder weniger S,S-Monatin oder Salz davon umfasst und wobei das Monatin oder Salz davon im Wesentlichen frei von R,R-, S,R- oder R,S-Monatin oder Salz davon ist.

20. Kaugummizusammensetzung gemäß Anspruch 1, wobei das Monatin oder Salz davon im Wesentlichen aus R,R-Monatin oder Salz davon besteht.

21. Kaugummizusammensetzung gemäß Anspruch 1, wobei das Monatin oder Salz davon im Wesentlichen aus S,S-Monatin oder Salz davon besteht.

22. Kaugummizusammensetzung gemäß Anspruch 1, wobei das Monatin oder Salz davon ein stereoisomer angereichertes R,R-Monatin oder Salz davon ist.

23. Kaugummizusammensetzung gemäß Anspruch 1, wobei das Monatin oder Salz davon ein stereoisomer angereichertes S,S-Monatin oder Salz davon ist.

24. Kaugummizusammensetzung gemäß Anspruch 1, wobei das Monatin oder Salz davon mindestens 95 % R,R-Monatin oder Salz davon umfasst.

25. Kaugummizusammensetzung gemäß Anspruch 1, wobei das Monatin oder Salz davon mindestens 95 % S,S-Monatin oder Salz davon umfasst.

26. Kaugummizusammensetzung gemäß Anspruch 1, wobei das Monatin oder Salz davon auf biosynthetischem Wege hergestellt wird.

27. Kaugummizusammensetzung gemäß Anspruch 1, wobei der lösliche Anteil ferner ein Cyclamat umfasst.

28. Kaugummizusammensetzung gemäß Anspruch 1, wobei der lösliche Anteil ferner Erythritol umfasst.

29. Kaugummizusammensetzung gemäß Anspruch 1, wobei alle Komponenten der Anteile natürlich sind.

30. Kaugummizusammensetzung gemäß Anspruch 1, wobei die Zusammensetzung biologisch abbaubar ist.

31. Kaugummizusammensetzung gemäß Anspruch 30, wobei die Zusammensetzung eine Komponente, gewählt aus Milchsäurecopolymeren, Proteinen, Jelutong, Perillo, Sorva, Massaranduba balata, Massaranduba-Schokolade, Nispero, Rosindinha, Chicle, Gutta hang kang, Arabinogalactan, Guar, Xanthan und einer Kombination davon, umfasst.

32. Kaugummizusammensetzung gemäß Anspruch 1, wobei die Zusammensetzung nicht-kariogen ist.

33. Kaugummizusammensetzung, umfassend einen Gummigrundstoffanteil und einen löslichen Anteil, wobei der lösliche Anteil eine stereoisomer angereicherte Monatinmischung umfasst, wobei die Monatinmischung auf einem biosynthetischen Wege hergestellt wird.

34. Kaugummizusammensetzung gemäß Anspruch 33, wobei der biosynthetische Weg ein mehrstufiger Weg ist und mindestens ein Schritt des mehrstufigen Wegs eine chemische Umwandlung ist.

35. Kaugummizusammensetzung gemäß Anspruch 33, wobei die Mischung vorwiegend R,R-Monatin oder Salz davon ist.

36. Kaugummizusammensetzung gemäß Anspruch 33, wobei die Mischung vorwiegend S,S-Monatin oder Salz davon ist.

37. Kaugummizusammensetzung, umfassend einen Gummigrundstoffanteil und einen löslichen Anteil, wobei der lösliche Anteil eine auf einem biosynthetischen Weg hergestellte Monatin-Zusammensetzung umfasst und wobei die Monatin-Zusammensetzung keine petrochemischen, toxischen oder gefährlichen Verunreinigungen enthält.

38. Kaugummizusammensetzung, umfassend einen Gummigrundstoffanteil und einen löslichen Anteil, wobei der lösliche Anteil Monatin oder Salz davon umfasst, wobei das Monatin oder Salz davon auf einem biosynthetischen Weg hergestellt wird und von einer rekombinanten Zelle isoliert wird, und wobei die rekombinante Zelle keine petrochemischen, toxischen oder gefährlichen Verunreinigungen enthält.

39. Kaugummizusammensetzung gemäß Anspruch 1, wobei der Gummigrundstoffanteil 3 bis 50 Gew.-% eines Elastomers; 0,5 bis 25 Gew.-% eines Weichmachers; 2 bis 30 Gew.-% eines Emulgators; 5 bis 75 Gew.-% eines Harzes; und 0 bis 20 Gew.-% eines Füllstoffs umfasst.

40. Kaugummizusammensetzung gemäß Anspruch 39, wobei das Elastomer aus der Gruppe, bestehend aus einem Naturkautschuk, einem Naturgummi und einem synthetischen Elastomer, gewählt wird.

41. Kaugummizusammensetzung gemäß Anspruch 40, wobei der Naturkautschuk aus der Gruppe, bestehend aus Rauchlatex, Flüssiglatex und Guayule, gewählt wird.

42. Kaugummizusammensetzung gemäß Anspruch 40, wobei das Naturgummi aus der Gruppe, bestehend aus Jelutong, Perillo, Sorva, Massaranduba balata, Massaranduba-Schokolade, Nispero, Rosindinha, Chicle und Gutta hang kang, gewählt wird.

43. Kaugummizusammensetzung gemäß Anspruch 40, wobei das synthetische Elastomer aus der Gruppe, bestehend aus Butadien-Styrol-Copolymeren, Isobutylen-Isopren-Copolymeren, Polybutadien, Polyisobutylen und polymeren Vinylelastomeren, gewählt wird.

44. Kaugummizusammensetzung gemäß Anspruch 39, wobei der Weichmacher eines oder mehrere aus Talg, hydriertem Talg, hydrierten Pflanzenölen, teilweise hydrierten Pflanzenölen, Kakaobutter, Glycerolmonostearat, Glyceroltriacetat, Lecithin, Monoglyceriden, Diglyceriden, Triglyceriden, acetylierten Monoglyceriden und Fettsäuren umfasst.

45. Kaugummizusammensetzung gemäß Anspruch 39, wobei der Füllstoff eines oder mehrere aus Lecithin, Inulin, Polydextrin, Calciumcarbonat, Magnesiumcarbonat, Magnesiumsilikat, gemahlenem Kalkstein, Aluminiumsilikat, Talk, Ton, Aluminiumoxid, Titandioxid und Calciumphosphat umfasst.

46. Kaugummizusammensetzung gemäß Anspruch 39, wobei der Emulgator Glycerolmonostearat, Lecithin, Polyglycerolpolyricinolsäure oder Magnesiumstearat ist.

47. Kaugummizusammensetzung gemäß Anspruch 39, wobei das Harz ein Kolophoniumester, ein Terpenharz, Polyvinylacetat, Polyvinylalkohol, Ethylenvinylacetat oder Vinylacetat-Vinyllaurat-Copolymer ist.

48. Kaugummizusammensetzung gemäß Anspruch 47, wobei der Harzester ein Glycerolester von teilweise hydriertem Kolophonium, ein Glycerolester von polymerisiertem Kolophonium, ein Glycerolester von teilweise dimerisiertem Kolophonium, ein Glycerolester von Kolophonium, ein Pentaerythritolester von teilweise hydriertem Kolophonium, ein Methylester von Kolophonium oder ein Methylester von teilweise hydriertem Kolophonium ist.

49. Kaugummizusammensetzung gemäß Anspruch 39, wobei der Emulgator und der Weichmacher verschiedene Verbindungen sind.

50. Kaugummizusammensetzung gemäß Anspruch 39, wobei der Emulgator und Füllstoff verschiedene Verbindungen sind.

51. Kaugummizusammensetzung gemäß Anspruch 39, wobei der Weichmacher und Füllstoff verschiedene Verbindungen sind.

52. Kaugummizusammensetzung gemäß Anspruch 1, wobei der lösliche Anteil ferner einen Massensüßstoff umfasst.

53. Kaugummizusammensetzung gemäß Anspruch 52, wobei der Massensüßstoff ein Maissüßstoff, Sucrose, Dextrose, Invertzucker, Dextrin, Fructose, Levulose, Stärkezuckersirup-Feststoffe aus Mais, Galactose, Trehalose, Isomaltulose oder eine Kombination davon ist.

54. Kaugummizusammensetzung gemäß Anspruch 1, wobei der lösliche Anteil ferner einen intensitätsstarken Süßstoff oder Kohlenhydrat mit einem niedrigeren glykämischen Anteil umfasst.

55. Kaugummizusammensetzung gemäß Anspruch 54, wobei der intensitätsstarke Süßstoff oder das Kohlenhydrat mit einem niedrigeren glykämischen Anteil aus Sorbitol, Mannitol, Maltitol, hydrierten Stärkehydrolysaten, Xylitol, Alitam, Thaumatin, Sucralose, Aspartam, Acesulfam K, einem Dihydrochalkon, Saccharin, Neotam, einem Cyclamat, Steviosid, Mogrosid, Tagatose, Erythritol, Isomalt, Lactitol, Glycyrrhizin, Phyllodulcin, Monellin, Mabinlin, Brazzein, Curculin, Miraculin und Pentadin gewählt wird.

56. Kaugummizusammensetzung gemäß Anspruch 1, wobei der lösliche Anteil ferner einen Aromastoff umfasst.

57. Kaugummizusammensetzung gemäß Anspruch 56, wobei der Aromastoff ein essenzielles Öl, ein Frucht-Aromastoff, ein synthetischer Aromastoff oder eine Kombination hiervon ist.

58. Kaugummizusammensetzung gemäß Anspruch 57, wobei das essenzielle Öl Pfefferminzöl, Spearmintöl oder Öl von Wintergrün ist.

59. Kaugummizusammensetzung gemäß Anspruch 57, wobei der Aromastoff ein Frucht-Aromastoff ist.

60. Kaugummizusammensetzung gemäß Anspruch 59, wobei der Frucht-Aromastoff Extrakt, Essenz oder Öl von Zitrone, Limette, Orange, Mandarine, Grapefruit, Citrusfrucht, Kumquat, Banane, Kirsche, Apfel, Ananas, Weintraube, Erdbeere, Tutti-frutti, Wassermelone oder Kombinationen hiervon umfasst.

61. Kaugummizusammensetzung gemäß Anspruch 1, wobei das Monatin oder Salz davon eine Mischung von R,R- oder S,S-Monatin oder Salz davon ist.

62. Kaugummizusammensetzung gemäß Anspruch 1, wobei der lösliche Anteil eine Mischung von Monatin oder Salz davon und Acesulfam K umfasst.

63. Kaugummizusammensetzung gemäß Anspruch 62, wobei die Zusammensetzung etwa 0,1 bis etwa 1,1 Gew.-% S,S-Monatin oder Salz davon und etwa 0,1 bis etwa 0,3 Gew.-% Acesulfam K umfasst.

64. Kaugummizusammensetzung gemäß Anspruch 62, wobei die Zusammensetzung etwa 0,05 bis etwa 0,7 Gew.-% S,S-Monatin oder Salz davon und etwa 0,01 bis etwa 0,2 Gew.-% Acesulfam K umfasst.

65. Kaugummizusammensetzung gemäß Anspruch 62, wobei die Zusammensetzung etwa 0,009 bis etwa 0,1 Gew.-% R,R-Monatin oder Salz davon und etwa 0,01 bis etwa 0,3 Gew.-% Acesulfam K umfasst.

66. Kaugummizusammensetzung gemäß Anspruch 1, wobei das Monatin oder Salz davon verkapselt ist.

67. Kaugummizusammensetzung gemäß Anspruch 1, wobei der Gummigrundstoffanteil 15 bis 30 Gew.-% der Zusammensetzung ausmacht.

68. Kaugummizusammensetzung gemäß Anspruch 1, wobei der lösliche Anteil ferner einen Massensüßstoff, einen intensitätsstarken Süßstoff oder Kohlenhydrat mit einem niedrigeren glykämischen Anteil und einen Aromastoff umfasst.

69. Verfahren zur Herstellung einer Kaugummizusammensetzung, umfassend Monatin oder Salz davon, wobei das Verfahren die Herstellung von Monatin oder Salz davon aus mindestens einem Substrat, gewählt aus Glucose, Tryptophan, Indol-3-milchsäure, Indol-3-pyruvat und dem Monatinvorläufer, umfasst.

70. Verfahren zur Herstellung einer Kaugummizusammensetzung, umfassend Monatin oder Salz davon, wobei das Verfahren die Herstellung von Monatin oder Salz davon auf einem biosynthetischen Wege umfasst.

71. Verfahren zur Herstellung einer Kaugummizusammensetzung, umfassend Monatin oder Salz davon, wobei das Verfahren die Herstellung von Monatin oder Salz davon unter Anwendung von wenigstens einer biologischen Umwandlung umfasst.

72. Verfahren gemäß Anspruch 69, wobei das Verfahren ferner das Kombinieren des Monatins oder Salzes davon mit mindestens einem anderen Bestandteil, welcher nicht Monatin oder Salz davon ist, umfasst.

73. Verfahren gemäß Anspruch 72, wobei die Kaugummizusammensetzung etwa 0 bis etwa 1,1 Gew.-% S,S-Monatin oder Salz davon und etwa 0 bis etwa 0,1 Gew.-% R,R-Monatin oder Salz davon umfasst.

74. Verfahren zur Herstellung einer Kaugummizusammensetzung, umfassend eine Monatinzusammensetzung, wobei das Verfahren Folgendes umfasst: (a) Herstellen von Monatin oder von Salz davon auf einem biosynthetischen Weg in einer rekombinanten Zelle; (b) Isolieren der Monatin-Zusammensetzung von der rekombinanten Zelle, wobei die Monatin-Zusammensetzung aus Monatin oder Salz davon und anderem essbaren oder trinkbaren Material besteht.

75. Verfahren zur Herstellung einer Kaugummizusammensetzung, umfassend Monatin oder Salz davon und mindestens einen anderen Bestandteil, gewählt aus Erythritol, Trehalose, Sorbitol, Mannitol, Maltitol, Xylitol, Alitam, Thaumatin, Sucralose, Aspartam, Acesulfam K, einem Dihydrochalkon, Saccharin, Neotam, einem Cyclamat, Steviosid, Mogrosid, Tagatose, Isomalt, Lactitol, Glycyrrhizin, Phyllodulcin, Monellin, Mabinlin, Brazzein, Curculin, Miraculin und Pentadin.

## Revendications

1. Composition de chewing-gum comprenant une portion de base de gomme et une portion soluble, dans laquelle la portion soluble comprend de la monatine ou un sel de celle-ci.

2. Composition de chewing-gum selon la revendication 1, dans laquelle une quantité de la composition comprend moins de calories et d'hydrates de carbone que la même quantité de la composition de chewing-gum contenant du saccharose à la place de la monatine ou d'un sel de celle-ci.

3. Composition de chewing-gum comprenant de la monatine ou un sel de celle-ci, dans laquelle la monatine ou un sel de celle-ci est présent(e) dans une quantité qui offre une sucrosité étendue et un parfum non masqué ou amélioré, par rapport à d'autres édulcorants de haute intensité remplaçant la monatine ou un sel de celle-ci dans la composition de chewing-gum.

4. Composition de chewing-gum selon la revendication 3, dans laquelle les autres édulcorants de haute intensité sont choisis parmi l'aspartame et le sucralose.

5. Procédé pour fabriquer une composition de chewing-gum édulcorée à la monatine ayant une sucrosité à long terme améliorée apportée par la monatine ou un sel de celle-ci, comprenant les étapes de :
(a) produire la monatine ou un sel de celle-ci par une voie biosynthétique ;
(b) combiner la monatine ou un sel de celle-ci avec d'autres ingrédients ; et
(c) former la composition de chewing-gum.

6. Composition de chewing-gum comprenant de la monatine ou un sel de celle-ci, dans laquelle la monatine ou un sel de celle-ci est présent(e) dans une quantité qui offre une sucrosité à long terme améliorée.

7. Composition de chewing-gum selon la revendication 1, dans laquelle la monatine ou un sel de celle-ci est présent(e) dans une quantité qui offre une sucrosité prolongée par rapport à l'aspartame ou au sucralose.

8. Composition de chewing-gum selon la revendication 1, dans laquelle la portion soluble comprend en outre un arôme d'agrumes.

9. Composition de chewing-gum selon la revendication 1, dans laquelle la portion soluble comprend en outre un arôme d'agrumes, et dans laquelle la monatine ou un sel de celle-ci est présent(e) dans une quantité qui améliore l'arôme apporté par l'arôme d'agrumes.

10. Composition de chewing-gum selon la revendication 1, dans laquelle la composition comprend d'environ 0,001 à environ 1,1 % en poids de monatine ou d'un sel de celle-ci.

11. Composition de chewing-gum selon la revendication 10, dans laquelle la composition est substantiellement exempte de S,S monatine ou d'un sel de celle-ci.

12. Composition de chewing-gum selon la revendication 10, dans laquelle la composition est substantiellement exempte de R,R monatine ou d'un sel de celle-ci.

13. Composition de chewing-gum selon la revendication 1, dans laquelle la composition comprend d'environ 0,009 à environ 0,1 % en poids de R,R monatine ou d'un sel de celle-ci.

14. Composition de chewing-gum selon la revendication 13, dans laquelle la composition comprend d'environ 0,015 à environ 0,025 % en poids de R,R monatine ou d'un sel de celle-ci.

15. Composition de chewing-gum selon la revendication 1, dans laquelle la composition comprend d'environ 0,1 à environ 1,1 % en poids de S,S monatine ou d'un sel de celle-ci.

16. Composition de chewing-gum selon la revendication 15, dans laquelle la composition comprend d'environ 0,15 à environ 0,88 % en poids de S,S monatine ou d'un sel de celle-ci.

17. Composition de chewing-gum selon la revendication 1, dans laquelle la composition comprend d'environ 0 à environ 1,1 % en poids de S,S monatine ou d'un sel de celle-ci, et d'environ 0 à environ 0,1 % en poids de R,R monatine ou d'un sel de celle-ci.

18. Composition de chewing-gum selon la revendication 1, dans laquelle la composition comprend environ 0,1 % en poids ou moins de R,R monatine ou d'un sel de celle-ci, et dans laquelle la monatine ou le sel de celle-ci est substantiellement exempt(e) de S,S, S,R ou R,S monatine ou d'un sel de celle-ci.

19. Composition de chewing-gum selon la revendication 1, dans laquelle la composition comprend environ 1,1 % en poids ou moins de S,S monatine ou d'un sel de celle-ci, et dans laquelle la monatine ou un sel de celle-ci est substantiellement exempt(e) de R,R, S,R ou R,S monatine ou d'un sel de celle-ci.

20. Composition de chewing-gum selon la revendication 1, dans laquelle la monatine ou un sel de celle-ci consiste essentiellement en R,R monatine ou un sel de celle-ci.

21. Composition de chewing-gum selon la revendication 1, dans laquelle la monatine ou un sel de celle-ci consiste essentiellement en S,S monatine ou un sel de celle-ci.

22. Composition de chewing-gum selon la revendication 1, dans laquelle la monatine ou un sel de celle-ci est une R,R monatine enrichie stéréoisomériquement ou un sel de celle-ci.

23. Composition de chewing-gum selon la revendication 1, dans laquelle la monatine ou un sel de celle-ci est une S,S monatine enrichie stéréoisomériquement ou un sel de celle-ci.

24. Composition de chewing-gum selon la revendication 1, dans laquelle la monatine ou un sel de celle-ci comprend au moins 95 % de R,R monatine ou d'un sel de celle-ci.

25. Composition de chewing-gum selon la revendication 1, dans laquelle la monatine ou un sel de celle-ci comprend au moins 95 % de S,S monatine ou d'un sel de celle-ci.

26. Composition de chewing-gum selon la revendication 1, dans laquelle la monatine ou un sel de celle-ci est produit(e) par une voie biosynthétique.

27. Composition de chewing-gum selon la revendication 1, dans laquelle la portion soluble comprend en outre un cyclamate.

28. Composition de chewing-gum selon la revendication 1, dans laquelle la portion soluble comprend en outre de l'érythritol.

29. Composition de chewing-gum selon la revendication 1, dans laquelle tous les composants des portions sont naturels.

30. Composition de chewing-gum selon la revendication 1, dans laquelle la composition est biodégradable.

31. Composition de chewing-gum selon la revendication 30, dans laquelle la composition comprend un composant choisi parmi les copolymères d'acide lactique, les protéines, le jelutong, le perillo, le sorva, le massaranduba balata, le massaranduba chocolat, la nèfle du Japon, le rosindinha, le chiclé, le gutta hang kang, l'arabinogalactane, le guar, le xanthane et une combinaison de ceux-ci.

32. Composition de chewing-gum selon la revendication 1, dans laquelle la composition est non cariogène.

33. Composition de chewing-gum comprenant une portion de base de gomme et une portion soluble, dans laquelle la portion soluble comprend un mélange de monatines enrichies stéréoisomériquement, dans laquelle le mélange de monatines est produit par une voie biosynthétique.

34. Composition de chewing-gum selon la revendication 33, dans laquelle la voie biosynthétique est une voie à étapes multiples et au moins une étape de la voie à étapes multiples est une conversion chimique.

35. Composition de chewing-gum selon la revendication 33, dans laquelle le mélange est de façon prédominante de la R,R monatine ou un sel de celle-ci.

36. Composition de chewing-gum selon la revendication 33, dans laquelle le mélange est de façon prédominante de la S,S monatine ou un sel de celle-ci.

37. Composition de chewing-gum comprenant une portion de base de gomme et une portion soluble, dans laquelle la portion soluble comprend une composition de monatine produite par une voie biosynthétique, et dans laquelle la composition de monatine ne contient pas de contaminants pétrochimiques, toxiques ou dangereux.

38. Composition de chewing-gum comprenant une portion de base de gomme et une portion soluble, dans laquelle la portion soluble comprend de la monatine ou un sel de celle-ci, dans laquelle la monatine ou un sel de celle-ci est produit(e) dans une voie biosynthétique et isolé(e) à partir d'une cellule recombinante, et dans laquelle la cellule recombinante ne contient pas de contaminants pétrochimiques, toxiques ou dangereux.

39. Composition de chewing-gum selon la revendication 1, dans laquelle la portion de base de gomme comprend 3 à 50 % en poids d'un élastomère ; 0,5 à 25 % en poids d'un ramollissant ; 2 à 30 % en poids d'un émulsifiant ; 5 à 75 % en poids d'une résine ; et 0 à 20 % en poids d'une charge.

40. Composition de chewing-gum selon la revendication 39, dans laquelle l'élastomère est choisi parmi le groupe consistant en le caoutchouc naturel, une gomme naturelle et un élastomère synthétique.

41. Composition de chewing-gum selon la revendication 40, dans laquelle le caoutchouc naturel est choisi parmi le groupe consistant en le latex fumé, le latex liquide et le guayule.

42. Composition de chewing-gum selon la revendication 40, dans laquelle la gomme naturelle est choisie parmi le groupe consistant en le jelutong, le perillo, le sorva, le massaranduba balata, le massaranduba chocolat, la nèfle du Japon, le rosindinha, le chiclé et le gutta hang kang.

43. Composition de chewing-gum selon la revendication 40, dans laquelle l'élastomère synthétique est choisi parmi le groupe consistant en les copolymères de butadiène-styrène, les copolymères d'isobutylène-isoprène, le polybutadiène, le polyisobutylène et les élastomères polymériques de vinyle.

44. Composition de chewing-gum selon la revendication 39, dans laquelle le ramollissant comprend un ou plusieurs du suif, du suif hydrogéné, d'huiles végétales hydrogénées, d'huiles végétales partiellement hydrogénées, du beurre de cacao, du monostéarate de glycérol, du triacétate de glycérol, de la lécithine, de monoglycérides, de diglycérides, de triglycérides, de monoglycérides acétylés et d'acides gras.

45. Composition de chewing-gum selon la revendication 39, dans laquelle la charge comprend un ou plusieurs de la lécithine, de l'inuline, de la polydextrine, du carbonate de calcium, du carbonate de magnésium, du silicate de magnésium, de la castine moulue, du silicate d'aluminium, du talc, de l'argile, de l'alumine, du dioxyde de titane et du phosphate de calcium.

46. Composition de chewing-gum selon la revendication 39, dans laquelle l'émulsifiant est le monostéarate de glycérol, la lécithine, l'acide polyglycérol polyricinoléique ou le stéarate de magnésium.

47. Composition de chewing-gum selon la revendication 39, dans laquelle la résine est une colophane estérifiée, une résine de terpène, un polyacétate de vinyle, un alcool polyvinylique, un copolymère éthylène-acétate de vinyle ou acétate de vinyle-laurate de vinyle.

48. Composition de chewing-gum selon la revendication 47, dans laquelle la colophane estérifiée est un ester de glycérol de colophane partiellement hydrogénée, un ester de glycérol de colophane polymérisée, un ester de glycérol de colophane partiellement dimérisée, un ester de glycérol de colophane, un ester de pentaérythritol de colophane partiellement hydrogénée, un ester de méthyle de colophane ou un ester de méthyle de colophane partiellement hydrogénée.

49. Composition de chewing-gum selon la revendication 39, dans laquelle l'émulsifiant et le ramollissant sont des composés différents.

50. Composition de chewing-gum selon la revendication 39, dans laquelle l'émulsifiant et la charge sont des composés différents.

51. Composition de chewing-gum selon la revendication 39, dans laquelle le ramollissant et la charge sont des composés différents.

52. Composition de chewing-gum selon la revendication 1, dans laquelle la portion soluble comprend en outre un édulcorant en masses.

53. Composition de chewing-gum selon la revendication 52, dans laquelle l'édulcorant en masses est un édulcorant à base de maïs, du saccharose, du dextrose, du sucre inverti, de la dextrine, du fructose, du lévulose, des matières sèches de sirop de maïs, du galactose, du tréhalose, de l'isomaltulose ou une combinaison de ceux-ci.

54. Composition de chewing-gum selon la revendication 1, dans laquelle la portion soluble comprend en outre un édulcorant de haute intensité ou un hydrate de carbone glycémique inférieur.

55. Composition de chewing-gum selon la revendication 54, dans laquelle l'édulcorant de haute intensité ou l'hydrate de carbone glycémique inférieur est choisi parmi le sorbitol, le mannitol, le maltitol, les hydrolysats d'amidon hydrogénés, le xylitol, l'alitame, la thaumatine, le sucralose, l'aspartame, l'acésulfame K, un dihydrochalcone, la saccharine, le néotame, un cyclamate, le stévioside, le mogroside, le tagatose, l'érythritol, l'isomalt, le lactitol, la glycyrrhizine, la phyllodulcine, la monelline, la mabinline, la brazzéine, la curculine, la miraculine et la pentadine.

56. Composition de chewing-gum selon la revendication 1, dans laquelle la portion soluble comprend en outre un agent aromatisant.

57. Composition de chewing-gum selon la revendication 56, dans laquelle l'agent aromatisant est une huile essentielle, un agent aromatisant aux fruits, un arôme synthétique ou une combinaison de ceux-ci.

58. Composition de chewing-gum selon la revendication 57, dans laquelle l'huile essentielle est de l'essence de menthe poivrée, de l'essence de menthe verte ou de l'essence de wintergreen.

59. Composition de chewing-gum selon la revendication 57, dans laquelle l'agent aromatisant est un agent aromatisant aux fruits.

60. Composition de chewing-gum selon la revendication 59, dans laquelle l'agent aromatisant aux fruits comprend un extrait, une essence ou une huile de citron, de citron vert, d'orange, de mandarine, de pamplemousse, de cédrat, de kumquat, de banane, de cerise, de pomme, d'ananas, de raisin, de fraise, de fruits mélangés, de melon d'eau ou une combinaison de ceux-ci.

61. Composition de chewing-gum selon la revendication 1, dans laquelle la monatine ou un sel de celle-ci est un mélange de R,R et de S,S monatines ou de sels de celles-ci.

62. Composition de chewing-gum selon la revendication 1, dans laquelle la portion soluble comprend un mélange de monatine ou d'un sel de celle-ci et d'acésulfame K.

63. Composition de chewing-gum selon la revendication 62, dans laquelle la composition comprend d'environ 0,1 à environ 1,1 % en poids de S,S monatine ou d'un sel de celle-ci et d'environ 0,1 à environ 0,3 % en poids d'acésulfame K.

64. Composition de chewing-gum selon la revendication 62, dans laquelle la composition comprend d'environ 0,05 à environ 0,7 % en poids de S,S monatine ou d'un sel de celle-ci et d'environ 0,01 à environ 0,2 % en poids d'acésulfame K.

65. Composition de chewing-gum selon la revendication 62, dans laquelle la composition comprend d'environ 0,009 à environ 0,1 % en poids de R,R monatine ou d'un sel de celle-ci et d'environ 0,01 à environ 0,3 % en poids d'acésulfame K.

66. Composition de chewing-gum selon la revendication 1, dans laquelle la monatine ou un sel de celle-ci est encapsulé(e).

67. Composition de chewing-gum selon la revendication 1, dans laquelle la portion de base de gomme comprend 15 à 30 % en poids de la composition.

68. Composition de chewing-gum selon la revendication 1, dans laquelle la portion soluble comprend en outre un édulcorant en masses, un édulcorant de haute intensité ou un hydrate de carbone glycémique inférieur et un agent aromatisant.

69. Procédé pour fabriquer une composition de chewing-gum comprenant de la monatine ou un sel de celle-ci, dans lequel le procédé comprend de produire la monatine ou un sel de celle-ci à partir d'au moins un substrat choisi parmi le glucose, le tryptophane, l'acide indole-3-lactique, l'indole-3-pyruvate et le précurseur de la monatine.

70. Procédé pour fabriquer une composition de chewing-gum comprenant de la monatine ou un sel de celle-ci, dans lequel le procédé comprend de produire la monatine ou un sel de celle-ci par une voie biosynthétique.

71. Procédé pour fabriquer une composition de chewing-gum comprenant de la monatine ou un sel de celle-ci, dans lequel le procédé comprend de produire la monatine ou le sel de celle-ci en utilisant au moins une conversion biologique.

72. Procédé selon la revendication 69, dans lequel le procédé comprend en outre de combiner la monatine ou un sel de celle-ci avec au moins un autre ingrédient qui n'est pas la monatine ou un sel de celle-ci.

73. Procédé selon la revendication 72, dans lequel la composition de chewing-gum comprend d'environ 0 à environ 1,1 % en poids de S,S monatine ou d'un sel de celle-ci, et d'environ 0 à environ 0,1 % en poids de R,R monatine ou d'un sel de celle-ci.

74. Procédé pour fabriquer une composition de chewing-gum comprenant une composition de monatine, dans lequel le procédé comprend : (a) de produire la monatine ou un sel de celle-ci dans une voie biosynthétique dans une cellule recombinante ; (b) d'isoler la composition de monatine de la cellule recombinante, dans lequel la composition de monatine consiste en la monatine ou un sel de celle-ci et autre matériau comestible ou potable.

75. Composition de chewing-gum comprenant de la monatine ou un sel de celle-ci et au moins un autre ingrédient choisi parmi l'érythritol, le tréhalose, le sorbitol, le mannitol, le maltitol, le xylitol, l'alitame, la thaumatine, le sucralose, l'aspartame, l'acésulfame K, un dihydrochalcone, la saccharine, le néotame, un cyclamate, le stévioside, le mogroside, le tagatose, l'isomalt, le lactitol, la glycyrrhizine, la phyllodulcine, la monelline, la mabinline, la brazzéine, la curculine, la miraculine et la pentadine.


### SEQUENCE LISTING

<110> CARGILL, INC.
<120> CHEWING GUM COMPOSITIONS COMPRISING MONATIN AND METHODS FOR MAKING SAME
<130> 023829-0361
<140> PCT/US2004/026330
   <141> 2004-08-16
<150> 60/495,191
   <151> 2003-08-14
<160> 74
<170> PatentIn version 3.2
<210> 1
   <211> 1170
   <212> DNA
   <213> Sinorhizobium meliloti
<400> 1
   atgttcgacg ccctcgcccg ccaagccgac gatcccttgc ttttcctgat cggcctgttc 60
   aggaaggatg agcgccccgg aaaggtcgat ctcggcgtag gagtctatcg cgacgagacc 120
   ggacgcacgc cgatcttccg ggccgtcaag gcggcggaaa agcggcttct cgaaacacag 180
   gacagcaagg cctatatcgg ccccgaaggg gacctcgtct ttctcgatcg gctctgggaa 240
   ctcgtcggcg gcgacacgat cgagcggagc catgttgcgg gcgtccagac gcccggcggc 300
   tccggcgcgc tccgtttggc ggcggacctc atcgcccgca tgggcggccg aggcatctgg 360
   ctcgggctgc cgagctggcc gaaccacgcg ccgatcttca aggcggccgg gctcgatatc 420
   gccacctacg acttcttcga cattccgtcg cagtcggtca tcttcgataa tctggtgagc 480
   gcgctggaag gcgccgcatc cggcgatgcg gtgctgctgc atgcaagctg ccacaacccg 540
   accggcggcg tcctgagcga agcacaatgg atggagatcg ccgcgctggt ggccgagcgc 600
   ggcctgctgc cgctcgtcga tctcgcctat caggggttcg gccgcggcct cgaccaggat 660
   gtcgcgggcc tccggcatct tctcggcgtg gtcccggaag cgctcgtcgc ggtttcctgc 720
   tcgaagtcct tcgggcttta tcgcgagcgc gcgggcgcga tcttcgcgcg gaccagctcg 780
   actgcctcgg cggacagggt gcgctcaaac ctcgcgggcc tcgcacgcac cagctattcc 840
   atgccgccgg atcacggcgc agccgtcgtg cggacgatcc ttgacgaccc ggaactcagg 900
   cgcgactgga cggaggagct cgagacgatg cggctcagga tgacgggcct ccggcggtcg 960
   cttgccgagg gactccgcac ccgctggcag agcctcggcg cagtcgccga tcaggagggc 1020
   atgttctcca tgctgccgct ttccgaagcg gaggttatgc ggctcaggac cgagcacggc 1080
   atctatatgc cggcatccgg ccgcatcaac atcgccgggc tgaagacggc ggaagccgcc 1140
   gagattgccg gcaagttcac cagtctctga 1170
<210> 2
   <211> 389
   <212> PRT
   <213> Sinorhizobium meliloti
<400> 2
   Met Phe Asp Ala Leu Ala Arg Gln Ala Asp Asp Pro Leu Leu Phe Leu
   1               5                   10                  15
   Ile Gly Leu Phe Arg Lys Asp Glu Arg Pro Gly Lys Val Asp Leu Gly
               20                  25                  30
   Val Gly Val Tyr Arg Asp Glu Thr Gly Arg Thr Pro Ile Phe Arg Ala
           35                  40                  45
   Val Lys Ala Ala Glu Lys Arg Leu Leu Glu Thr Gln Asp Ser Lys Ala
       50                  55                  60
   Tyr Ile Gly Pro Glu Gly Asp Leu Val Phe Leu Asp Arg Leu Trp Glu
   65                  70                  75                  80
   Leu Val Gly Gly Asp Thr Ile Glu Arg Ser His Val Ala Gly Val Gln
                   85                  90                  95
   Thr Pro Gly Gly Ser Gly Ala Leu Arg Leu Ala Ala Asp Leu Ile Ala
               100                 105                 110
   Arg Met Gly Gly Arg Gly Ile Trp Leu Gly Leu Pro Ser Trp Pro Asn
           115                 120                 125
   His Ala Pro Ile Phe Lys Ala Ala Gly Leu Asp Ile Ala Thr Tyr Asp
       130                 135                 140
   Phe Phe Asp Ile Pro Ser Gln Ser Val Ile Phe Asp Asn Leu Val Ser
   145                 150                 155                 160
   Ala Leu Glu Gly Ala Ala Ser Gly Asp Ala Val Leu Leu His Ala Ser
                   165                 170                 175
   Cys His Asn Pro Thr Gly Gly Val Leu Ser Glu Ala Gln Trp Met Glu
               180                 185                 190
   Ile Ala Ala Leu Val Ala Glu Arg Gly Leu Leu Pro Leu Val Asp Leu
           195                 200                 205
   Ala Tyr Gln Gly Phe Gly Arg Gly Leu Asp Gln Asp Val Ala Gly Leu
       210                 215                 220
   Arg His Leu Leu Gly Val Val Pro Glu Ala Leu Val Ala Val Ser Cys
   225 230 235 240
   Ser Lys Ser Phe Gly Leu Tyr Arg Glu Arg Ala Gly Ala Ile Phe Ala
   245 250 255
   Arg Thr Ser Ser Thr Ala Ser Ala Asp Arg Val Arg Ser Asn Leu Ala
   260 265 270
   Gly Leu Ala Arg Thr Ser Tyr Ser Met Pro Pro Asp His Gly Ala Ala
   275 280 285
   Val Val Arg Thr Ile Leu Asp Asp Pro Glu Leu Arg Arg Asp Trp Thr
   290 295 300
   Glu Glu Leu Glu Thr Met Arg Leu Arg Met Thr Gly Leu Arg Arg Ser
   305 310 315 320
   Leu Ala Glu Gly Leu Arg Thr Arg Trp Gln Ser Leu Gly Ala Val Ala
   325 330 335
   Asp Gln Glu Gly Met Phe Ser Met Leu Pro Leu Ser Glu Ala Glu Val
   340 345 350
   Met Arg Leu Arg Thr Glu His Gly Ile Tyr Met Pro Ala Ser Gly Arg
   355 360 365
   Ile Asn Ile Ala Gly Leu Lys Thr Ala Glu Ala Ala Glu Ile Ala Gly
   370 375 380
   Lys Phe Thr Ser Leu
   385
<210> 3
   <211> 1260
   <212> DNA
   <213> Rhodobacter sphaeroides
<400> 3
   atgcgctcta cgacggctcc tggtccgagt ggggcatgta tgacgatctc aaggtcgcga 60
   aaggatgacg aaggaatgct gaccgccctg aagccgcagc ccgcggacaa gatcctgcaa 120
   ctgatccaga tgttccgcga ggatgcgcgc gcggacaaga tcgatctggg cgtgggcgtc 180
   tacaaggacc cgaccgggct caccccggtc atgcgggccg tgaaggcggc cgagaagcgg 240
   ctctgggagg tcgagaccac caagacctac accggccttg ccgacgagcc ggcctacaat 300
   gccgcgatgg cgaagctgat cctcgcgggc gcggtcccgg ccgaccgggt ggcctcggtc 360
   gccacccccg gcggcacggg cgcggtgcgt caggcgctcg agctgatccg catggcctcg 420
   cccgaggcca ccgtctggat ctcgaacccg acctggccga accatctgtc gatcgtgaaa 480
   tatctcggca tcccgatgcg ggaataccgc tatttcgacg ccgagaccgg cgccgtcgat 540
   gccgagggca tgatggagga tctggcccag gtgaaggcgg gcgacgtggt gctgctgcac 600
   ggctgctgcc acaacccgac cggcgccaac ccgaacccgg tgcagtggct ggccatctgc 660
   gagagcctgg cccggacagg cgcggtgccg ctgatcgacc tcgcctatca gggcttcggc 720
   gacgggctcg agatggatgc ggcggcgacg cggcttctgg ccaccagact gcccgaggtg 780
   ctgatcgcgg cctcctgctc gaagaacttc ggcatctacc gcgagcgcac gggcatcctg 840
   atcgccatcg gcgaggcggc gggccggggc acggtgcagg ccaacctcaa cttcctgaac 900
   cggcagaact actccttccc gccggaccat ggcgcgcggc tcgtgaccat gatcctcgag 960
   gacgagacgc tgagcgccga ctggaaggcg gaactcgagg aggtgcggct caacatgctg 1020
   acactgcgcc gccagcttgc cgatgcgctg caggccgaga ccggctcgaa ccgcttcggc 1080
   ttcgtggccg agcatcgcgg catgttctcg cgcctcggga tcacgcccgc cgaggtggag 1140
   cggctgcgga ccgagcacgg ggtctacatg gtgggcgatt cgcggctgaa catcgcgggg 1200
   ctgaaccgga cgaccgtgcc ggtgctggcg cgcgcggtgg ccaaggtgct gcgcggctga 1260
<210> 4
   <211> 419
   <212> PRT
   <213> Rhodobacter sphaeroides
<400> 4
   Met Arg Ser Thr Thr Ala Pro Gly Pro Ser Gly Ala Cys Met Thr Ile
   1               5                   10                  15
   Ser Arg Ser Arg Lys Asp Asp Glu Gly Met Leu Thr Ala Leu Lys Pro
               20                  25                  30
   Gln Pro Ala Asp Lys Ile Leu Gln Leu Ile Gln Met Phe Arg Glu Asp
           35                  40                  45
   Ala Arg Ala Asp Lys Ile Asp Leu Gly Val Gly Val Tyr Lys Asp Pro
       50                  55                  60
   Thr Gly Leu Thr Pro Val Met Arg Ala Val Lys Ala Ala Glu Lys Arg
   65                  70                  75                  80
   Leu Trp Glu Val Glu Thr Thr Lys Thr Tyr Thr Gly Leu Ala Asp Glu
                   85                  90                  95
   Pro Ala Tyr Asn Ala Ala Met Ala Lys Leu Ile Leu Ala Gly Ala Val
   100 105 110
   Pro Ala Asp Arg Val Ala Ser Val Ala Thr Pro Gly Gly Thr Gly Ala
   115 120 125
   Val Arg Gln Ala Leu Glu Leu Ile Arg Met Ala Ser Pro Glu Ala Thr
   130 135 140
   Val Trp Ile Ser Asn Pro Thr Trp Pro Asn His Leu Ser Ile Val Lys
   145 150 155 160
   Tyr Leu Gly Ile Pro Met Arg Glu Tyr Arg Tyr Phe Asp Ala Glu Thr
   165 170 175
   Gly Ala Val Asp Ala Glu Gly Met Met Glu Asp Leu Ala Gln Val Lys
   180 185 190
   Ala Gly Asp Val Val Leu Leu His Gly Cys Cys His Asn Pro Thr Gly
   195 200 205
   Ala Asn Pro Asn Pro Val Gln Trp Leu Ala Ile Cys Glu Ser Leu Ala
   210 215 220
   Arg Thr Gly Ala Val Pro Leu Ile Asp Leu Ala Tyr Gln Gly Phe Gly
   225 230 235 240
   Asp Gly Leu Glu Met Asp Ala Ala Ala Thr Arg Leu Leu Ala Thr Arg
   245 250 255
   Leu Pro Glu Val Leu Ile Ala Ala Ser Cys Ser Lys Asn Phe Gly Ile
   260 265 270
   Tyr Arg Glu Arg Thr Gly Ile Leu Ile Ala Ile Gly Glu Ala Ala Gly
   275 280 285
   Arg Gly Thr Val Gln Ala Asn Leu Asn Phe Leu Asn Arg Gln Asn Tyr
   290 295 300
   Ser Phe Pro Pro Asp His Gly Ala Arg Leu Val Thr Met Ile Leu Glu
   305 310 315 320
   Asp Glu Thr Leu Ser Ala Asp Trp Lys Ala Glu Leu Glu Glu Val Arg
   325 330 335
   Leu Asn Met Leu Thr Leu Arg Arg Gln Leu Ala Asp Ala Leu Gln Ala
   340 345 350
   Glu Thr Gly Ser Asn Arg Phe Gly Phe Val Ala Glu His Arg Gly Met
   355 360 365
   Phe Ser Arg Leu Gly Ile Thr Pro Ala Glu Val Glu Arg Leu Arg Thr
   370 375 380
   Glu His Gly Val Tyr Met Val Gly Asp Ser Arg Leu Asn Ile Ala Gly
   385 390 395 400
   Leu Asn Arg Thr Thr Val Pro Val Leu Ala Arg Ala Val Ala Lys Val
   405 410 415
   Leu Arg Gly
<210> 5
   <211> 1260
   <212> DNA
   <213> Rhodobacter sphaeroides
<400> 5
   atgcgctcta cgacggctcc tggtccgagt ggggcatgta tgacgatctc aaggtcgcga     60
   aaggatgacg aaggaatgct gaccgccctg aagccgcagc ccgcggacaa gatcctgcaa    120
   ctgatccaga tgttccgcga ggatgcgcgc gcggacaaga tcgatctggg cgtgggcgtc    180
   tacaaggacc cgaccgggct caccccggtc atgcgggccg tgaaggccgc cgagaagcgg    240
   ctctgggagg tcgagaccac caagacctac accggccttg ccggcgagcc cgcctacaat    300
   gccgcgatgg cgaagctgat cctcgcaggc gcggtcccgg ccgaccgggt ggcctcggtc    360
   gccacccccg gcggcacggg cgcggtgcgt caggcgctcg agctgatccg catggcctcg    420
   cccgaggcca ctgtctggat ctcgaacccg acctggccga accatctgtc gatcgtgaaa    480
   tatctcggca tcccgatgcg ggaataccgc tatttcgacg ccgagaccgg cgccgtcgat    540
   gccgagggct tgatggagga tctggcccag gtgaaggcgg gcgacgtggt gctgctgcac    600
   ggctgctgcc acaacccgac cggcgccaac ccgaacccgg tgcagtggct ggccgtctgc    660
   gagagcctgg cccggacagg cgcggtgccg ctgatcgacc tcgcctatca gggcttcggc    720
   gacgggctcg agatggatgc ggcggcgacg cggcttctgg ccaccagact gcccgaggtg    780
   ctgatcgcgg cctcctgctc gaagaacttc ggcatctacc gcgagcgaac gggcatcctg    840
   atcgccatcg gcgaggcggc gggccggggc acggtgcagg ccaacctcaa cttcctgaac    900
   cggcagaact actccttccc gccggaccat ggcgcgcggc tcgtgaccat gatcctcgag    960
   gacgagacgc tgagcgccga ctggaaggcg gaactcgagg aggtgcggct caacatgctg   1020
   acgctgcgcc gccagcttgc cgatgcgctg caggccgaga ccggctcgaa ccgcttcggc   1080
   ttcgtggccg agcatcgcgg catgttctcg cgcctcggga tcacgcccgc cgaggtggag   1140
   cggctgcgga ccgagcacgg ggtctacatg gtgggcgatt cgcggctgaa catcgcgggg   1200
   ctgaaccgga cgaccgtgcc ggtgctggcg cgcgcggtgg ccaaggtgct gcgcggctga   1260
<210> 6
   <211> 419
   <212> PRT
   <213> Rhodobacter sphaeroides
<400> 6
   Met Arg Ser Thr Thr Ala Pro Gly Pro Ser Gly Ala Cys Met Thr Ile
   1               5                   10                  15
   Ser Arg Ser Arg Lys Asp Asp Glu Gly Met Leu Thr Ala Leu Lys Pro
               20                  25                  30
   Gln Pro Ala Asp Lys Ile Leu Gln Leu Ile Gln Met Phe Arg Glu Asp
           35                  40                  45
   Ala Arg Ala Asp Lys Ile Asp Leu Gly Val Gly Val Tyr Lys Asp Pro
       50                  55                  60
   Thr Gly Leu Thr Pro Val Met Arg Ala Val Lys Ala Ala Glu Lys Arg
   65                  70                  75                  80
   Leu Trp Glu Val Glu Thr Thr Lys Thr Tyr Thr Gly Leu Ala Gly Glu
                   85                  90                  95
   Pro Ala Tyr Asn Ala Ala Met Ala Lys Leu Ile Leu Ala Gly Ala Val
               100                 105                 110
   Pro Ala Asp Arg Val Ala Ser Val Ala Thr Pro Gly Gly Thr Gly Ala
           115                 120                 125
   Val Arg Gln Ala Leu Glu Leu Ile Arg Met Ala Ser Pro Glu Ala Thr
       130                 135                 140
   Val Trp Ile Ser Asn Pro Thr Trp Pro Asn His Leu Ser Ile Val Lys
   145                 150                 155                 160
   Tyr Leu Gly Ile Pro Met Arg Glu Tyr Arg Tyr Phe Asp Ala Glu Thr
                   165                 170                 175
   Gly Ala Val Asp Ala Glu Gly Leu Met Glu Asp Leu Ala Gln Val Lys
               180                 185                 190
   Ala Gly Asp Val Val Leu Leu His Gly Cys Cys His Asn Pro Thr Gly
           195                 200                 205
   Ala Asn Pro Asn Pro Val Gln Trp Leu Ala Val Cys Glu Ser Leu Ala
       210                 215                 220
   Arg Thr Gly Ala Val Pro Leu Ile Asp Leu Ala Tyr Gln Gly Phe Gly
   225                 230                 235                 240
   Asp Gly Leu Glu Met Asp Ala Ala Ala Thr Arg Leu Leu Ala Thr Arg
                   245                 250                 255
   Leu Pro Glu Val Leu Ile Ala Ala Ser Cys Ser Lys Asn Phe Gly Ile
               260                 265                 270
   Tyr Arg Glu Arg Thr Gly Ile Leu Ile Ala Ile Gly Glu Ala Ala Gly
           275                 280                 285
   Arg Gly Thr Val Gln Ala Asn Leu Asn Phe Leu Asn Arg Gln Asn Tyr
       290                 295                 300
   Ser Phe Pro Pro Asp His Gly Ala Arg Leu Val Thr Met Ile Leu Glu
   305                 310                 315                 320
   Asp Glu Thr Leu Ser Ala Asp Trp Lys Ala Glu Leu Glu Glu Val Arg
                   325                 330                 335
   Leu Asn Met Leu Thr Leu Arg Arg Gln Leu Ala Asp Ala Leu Gln Ala
               340                 345                 350
   Glu Thr Gly Ser Asn Arg Phe Gly Phe Val Ala Glu His Arg Gly Met
           355                 360                 365
   Phe Ser Arg Leu Gly Ile Thr Pro Ala Glu Val Glu Arg Leu Arg Thr
       370                 375                 380
   Glu His Gly Val Tyr Met Val Gly Asp Ser Arg Leu Asn Ile Ala Gly
   385                 390                 395                 400
   Leu Asn Arg Thr Thr Val Pro Val Leu Ala Arg Ala Val Ala Lys Val
                   405                 410                 415
   Leu Arg Gly
<210> 7
   <211> 1239
   <212> DNA
   <213> Leishmania major
<400> 7
   atgtccatgc aggcggccat gaccacggcg gagcgctggc agaagattca ggcacaagct      60
   cccgatgtca tcttcgatct cgcaaaacgc gccgccgctg ccaagggccc caaggccaac     120
   ctcgtcattg gtgcctaccg cgacgagcag ggccgtccct atccgctacg cgtggtccgc     180
   aaggctgagc agcttctctt ggacatgaat ctcgactacg agtacctacc catctcgggc     240
   taccagccct tcatcgatga ggcggtaaag attatctacg gcaataccgt cgagctggag     300
   aacctggttg cggtgcagac gctgagcggg accggtgctg tctctctcgg ggcgaagctg     360
   ctgactcgcg tcttcgacgc tgagacgacg cccatctacc tttccgaccc cacgtggccc     420
   aaccactacg gcgtcgtgaa ggctgctggc tggaagaaca tctgcacgta cgcctactac     480
   gaccccaaga cggtcagcct gaatttcgag ggcatgaaga aagacattct ggcggcgccg     540
   gacggctccg tgttcattct gcaccagtgc gcgcacaacc ccaccggcgt ggacccgtcg     600
   caggagcagt ggaacgagat cgcgtcactg atgctggcca agcaccatca ggtgttcttc     660
   gactccgcct accaaggcta tgcgagcggc agcctcgaca cggacgcgta tgctgcccgc     720
   ctgtttgccc gccgcggcat cgaggtactg ctggcgcagt cgttctccaa gaacatgggc     780
   ttgtacagcg agcgtgcagg cacgctgtcg ctgctcctca aggacaagac gaagcgcgcg     840
   gatgtaaaga gcgtgatgga ttcgctgatc cgtgaggagt acacgtgccc cccagcccac     900
   ggtgcccgct tagcccacct aatcctgagc aacaacgaac tgcgaaagga gtgggaggca     960
   gagctatcag ccatggcaga gcgcatccgt acgatgcgcc gcaccgtgta cgacgagctg    1020
   ctgcgcctgc agacgcccgg gagctgggaa catgtcatta accagattgg catgttttcc    1080
   ttcctcgggc tgtcaaaggc gcagtgcgaa tactgccaaa accacaacat cttcatcaca    1140
   gtgtcgggcc gcgctaacat ggcaggtctg acgcatgaga cggcgctgat gctagcacag    1200
   acgatcaacg atgctgtgcg caatgtgaat cgtgagtga                           1239
<210> 8
   <211> 412
   <212> PRT
   <213> Leishmania major
<400> 8
   Met Ser Met Gln Ala Ala Met Thr Thr Ala Glu Arg Trp Gln Lys Ile
   1               5                   10                  15
   Gln Ala Gln Ala Pro Asp Val Ile Phe Asp Leu Ala Lys Arg Ala Ala
               20                  25                  30
   Ala Ala Lys Gly Pro Lys Ala Asn Leu Val Ile Gly Ala Tyr Arg Asp
           35                  40                  45
   Glu Gln Gly Arg Pro Tyr Pro Leu Arg Val Val Arg Lys Ala Glu Gln
       50                  55                  60
   Leu Leu Leu Asp Met Asn Leu Asp Tyr Glu Tyr Leu Pro Ile Ser Gly
   65 70 75 80
   Tyr Gln Pro Phe Ile Asp Glu Ala Val Lys Ile Ile Tyr Gly Asn Thr
   85 90 95
   Val Glu Leu Glu Asn Leu Val Ala Val Gln Thr Leu Ser Gly Thr Gly
   100 105 110
   Ala Val Ser Leu Gly Ala Lys Leu Leu Thr Arg Val Phe Asp Ala Glu
   115 120 125
   Thr Thr Pro Ile Tyr Leu Ser Asp Pro Thr Trp Pro Asn His Tyr Gly
   130 135 140
   Val Val Lys Ala Ala Gly Trp Lys Asn Ile Cys Thr Tyr Ala Tyr Tyr
   145 150 155 160
   Asp Pro Lys Thr Val Ser Leu Asn Phe Glu Gly Met Lys Lys Asp Ile
   165 170 175
   Leu Ala Ala Pro Asp Gly Ser Val Phe Ile Leu His Gln Cys Ala His
   180 185 190
   Asn Pro Thr Gly Val Asp Pro Ser Gln Glu Gln Trp Asn Glu Ile Ala
   195 200 205
   Ser Leu Met Leu Ala Lys His His Gln Val Phe Phe Asp Ser Ala Tyr
   210 215 220
   Gln Gly Tyr Ala Ser Gly Ser Leu Asp Thr Asp Ala Tyr Ala Ala Arg
   225 230 235 240
   Leu Phe Ala Arg Arg Gly Ile Glu Val Leu Leu Ala Gln Ser Phe Ser
   245 250 255
   Lys Asn Met Gly Leu Tyr Ser Glu Arg Ala Gly Thr Leu Ser Leu Leu
   260 265 270
   Leu Lys Asp Lys Thr Lys Arg Ala Asp Val Lys Ser Val Met Asp Ser
   275 280 285
   Leu Ile Arg Glu Glu Tyr Thr Cys Pro Pro Ala His Gly Ala Arg Leu
   290 295 300
   Ala His Leu Ile Leu Ser Asn Asn Glu Leu Arg Lys Glu Trp Glu Ala
   305                 310                 315                 320
   Glu Leu Ser Ala Met Ala Glu Arg Ile Arg Thr Met Arg Arg Thr Val
                   325                 330                 335
   Tyr Asp Glu Leu Leu Arg Leu Gln Thr Pro Gly Ser Trp Glu His Val
               340                 345                 350
   Ile Asn Gln Ile Gly Met Phe Ser Phe Leu Gly Leu Ser Lys Ala Gln
           355                 360                 365
   Cys Glu Tyr Cys Gln Asn His Asn Ile Phe Ile Thr Val Ser Gly Arg
       370                 375                 380
   Ala Asn Met Ala Gly Leu Thr His Glu Thr Ala Leu Met Leu Ala Gln
   385                 390                 395                 400
   Thr Ile Asn Asp Ala Val Arg Asn Val Asn Arg Glu
                   405                 410
<210> 9
   <211> 1182
   <212> DNA
   <213> Bacillus subtilis
<400> 9
   atggaacatt tgctgaatcc gaaagcaaga gagatcgaaa tttcaggaat acgcaaattc     60
   tcgaatcttg tagcccaaca cgaagacgtc atttcactta caatcggcca gcctgatttt    120
   ttcacaccgc atcatgtgaa agctgccgca aaaaaagcca ttgatgaaaa cgtgacgtca    180
   tatactccga atgccggcta cctggagctg agacaagctg tgcagcttta tatgaagaaa    240
   aaagcggatt tcaactatga tgctgaatct gaaattatca tcacaacagg cgcaagccaa    300
   gccattgatg ctgcattccg gacgatttta tctcccggtg atgaagtcat tatgccaggg    360
   cctatttatc cgggctatga acctattatc aatttgtgcg gggccaagcc tgtcattgtt    420
   gatactacgt cacacggctt taagcttacc gcccggctga ttgaagatgc tctgacaccc    480
   aacaccaagt gtgtcgtgct tccttatccg tcaaacccta ccggcgtgac tttatctgaa    540
   gaagaactga aaagcatcgc agctctctta aaaggcagaa atgtcttcgt attgtctgat    600
   gaaatataca gtgaattaac atatgacaga ccgcattact ccatcgcaac ctatttgcgg    660
   gatcaaacga ttgtcattaa cgggttgtca aaatcacaca gcatgaccgg ttggagaatt    720
   ggatttttat ttgcaccgaa agacattgca aagcacattt taaaggttca tcaatacaat    780
   gtgtcgtgcg cctcatccat ttctcaaaaa gccgcgcttg aagctgtcac aaacggcttt    840
   gacgatgcat tgattatgag agaacaatac aaaaaacgtc tggactatgt ttatgaccgt    900
   cttgtttcca tgggacttga cgtagttaaa ccgtccggtg cgttttatat cttcccttct    960
   attaaatcat ttggaatgac ttcatttgat tttagtatgg ctcttttgga agacgctggc   1020
   gtggcactcg tgccgggcag ctcgttctca acatatggtg aaggatatgt aaggctgtct   1080
   tttgcatgct caatggacac gctgagagaa ggcctagacc gtttagaatt atttgtatta   1140
   aaaaaacgtg aagcaatgca gacgataaac aacggcgttt aa                       1182
<210> 10
   <211> 393
   <212> PRT
   <213> Bacillus subtilis
<400> 10
   Met Glu His Leu Leu Asn Pro Lys Ala Arg Glu Ile Glu Ile Ser Gly
   1 5 10 15
   Ile Arg Lys Phe Ser Asn Leu Val Ala Gln His Glu Asp Val Ile Ser
   20 25 30
   Leu Thr Ile Gly Gln Pro Asp Phe Phe Thr Pro His His Val Lys Ala
   35 40 45
   Ala Ala Lys Lys Ala Ile Asp Glu Asn Val Thr Ser Tyr Thr Pro Asn
   50 55 60
   Ala Gly Tyr Leu Glu Leu Arg Gln Ala Val Gln Leu Tyr Met Lys Lys
   65 70 75 80
   Lys Ala Asp Phe Asn Tyr Asp Ala Glu Ser Glu Ile Ile Ile Thr Thr
   85 90 95
   Gly Ala Ser Gln Ala Ile Asp Ala Ala Phe Arg Thr Ile Leu Ser Pro
   100 105 110
   Gly Asp Glu Val Ile Met Pro Gly Pro Ile Tyr Pro Gly Tyr Glu Pro
   115 120 125
   Ile Ile Asn Leu Cys Gly Ala Lys Pro Val Ile Val Asp Thr Thr Ser
   130 135 140
   His Gly Phe Lys Leu Thr Ala Arg Leu Ile Glu Asp Ala Leu Thr Pro
   145 150 155 160
   Asn Thr Lys Cys Val Val Leu Pro Tyr Pro Ser Asn Pro Thr Gly Val
   165 170 175
   Thr Leu Ser Glu Glu Glu Leu Lys Ser Ile Ala Ala Leu Leu Lys Gly
               180                 185                 190
   Arg Asn Val Phe Val Leu Ser Asp Glu Ile Tyr Ser Glu Leu Thr Tyr
           195                 200                 205
   Asp Arg Pro His Tyr Ser Ile Ala Thr Tyr Leu Arg Asp Gln Thr Ile
       210                 215                 220
   Val Ile Asn Gly Leu Ser Lys Ser His Ser Met Thr Gly Trp Arg Ile
   225                 230                 235                     240
   Gly Phe Leu Phe Ala Pro Lys Asp Ile Ala Lys His Ile Leu Lys Val
                   245                 250                 255
   His Gln Tyr Asn Val Ser Cys Ala Ser Ser Ile Ser Gln Lys Ala Ala
               260                 265                 270
   Leu Glu Ala Val Thr Asn Gly Phe Asp Asp Ala Leu Ile Met Arg Glu
           275                 280                 285
   Gln Tyr Lys Lys Arg Leu Asp Tyr Val Tyr Asp Arg Leu Val Ser Met
       290                 295                 300
   Gly Leu Asp Val Val Lys Pro Ser Gly Ala Phe Tyr Ile Phe Pro Ser
   305                 310                 315                     320
   Ile Lys Ser Phe Gly Met Thr Ser Phe Asp Phe Ser Met Ala Leu Leu
                   325                 330                 335
   Glu Asp Ala Gly Val Ala Leu Val Pro Gly Ser Ser Phe Ser Thr Tyr
               340                 345                 350
   Gly Glu Gly Tyr Val Arg Leu Ser Phe Ala Cys Ser Met Asp Thr Leu
           355                 360                 365
   Arg Glu Gly Leu Asp Arg Leu Glu Leu Phe Val Leu Lys Lys Arg Glu
       370                 375                 380
   Ala Met Gln Thr Ile Asn Asn Gly Val
   385                 390
<210> 11
   <211> 1176
   <212> DNA
   <213> Lactobacillus amylovorus
<400> 11
   atgccagaat tagctaatga tttaggatta agcaaaaaga tcactgatgt aaaagcttca 60
   ggaattagaa tctttgataa caaagtttca gctattcctg gcattatcaa attgactttg 120
   ggtgaaccag atatgaatac tcctgagcat gttaagcaag cggctattaa gaatattgca 180
   gataatgatt cacactatgc tccacaaaag ggaaagcttg aattaagaaa agctatcagt 240
   aaatatttga aaaagattac tggaattgaa tatgatccag aaacagaaat cgtagtaaca 300
   gttggtgcaa ctgaagcaat taacgctacc ttgtttgcta ttactaatcc gggtgacaag 360
   gttgcaattc ctacgccagt cttttctcta tattggcccg tggctacact tgctgatgcc 420
   gattatgttt tgatgaatac tgcagaagat ggttttaagt taacacctaa gaagttagaa 480
   gaaactatca aagaaaatcc aacaattaaa gcagtaattt tgaattatcc aactaaccca 540
   actggtgttg aatatagcga agatgaaatt aaagctttgg ctaaggtaat taaagataat 600
   catctgtacg taattaccga tgaaatttac agtactttga cttacggtgt aaaacacttt 660
   tcaattgcca gcttaattcc agaaagagca atttatatct ctggtttatc taaatcacat 720
   gcgatgactg gttatcgttt aggctatgtt gccggacctg caaaaattat ggcagaaatt 780
   ggtaaagttc atggccttat ggtgacgact acgacggatt catcacaagc tgccgcaatt 840
   gaagcacttg aacacggact tgatgaccct gagaaatata gggaagttta tgaaaagcgt 900
   cgtgactatg ttttaaagga attagccgag atagagatgc aagcagttaa gccagaaggt 960
   gcattttata tctttgctaa aattccagct aagtatggca aagacgatat gaaatttgcc 1020
   ttggatttag cttttaaaga aaaagtgggt atcactccag gtagtgcatt tggtcctggt 1080
   ggtgaaggtc atattagatt atcttatgca tcaagtgatg aaaacttgca tgaggcaatg 1140
   aagcgaatga agaaagtttt acaagaggac gaataa 1176
<210> 12
   <211> 391
   <212> PRT
   <213> Lactobacillus amylovorus
<400> 12
   Met Pro Glu Leu Ala Asn Asp Leu Gly Leu Ser Lys Lys Ile Thr Asp
   1 5 10 15
   Val Lys Ala Ser Gly Ile Arg Ile Phe Asp Asn Lys Val Ser Ala Ile
   20 25 30
   Pro Gly Ile Ile Lys Leu Thr Leu Gly Glu Pro Asp Met Asn Thr Pro
   35 40 45
   Glu His Val Lys Gln Ala Ala Ile Lys Asn Ile Ala Asp Asn Asp Ser
   50 55 60
   His Tyr Ala Pro Gln Lys Gly Lys Leu Glu Leu Arg Lys Ala Ile Ser
   65 70 75 80
   Lys Tyr Leu Lys Lys Ile Thr Gly Ile Glu Tyr Asp Pro Glu Thr Glu
   85 90 95
   Ile Val Val Thr Val Gly Ala Thr Glu Ala Ile Asn Ala Thr Leu Phe
   100 105 110
   Ala Ile Thr Asn Pro Gly Asp Lys Val Ala Ile Pro Thr Pro Val Phe
   115 120 125
   Ser Leu Tyr Trp Pro Val Ala Thr Leu Ala Asp Ala Asp Tyr Val Leu
   130 135 140
   Met Asn Thr Ala Glu Asp Gly Phe Lys Leu Thr Pro Lys Lys Leu Glu
   145 150 155 160
   Glu Thr Ile Lys Glu Asn Pro Thr Ile Lys Ala Val Ile Leu Asn Tyr
   165 170 175
   Pro Thr Asn Pro Thr Gly Val Glu Tyr Ser Glu Asp Glu Ile Lys Ala
   180 185 190
   Leu Ala Lys Val Ile Lys Asp Asn His Leu Tyr Val Ile Thr Asp Glu
   195 200 205
   Ile Tyr Ser Thr Leu Thr Tyr Gly Val Lys His Phe Ser Ile Ala Ser
   210 215 220
   Leu Ile Pro Glu Arg Ala Ile Tyr Ile Ser Gly Leu Ser Lys Ser His
   225 230 235 240
   Ala Met Thr Gly Tyr Arg Leu Gly Tyr Val Ala Gly Pro Ala Lys Ile
   245 250 255
   Met Ala Glu Ile Gly Lys Val His Gly Leu Met Val Thr Thr Thr Thr
   260 265 270
   Asp Ser Ser Gln Ala Ala Ala Ile Glu Ala Leu Glu His Gly Leu Asp
   275 280 285
   Asp Pro Glu Lys Tyr Arg Glu Val Tyr Glu Lys Arg Arg Asp Tyr Val
   290 295 300
   Leu Lys Glu Leu Ala Glu Ile Glu Met Gln Ala Val Lys Pro Glu Gly
   305 310 315 320
   Ala Phe Tyr Ile Phe Ala Lys Ile Pro Ala Lys Tyr Gly Lys Asp Asp
   325 330 335
   Met Lys Phe Ala Leu Asp Leu Ala Phe Lys Glu Lys Val Gly Ile Thr
   340 345 350
   Pro Gly Ser Ala Phe Gly Pro Gly Gly Glu Gly His Ile Arg Leu Ser
   355 360 365
   Tyr Ala Ser Ser Asp Glu Asn Leu His Glu Ala Met Lys Arg Met Lys
   370 375 380
   Lys Val Leu Gln Glu Asp Glu
   385 390
<210> 13
   <211> 1413
   <212> DNA
   <213> R. sphaeroides
<400> 13
   atgcgcgagc ctcttgccct cgagatcgac ccgggccacg gcggcccgct gttcctcgcc      60
   atcgccgagg cgatcaccct cgacatcacc cgcgggcggc tgaggcccgg agcgagactg     120
   cccggcacac gcgcgctggc gcgggcgctc ggcgtgcatc gcaacacggt ggatgccgcc     180
   tatcaggagt tgctgaccca gggctggctg caggccgagc ccgcgcgggg caccttcgtg     240
   gcgcaggatc tgccgcaggg gatgctggtg cacaggcccg cgcccgcgcc ggtcgagccg     300
   gtcgcgatgc gcgcggggct cgccttctcc gatggcgcgc cggaccccga gctggtgccc     360
   gacaaggcgc tggcgcgggc ctttcgccgg gcgctcctgt cgcccgcctt ccgcgccgga     420
   gcggattacg gcgatgcccg cggcacctcc tcgctgcggg aggcgctggc agcctatctc     480
   gcctcggacc ggggcgtggt cgcggatcct gcgcggctgc tgatcgcgcg gggcagccag     540
   atggcgctgt tcctggtagc ccgggcggcg ctggcgccgg gagaggcgat cgcggtcgag     600
   gagccgggct atccgctggc ctgggaggcg ttccgcgcag cgggagcgga ggtgcgcggc     660
   gtgccggtgg atggcggcgg cctcaggatc gacgcgctcg aggccgcgct ggcccgggat     720
   ccgcgaatcc gggcggtcta tgtcacgccc catcaccagt atccgacgac cgtcaccatg     780
   ggcgcggcgc ggcggttgca gcttctggaa ctggcagagc gccaccggct cgcgctgatc     840
   gaggacgact acgaccacga ataccgcttc gagggccgtc cggtgctgcc gctggctgcc     900
   cgcgcgccgg aaggtctgcc gctgatctat gtgggctcgc tgtcgaaact gctctcgccc     960
   ggtatccggc tgggatacgc gctggcgccc gagcggctgc tgacccgcat ggccgcggcg    1020
   cgcgccgcca tcgaccggca gggcgacgcg ccgctcgagg cggcgctggc cgagctgatc    1080
   cgcgacggcg atctgggccg tcatgcccgc aaggcgcgca gggtctaccg ggcgcggcgg    1140
   gatctgctgg cggagcgtct cacggcgcag ctggccgggc gcgccgcctt cgatctgccg    1200
   gccgggggcc tcgcgctgtg gctgcgctgc gcgggcgtct cggccgagac ctgggccgaa    1260
   gccgcagggc aggcggggct cgccctgctg ccgggcacgc gcttcgcgct ggagagcccg    1320
   gcgccgcagg ccttccggct gggctatgcg gcgctggacg aggggcagat cgcccgggcg    1380
   gtggagatcc tcgcccggag cttccccggc tga                                 1413
<210> 14
   <211> 470
   <212> PRT
   <213> R. sphaeroides
<400> 14
   Met Arg Glu Pro Leu Ala Leu Glu Ile Asp Pro Gly His Gly Gly Pro
   1               5                   10                  15
   Leu Phe Leu Ala Ile Ala Glu Ala Ile Thr Leu Asp Ile Thr Arg Gly
               20                  25                  30
   Arg Leu Arg Pro Gly Ala Arg Leu Pro Gly Thr Arg Ala Leu Ala Arg
           35                  40                  45
   Ala Leu Gly Val His Arg Asn Thr Val Asp Ala Ala Tyr Gln Glu Leu
       50                  55                  60
   Leu Thr Gln Gly Trp Leu Gln Ala Glu Pro Ala Arg Gly Thr Phe Val
   65                  70                  75                  80
   Ala Gln Asp Leu Pro Gln Gly Met Leu Val His Arg Pro Ala Pro Ala
                   85                  90                  95
   Pro Val Glu Pro Val Ala Met Arg Ala Gly Leu Ala Phe Ser Asp Gly
               100                 105                 110
   Ala Pro Asp Pro Glu Leu Val Pro Asp Lys Ala Leu Ala Arg Ala Phe
           115                 120                 125
   Arg Arg Ala Leu Leu Ser Pro Ala Phe Arg Ala Gly Ala Asp Tyr Gly
       130                 135                 140
   Asp Ala Arg Gly Thr Ser Ser Leu Arg Glu Ala Leu Ala Ala Tyr Leu
   145                 150                 155                 160
   Ala Ser Asp Arg Gly Val Val Ala Asp Pro Ala Arg Leu Leu Ile Ala
                   165                 170                 175
   Arg Gly Ser Gln Met Ala Leu Phe Leu Val Ala Arg Ala Ala Leu Ala
   180 185 190
   Pro Gly Glu Ala Ile Ala Val Glu Glu Pro Gly Tyr Pro Leu Ala Trp
   195 200 205
   Glu Ala Phe Arg Ala Ala Gly Ala Glu Val Arg Gly Val Pro Val Asp
   210 215 220
   Gly Gly Gly Leu Arg Ile Asp Ala Leu Glu Ala Ala Leu Ala Arg Asp
   225 230 235 240
   Pro Arg Ile Arg Ala Val Tyr Val Thr Pro His His Gln Tyr Pro Thr
   245 250 255
   Thr Val Thr Met Gly Ala Ala Arg Arg Leu Gln Leu Leu Glu Leu Ala
   260 265 270
   Glu Arg His Arg Leu Ala Leu Ile Glu Asp Asp Tyr Asp His Glu Tyr
   275 280 285
   Arg Phe Glu Gly Arg Pro Val Leu Pro Leu Ala Ala Arg Ala Pro Glu
   290 295 300
   Gly Leu Pro Leu Ile Tyr Val Gly Ser Leu Ser Lys Leu Leu Ser Pro
   305 310 315 320
   Gly Ile Arg Leu Gly Tyr Ala Leu Ala Pro Glu Arg Leu Leu Thr Arg
   325 330 335
   Met Ala Ala Ala Arg Ala Ala Ile Asp Arg Gln Gly Asp Ala Pro Leu
   340 345 350
   Glu Ala Ala Leu Ala Glu Leu Ile Arg Asp Gly Asp Leu Gly Arg His
   355 360 365
   Ala Arg Lys Ala Arg Arg Val Tyr Arg Ala Arg Arg Asp Leu Leu Ala
   370 375 380
   Glu Arg Leu Thr Ala Gln Leu Ala Gly Arg Ala Ala Phe Asp Leu Pro
   385 390 395 400
   Ala Gly Gly Leu Ala Leu Trp Leu Arg Cys Ala Gly Val Ser Ala Glu
   405 410 415
   Thr Trp Ala Glu Ala Ala Gly Gln Ala Gly Leu Ala Leu Leu Pro Gly
   420 425 430
   Thr Arg Phe Ala Leu Glu Ser Pro Ala Pro Gln Ala Phe Arg Leu Gly
   435 440 445
   Tyr Ala Ala Leu Asp Glu Gly Gln Ile Ala Arg Ala Val Glu Ile Leu
   450 455 460
   Ala Arg Ser Phe Pro Gly
   465 470
<210> 15
   <211> 35
   <212> DNA
   <213> Artificial sequence
<220>
   <223> primer
<400> 15
   ggtattgagg gtcgcatgaa ggttttagtc aatgg 35
<210> 16
   <211> 37
   <212> DNA
   <213> Artificial sequence
<220>
   <223> primer
<400> 16
   agaggagagt tagagcctta tgaaatgcta gcagcct 37
<210> 17
   <211> 35
   <212> DNA
   <213> Artificial sequence
<220>
   <223> primer
<400> 17
   ggtattgagg gtcgcatgtt cgacgccctc gcccg 35
<210> 18
   <211> 37
   <212> DNA
   <213> Artificial sequence
<220>
   <223> primer
<400> 18
   agaggagagt tagagcctca gagactggtg aacttgc 37
<210> 19
   <211> 35
   <212> DNA
   <213> Artificial sequence
<220>
   <223> primer
<400> 19
   ggtattgagg gtcgcatgga acatttgctg aatcc 35
<210> 20
   <211> 37
   <212> DNA
   <213> Artificial sequence
<220>
   <223> primer
<400> 20
   agaggagagt tagagcctta aacgccgttg tttatcg 37
<210> 21
   <211> 35
   <212> DNA
   <213> Artificial sequence
<220>
   <223> primer
<400> 21
   ggtattgagg gtcgcatgcg cgagcctctt gccct 35
<210> 22
   <211> 37
   <212> DNA
   <213> Artificial sequence
<220>
   <223> primer
<400> 22
   agaggagagt tagagcctca gccggggaag ctccggg 37
<210> 23
   <211> 35
   <212> DNA
   <213> Artificial sequence
<220>
   <223> primer
<400> 23
   ggtattgagg gtcgcatgtc cacgcaggcg gccat 35
<210> 24
   <211> 37
   <212> DNA
   <213> Artificial sequence
<220>
   <223> primer
<400> 24
   agaggagagt tagagcctca ctcacgattc acattgc 37
<210> 25
   <211> 35
   <212> DNA
   <213> Artificial sequence
<220>
   <223> primer
<400> 25
   ggtattgagg gtcgcatgcc agaattagct aatga 35
<210> 26
   <211> 37
   <212> DNA
   <213> Artificial sequence
<220>
   <223> primer
<400> 26
   agaggagagt tagagcctta ttcgtcctct tgtaaaa 37
<210> 27
   <211> 35
   <212> DNA
   <213> Artificial sequence
<220>
   <223> primer
<400> 27
   ggtattgagg gtcgcatgcg ctctacgacg gctcc 35
<210> 28
   <211> 37
   <212> DNA
   <213> Artificial sequence
<220>
   <223> primer
<400> 28
   agaggagagt tagagcctca gccgcgcagc accttgg 37
<210> 29
   <211> 35
   <212> DNA
   <213> Artificial sequence
<220>
   <223> primer
<400> 29
   ggtattgagg gtcgcatgtt tgagaacatt accgc 35
<210> 30
   <211> 37
   <212> DNA
   <213> Artificial sequence
<220>
   <223> primer
<400> 30
   agaggagagt tagagcctta cagcactgcc acaatcg 37
<210> 31
   <211> 1194
   <212> DNA
   <213> E. coli
<400> 31
   gtgtttcaaa aagttgacgc ctacgctggc gacccgattc ttacgcttat ggagcgtttt      60
   aaagaagacc ctcgcagcga caaagtgaat ttaagtatcg gtctgtacta caacgaagac     120
   ggaattattc cacaactgca agccgtggcg gaggcggaag cgcgcctgaa tgcgcagcct     180
   catggcgctt cgctttattt accgatggaa gggcttaact gctatcgcca tgccattgcg     240
   ccgctgctgt ttggtgcgga ccatccggta ctgaaacaac agcgcgtagc aaccattcaa     300
   acccttggcg gctccggggc attgaaagtg ggcgcggatt tcctgaaacg ctacttcccg     360
   gaatcaggcg tctgggtcag cgatcctacc tgggaaaacc gcgtagcaat attcgccggg     420
   gctggattcg aagtgagtac ttacccctgg tatgacgaag cgactaacgg cgtgcgcttt     480
   aatgacctgt tggcgacgct gaaaacatta cctgcccgca gtattgtgtt gctgcatcca     540
   tgttgccaca acccaacggg tgccgatctc actaatgatc agtgggatgc ggtgattgaa     600
   attctcaaag cccgcgagct tattccattc ctcgatattg cctatcaagg atttggtgcc     660
   ggtatggaag aggatgccta cgctattcgc gccattgcca gcgctggatt acccgctctg     720
   gtgagcaatt cgttctcgaa aattttctcc ctttacggcg agcgcgtcgg cggactttct     780
   gttatgtgtg aagatgccga agccgctggc cgcgtactgg ggcaattgaa agcaacagtt     840
   cgccgcaact actccagccc gccgaatttt ggtgcgcagg tggtggctgc agtgctgaat     900
   gacgaggcat tgaaagccag ctggctggcg gaagtagaag agatgcgtac tcgcattctg     960
   gcaatgcgtc aggaattggt gaaggtatta agcacagaga tgccagaacg caatttcgat    1020
   tatctgctta atcagcgcgg catgttcagt tataccggtt taagtgccgc tcaggttgac    1080
   cgactacgtg aagaatttgg tgtctatctc atcgccagcg gtcgcatgtg tgtcgccggg    1140
   ttaaatacgg caaatgtaca acgtgtggca aaggcgtttg ctgcggtgat gtaa           1194
<210> 32
   <211> 397
   <212> PRT
   <213> E. coli
<400> 32
   Val Phe Gln Lys Val Asp Ala Tyr Ala Gly Asp Pro Ile Leu Thr Leu
   1               5                   10                  15
   Met Glu Arg Phe Lys Glu Asp Pro Arg Ser Asp Lys Val Asn Leu Ser
               20                  25                  30
   Ile Gly Leu Tyr Tyr Asn Glu Asp Gly Ile Ile Pro Gln Leu Gln Ala
           35                  40                  45
   Val Ala Glu Ala Glu Ala Arg Leu Asn Ala Gln Pro His Gly Ala Ser
       50                  55                  60
   Leu Tyr Leu Pro Met Glu Gly Leu Asn Cys Tyr Arg His Ala Ile Ala
   65                  70                  75                  80
   Pro Leu Leu Phe Gly Ala Asp His Pro Val Leu Lys Gln Gln Arg Val
                   85                  90                  95
   Ala Thr Ile Gln Thr Leu Gly Gly Ser Gly Ala Leu Lys Val Gly Ala
               100                 105                 110
   Asp Phe Leu Lys Arg Tyr Phe Pro Glu Ser Gly Val Trp Val Ser Asp
           115                 120                 125
   Pro Thr Trp Glu Asn Arg Val Ala Ile Phe Ala Gly Ala Gly Phe Glu
       130                 135                 140
   Val Ser Thr Tyr Pro Trp Tyr Asp Glu Ala Thr Asn Gly Val Arg Phe
   145                 150                 155                 160
   Asn Asp Leu Leu Ala Thr Leu Lys Thr Leu Pro Ala Arg Ser Ile Val
                   165                 170                 175
   Leu Leu His Pro Cys Cys His Asn Pro Thr Gly Ala Asp Leu Thr Asn
               180                 185                 190
   Asp Gln Trp Asp Ala Val Ile Glu Ile Leu Lys Ala Arg Glu Leu Ile
           195                 200                 205
   Pro Phe Leu Asp Ile Ala Tyr Gln Gly Phe Gly Ala Gly Met Glu Glu
       210                 215                 220
   Asp Ala Tyr Ala Ile Arg Ala Ile Ala Ser Ala Gly Leu Pro Ala Leu
   225                 230                 235                 240
   Val Ser Asn Ser Phe Ser Lys Ile Phe Ser Leu Tyr Gly Glu Arg Val
                   245                 250                 255
   Gly Gly Leu Ser Val Met Cys Glu Asp Ala Glu Ala Ala Gly Arg Val
               260                 265                 270
   Leu Gly Gln Leu Lys Ala Thr Val Arg Arg Asn Tyr Ser Ser Pro Pro
           275                 280                 285
   Asn Phe Gly Ala Gln Val Val Ala Ala Val Leu Asn Asp Glu Ala Leu
       290                 295                 300
   Lys Ala Ser Trp Leu Ala Glu Val Glu Glu Met Arg Thr Arg Ile Leu
   305                 310                 315                 320
   Ala Met Arg Gln Glu Leu Val Lys Val Leu Ser Thr Glu Met Pro Glu
                   325                 330                 335
   Arg Asn Phe Asp Tyr Leu Leu Asn Gln Arg Gly Met Phe Ser Tyr Thr
               340                 345                 350
   Gly Leu Ser Ala Ala Gln Val Asp Arg Leu Arg Glu Glu Phe Gly Val
           355                 360                 365
   Tyr Leu Ile Ala Ser Gly Arg Met Cys Val Ala Gly Leu Asn Thr Ala
       370                 375                 380
   Asn Val Gln Arg Val Ala Lys Ala Phe Ala Ala Val Met
   385                 390                 395
<210> 33
   <211> 35
   <212> DNA
   <213> Artificial sequence
<220>
   <223> primer
<400> 33
   ggtattgagg gtcgcgtgtt tcaaaaagtt gacgc 35
<210> 34
   <211> 37
   <212> DNA
   <213> Artificial sequence
<220>
   <223> primer
<400> 34
   agaggagagt tagagcctta catcaccgca gcaaacg 37
<210> 35
   <211> 35
   <212> DNA
   <213> Artificial sequence
<220>
   <223> primer
<400> 35
   ggtattgagg gtcgcatgga gtccaaagtc gttga 35
<210> 36
   <211> 37
   <212> DNA
   <213> Artificial sequence
<220>
   <223> primer
<400> 36
   agaggagagt tagagcctta cacttggaaa acagcct 37
<210> 37
   <211> 35
   <212> DNA
   <213> Artificial sequence
<220>
   <223> primer
<400> 37
   ggtattgagg gtcgcatgaa aaactggaaa acaag 35
<210> 38
   <211> 37
   <212> DNA
   <213> Artificial sequence
<220>
   <223> primer
<400> 38
   agaggagagt tagagcctta cagcttagcg ccttcta 37
<210> 39
   <211> 35
   <212> DNA
   <213> Artificial sequence
<220>
   <223> primer
<400> 39
   ggtattgagg gtcgcatgcg aggggcatta ttcaa 35
<210> 40
   <211> 36
   <212> DNA
   <213> Artificial sequence
<220>
   <223> primer
<400> 40
   agaggagagt tagagcctca gcccttgagc gcgaag 36
<210> 41
   <211> 1416
   <212> DNA
   <213> E. coli
<400> 41
   atggaaaact ttaaacatct ccctgaaccg ttccgcattc gtgttattga gccagtaaaa      60
   cgtaccaccc gcgcttatcg tgaagaggca attattaaat ccggtatgaa cccgttcctg     120
   ctggatagcg aagatgtttt tatcgattta ctgaccgaca gcggcaccgg ggcggtgacg     180
   cagagcatgc aggctgcgat gatgcgcggc gacgaagcct acagcggcag tcgtagctac     240
   tatgcgttag ccgagtcagt gaaaaatatc tttggttatc aatacaccat tccgactcac     300
   cagggccgtg gcgcagagca aatctatatt ccggtactga ttaaaaaacg cgagcaggaa     360
   aaaggcctgg atcgcagcaa aatggtggcg ttctctaact atttctttga taccacgcag     420
   ggccatagcc agatcaacgg ctgtaccgtg cgtaacgtct atatcaaaga agccttcgat     480
   acgggcgtgc gttacgactt taaaggcaac tttgaccttg agggattaga acgcggtatt     540
   gaagaagttg gtccgaataa cgtgccgtat atcgttgcaa ccatcaccag taactctgca     600
   ggtggtcagc cggtttcact ggcaaactta aaagcgatgt acagcatcgc gaagaaatac     660
   gatattccgg tggtaatgga ctccgcgcgc tttgctgaaa acgcctattt catcaagcag     720
   cgtgaagcag aatacaaaga ctggaccatc gagcagatca cccgcgaaac ctacaaatat     780
   gccgatatgc tggcgatgtc cgccaagaaa gatgcgatgg tgccgatggg cggcctgctg     840
   tgcatgaaag acgacagctt ctttgatgtg tacaccgagt gcagaaccct ttgcgtggtg     900
   caggaaggct tcccgacata tggcggcctg gaaggcggcg cgatggagcg tctggcggta     960
   ggtctgtatg acggcatgaa tctcgactgg ctggcttatc gtatcgcgca ggtacagtat    1020
   ctggtcgatg gtctggaaga gattggcgtt gtctgccagc aggcgggcgg tcacgcggca    1080
   ttcgttgatg ccggtaaact gttgccgcat atcccggcag accagttccc ggcacaggcg    1140
   ctggcctgcg agctgtataa agtcgccggt atccgtgcgg tagaaattgg ctctttcctg    1200
   ttaggccgcg atccgaaaac cggtaaacaa ctgccatgcc cggctgaact gctgcgttta    1260
   accattccgc gcgcaacata tactcaaaca catatggact tcattattga agcctttaaa    1320
   catgtgaaag agaacgcggc gaatattaaa ggattaacct ttacgtacga accgaaagta    1380
   ttgcgtcact tcaccgcaaa acttaaagaa gtttaa                              1416
<210> 42
   <211> 1371
   <212> DNA
   <213> Citrobacter freundii
<400> 42
   atgaattatc cggcagaacc cttccgtatt aaaagcgttg aaactgtatc tatgatcccg 60
   cgtgatgaac gcctcaagaa aatgcaggaa gcgggttaca atactttcct gttaaattcg 120
   aaagatattt atattgacct gctgacagac agtggcacta acgcaatgag cgacaagcag 180
   tgggccggaa tgatgatggg tgatgaagcg tacgcgggca gcgaaaactt ctatcatctg 240
   gaaagaaccg tgcaggaact gtttggcttt aaacatattg ttccgactca ccaggggcgt 300
   ggcgcagaaa acctgttatc gcagctggct attaaacctg ggcaatatgt tgccgggaat 360
   atgtatttca ctaccacccg ttatcaccag gaaaaaaatg gtgcggtgtt tgtcgatatc 420
   gttcgtgacg aagcgcacga tgccggtctg aatattgcgt ttaaaggtga tatcgatctt 480
   aaaaaattac aaaagctgat tgatgaaaaa ggcgcagaga atattgcgta tatctgcctg 540
   gcggtgacgg ttaacctcgc gggcggccaa ccggtctcga tggctaacat gcgtgcggtg 600
   cgtgaactga cagaagcgca tggcattaaa gtgttctacg acgctacccg ctgcgtagaa 660
   aacgcctact ttatcaaaga gcaagagcag ggctttgaga acaagagcat cgccgagatc 720
   gtgcatgaga tgttcagcta cgccgacggt tgtaccatga gtggtaaaaa agactgtctg 780
   gtgaacatcg gcggcttcct gtgcatgaac gatgacgaaa tgttctcttc tgccaaagag 840
   ttagtcgtgg tctacgaagg gatgccatct tacggcggcc tggccggacg tgatatggaa 900
   gcgatggcga ttggcctgcg tgaagccatg cagtacgaat atattgagca ccgcgtgaag 960
   caggttcgct acctgggcga taagctgaaa gccgctggcg taccgattgt tgaaccggta 1020
   ggcggtcacg cggtattcct cgatgcgcgt cgcttctgcg agcatctgac gcaagatgag 1080
   ttcccggcac aaagtctggc tgccagcatc tatgtggaaa ccggcgtgcg cagtatggag 1140
   cgcggaatta tctctgcggg ccgtaataac gtgaccggtg aacaccacag accgaaactg 1200
   gaaaccgtgc gtctgactat tccacgtcgt gtttatacct acgcacatat ggatgttgtg 1260
   gctgacggta ttattaaact ttaccagcac aaagaagata ttcgcgggct gaagtttatt 1320
   tacgagccga agcagttgcg tttctttact gcacgctttg attacatcta a 1371
<210> 43
   <211> 35
   <212> DNA
   <213> Artificial sequence
<220>
   <223> primer
<400> 43
   ggtattgagg gtcgcatgga aaactttaaa catct 35
<210> 44
   <211> 37
   <212> DNA
   <213> Artificial sequence
<220>
   <223> primer
<400> 44
   agaggagagt tagagcctta aacttcttta agttttg 37
<210> 45
   <211> 35
   <212> DNA
   <213> Artificial sequence
<220>
   <223> primer
<400> 45
   ggtattgagg gtcgcatgaa ttatccggca gaacc 35
<210> 46
   <211> 37
   <212> DNA
   <213> Artificial sequence
<220>
   <223> primer
<400> 46
   agaggagagt tagagcctta gatgtaatca aagcgtg 37
<210> 47
   <211> 31
   <212> DNA
   <213> Artificial sequence
<220>
   <223> primer
<400> 47
   ccagggcacc ggcgcagagc aaatctatat t 31
<210> 48
   <211> 30
   <212> DNA
   <213> Artificial sequence
<220>
   <223> primer
<400> 48
   tgcgccggtg ccctggtgag tcggaatggt 30
<210> 49
   <211> 32
   <212> DNA
   <213> Artificial sequence
<220>
   <223> primer
<400> 49
   tcctgcacgc ggcaaagggt tctgcactcg gt 32
<210> 50
   <211> 30
   <212> DNA
   <213> Artificial sequence
<220>
   <223> primer
<400> 50
   ctttgccgcg tgcaggaagg cttcccgaca 30
<210> 51
   <211> 29
   <212> DNA
   <213> Artificial sequence
<220>
   <223> primer
<400> 51
   aggggaccgg cgcagaaaac ctgttatcg 29
<210> 52
   <211> 32
   <212> DNA
   <213> Artificial sequence
<220>
   <223> primer
<400> 52
   tctgcgccgg tcccctggtg agtcggaaca at 32
<210> 53
   <211> 29
   <212> DNA
   <213> Artificial sequence
<220>
   <223> primer
<400> 53
   gttagtccgc gtctacgaag ggatgccat 29
<210> 54
   <211> 29
   <212> DNA
   <213> Artificial sequence
<220>
   <223> primer
<400> 54
   gtagacgcgg actaactctt tggcagaag 29
<210> 55
   <211> 35
   <212> DNA
   <213> Artificial sequence
<220>
   <223> primer
<400> 55
   ggtattgagg gtcgcatgta cgaactggga gttgt 35
<210> 56
   <211> 37
   <212> DNA
   <213> Artificial sequence
<220>
   <223> primer
<400> 56
   agaggagagt tagagcctta gtcaatatat ttcaggc 37
<210> 57
   <211> 35
   <212> DNA
   <213> Artificial sequence
<220>
   <223> primer
<400> 57
   ggtattgagg gtcgcatgtc cggcatcgtt gtcca 35
<210> 58
   <211> 37
   <212> DNA
   <213> Artificial sequence
<220>
   <223> primer
<400> 58
   agaggagagt tagagcctca gacatatttc agtccca 37
<210> 59
   <211> 35
   <212> DNA
   <213> Artificial sequence
<220>
   <223> primer
<400> 59
   ggtattgagg gtcgcatgcg actgaacaac ctcgg 35
<210> 60
   <211> 37
   <212> DNA
   <213> Artificial sequence
<220>
   <223> primer
<400> 60
   agaggagagt tagagcctca gttctccacg tattcca 37
<210> 61
   <211> 35
   <212> DNA
   <213> Artificial sequence
<220>
   <223> primer
<400> 61
   ggtattgagg gtcgcatgag cgtggttcac cggaa 35
<210> 62
   <211> 37
   <212> DNA
   <213> Artificial sequence
<220>
   <223> primer
<400> 62
   agaggagagt tagagcctca atcgatatat ttcagtc 37
<210> 63
   <211> 35
   <212> DNA
   <213> Artificial sequence
<220>
   <223> primer
<400> 63
   ggtattgagg gtcgcatgag cctggttaat atgaa 35
<210> 64
   <211> 37
   <212> DNA
   <213> Artificial sequence
<220>
   <223> primer
<400> 64
   agaggagagt tagagcctta tgactttaac gcgttga 37
<210> 65
   <211> 684
   <212> DNA
   <213> C. testosteroni
<400> 65
   atgtacgaac tgggagttgt ctaccgcaat atccagcgcg ccgaccgcgc tgctgctgac      60
   ggcctggccg ccctgggctc cgccaccgtg cacgaggcca tgggccgcgt cggtctgctc     120
   aagccctata tgcgccccat ctatgccggc aagcaggtct cgggcaccgc cgtcacggtg     180
   ctgctgcagc ccggcgacaa ctggatgatg catgtggctg ccgagcagat tcagcccggc     240
   gacatcgtgg tcgcagccgt caccgcagag tgcaccgacg gctacttcgg cgatctgctg     300
   gccaccagct tccaggcgcg cggcgcacgt gcgctgatca tcgatgccgg cgtgcgcgac     360
   gtgaagacgc tgcaggagat ggactttccg gtctggagca aggccatctc ttccaagggc     420
   acgatcaagg ccaccctggg ctcggtcaac atccccatcg tctgcgccgg catgctggtc     480
   acgcccggtg acgtgatcgt ggccgacgac gacggcgtgg tctgcgtgcc cgccgcgcgt     540
   gccgtggaag tgctggccgc cgcccagaag cgtgaaagct tcgaaggcga aaagcgcgcc     600
   aagctggcct cgggcatcct cggcctggat atgtacaaga tgcgcgagcc cctggaaaag     660
   gccggcctga aatatattga ctaa                                            684
<210> 66
   <211> 227
   <212> PRT
   <213> C. testosteroni
<400> 66
   Met Tyr Glu Leu Gly Val Val Tyr Arg Asn Ile Gln Arg Ala Asp Arg
   1               5                   10                  15
   Ala Ala Ala Asp Gly Leu Ala Ala Leu Gly Ser Ala Thr Val His Glu
               20                  25                  30
   Ala Met Gly Arg Val Gly Leu Leu Lys Pro Tyr Met Arg Pro Ile Tyr
           35                  40                  45
   Ala Gly Lys Gln Val Ser Gly Thr Ala Val Thr Val Leu Leu Gln Pro
       50                  55                  60
   Gly Asp Asn Trp Met Met His Val Ala Ala Glu Gln Ile Gln Pro Gly
   65 70 75 80
   Asp Ile Val Val Ala Ala Val Thr Ala Glu Cys Thr Asp Gly Tyr Phe
   85 90 95
   Gly Asp Leu Leu Ala Thr Ser Phe Gln Ala Arg Gly Ala Arg Ala Leu
   100 105 110
   Ile Ile Asp Ala Gly Val Arg Asp Val Lys Thr Leu Gln Glu Met Asp
   115 120 125
   Phe Pro Val Trp Ser Lys Ala Ile Ser Ser Lys Gly Thr Ile Lys Ala
   130 135 140
   Thr Leu Gly Ser Val Asn Ile Pro Ile Val Cys Ala Gly Met Leu Val
   145 150 155 160
   Thr Pro Gly Asp Val Ile Val Ala Asp Asp Asp Gly Val Val Cys Val
   165 170 175
   Pro Ala Ala Arg Ala Val Glu Val Leu Ala Ala Ala Gln Lys Arg Glu
   180 185 190
   Ser Phe Glu Gly Glu Lys Arg Ala Lys Leu Ala Ser Gly Ile Leu Gly
   195 200 205
   Leu Asp Met Tyr Lys Met Arg Glu Pro Leu Glu Lys Ala Gly Leu Lys
   210 215 220
   Tyr Ile Asp
   225
<210> 67
   <211> 42
   <212> DNA
   <213> Artificial sequence
<220>
   <223> primer
<400> 67
   actcggatcc gaaggagata tacatatgta cgaactggga ct 42
<210> 68
   <211> 33
   <212> DNA
   <213> Artificial sequence
<220>
   <223> primer
<400> 68
   cggctgtcga ccgttagtca atatatttca ggc 33
<210> 69
   <211> 31
   <212> DNA
   <213> Artificial sequence
<220>
   <223> primer
<400> 69
   cgcggatcca taatggttga gaacattacc g 31
<210> 70
   <211> 30
   <212> DNA
   <213> Artificial sequence
<220>
   <223> primer
<400> 70
   acgcgtcgac ttacagcact gccacaatcg 30
<210> 71
   <211> 32
   <212> DNA
   <213> Artificial sequence
<220>
   <223> primer
<400> 71
   ccggaattca taatggtcga actgggagtt gt 32
<210> 72
   <211> 33
   <212> DNA
   <213> Artificial sequence
<220>
   <223> primer
<400> 72
   gaatgcggcc gcttagtcaa tatatttcag gcc 33
<210> 73
   <211> 15
   <212> DNA
   <213> Artificial sequence
<220>
   <223> primer
<400> 73
   ggtattgagg gtcgc 15
<210> 74
   <211> 17
   <212> DNA
   <213> Artificial sequence
<220>
   <223> primer
<400> 74
   agaggagagt tagagcc 17

### SEQUENCE LISTING

<110> CARGILL, INC.
<120> CHEWING GUM COMPOSITIONS COMPRISING MONATIN AND METHODS FOR MAKING SAME
<130> 023829-0361
<140> PCT/US2004/026330
   <141> 2004-08-16
<150> 60/495,191
   <151> 2003-08-14
<160> 74
<170> Patent In version 3.2
<210> 1
   <211> 1170
   <212> DNA
   <213> Sinorhizobium meliloti
<400> 1
   atgttcgacg ccctcgcccg ccaagccgac gatcccttgc ttttcctgat cggcctgttc     60
   aggaaggatg agcgccccgg aaaggtcgat ctcggcgtag gagtctatcg cgacgagacc    120
   ggacgcacgc cgatcttccg ggccgtcaag gcggcggaaa agcggcttct cgaaacacag    180
   gacagcaagg cctatatcgg ccccgaaggg gacctcgtct ttctcgatcg gctctgggaa    240
   ctcgtcggcg gcgacacgat cgagcggagc catgttgcgg gcgtccagac gcccggcggc    300
   tccggcgcgc tccgtttggc ggcggacctc atcgcccgca tgggcggccg aggcatctgg    360
   ctcgggctgc cgagctggcc gaaccacgcg ccgatcttca aggcggccgg gctcgatatc    420
   gccacctacg acttcttcga cattccgtcg cagtcggtca tcttcgataa tctggtgagc    480
   gcgctggaag gcgccgcatc cggcgatgcg gtgctgctgc atgcaagctg ccacaacccg    540
   accggcggcg tcctgagcga agcacaatgg atggagatcg ccgcgctggt ggccgagcgc    600
   ggcctgctgc cgctcgtcga tctcgcctat caggggttcg gccgcggcct cgaccaggat    660
   gtcgcgggcc tccggcatct tctcggcgtg gtcccggaag cgctcgtcgc ggtttcctgc    720
   tcgaagtcct tcgggcttta tcgcgagcgc gcgggcgcga tcttcgcgcg gaccagctcg    780
   actgcctcgg cggacagggt gcgctcaaac ctcgcgggcc tcgcacgcac cagctattcc    840
   atgccgccgg atcacggcgc agccgtcgtg cggacgatcc ttgacgaccc ggaactcagg    900
   cgcgactgga cggaggagct cgagacgatg cggctcagga tgacgggcct ccggcggtcg    960
   cttgccgagg gactccgcac ccgctggcag agcctcggcg cagtcgccga tcaggagggc   1020
   atgttctcca tgctgccgct ttccgaagcg gaggttatgc ggctcaggac cgagcacggc   1080
   atctatatgc cggcatccgg ccgcatcaac atcgccgggc tgaagacggc ggaagccgcc   1140
   gagattgccg gcaagttcac cagtctctga                                    1170
<210> 2
   <211> 389
   <212> PRT
   <213> Sinorhizobium meliloti
<400> 2
   Met Phe Asp Ala Leu Ala Arg Gln Ala Asp Asp Pro Leu Leu Phe Leu
   1               5                   10                  15
   Ile Gly Leu Phe Arg Lys Asp Glu Arg Pro Gly Lys Val Asp Leu Gly
               20                  25                  30
   Val Gly Val Tyr Arg Asp Glu Thr Gly Arg Thr Pro Ile Phe Arg Ala
           35                  40                  45
   Val Lys Ala Ala Glu Lys Arg Leu Leu Glu Thr Gln Asp Ser Lys Ala
       50                  55                  60
   Tyr Ile Gly Pro Glu Gly Asp Leu Val Phe Leu Asp Arg Leu Trp Glu
   65                  70                  75                  80
   Leu Val Gly Gly Asp Thr Ile Glu Arg Ser His Val Ala Gly Val Gln
                   85                  90                  95
   Thr Pro Gly Gly Ser Gly Ala Leu Arg Leu Ala Ala Asp Leu Ile Ala
               100                 105                 110
   Arg Met Gly Gly Arg Gly Ile Trp Leu Gly Leu Pro Ser Trp Pro Asn
           115                 120                 125
   His Ala Pro Ile Phe Lys Ala Ala Gly Leu Asp Ile Ala Thr Tyr Asp
       130                 135                 140
   Phe Phe Asp Ile Pro Ser Gln Ser Val Ile Phe Asp Asn Leu Val Ser
   145                 150                 155                 160
   Ala Leu Glu Gly Ala Ala Ser Gly Asp Ala Val Leu Leu His Ala Ser
                   165                 170                 175
   Cys His Asn Pro Thr Gly Gly Val Leu Ser Glu Ala Gln Trp Met Glu
               180                 185                 190
   Ile Ala Ala Leu Val Ala Glu Arg Gly Leu Leu Pro Leu Val Asp Leu
           195                 200                 205
   Ala Tyr Gln Gly Phe Gly Arg Gly Leu Asp Gln Asp Val Ala Gly Leu
       210                 215                 220
   Arg His Leu Leu Gly Val Val Pro Glu Ala Leu Val Ala Val Ser Cys
   225 230 235 240
   Ser Lys Ser Phe Gly Leu Tyr Arg Glu Arg Ala Gly Ala Ile Phe Ala
   245 250 255
   Arg Thr Ser Ser Thr Ala Ser Ala Asp Arg Val Arg Ser Asn Leu Ala
   260 265 270
   Gly Leu Ala Arg Thr Ser Tyr Ser Met Pro Pro Asp His Gly Ala Ala
   275 280 285
   Val Val Arg Thr Ile Leu Asp Asp Pro Glu Leu Arg Arg Asp Trp Thr
   290 295 300
   Glu Glu Leu Glu Thr Met Arg Leu Arg Met Thr Gly Leu Arg Arg Ser
   305 310 315 320
   Leu Ala Glu Gly Leu Arg Thr Arg Trp Gln Ser Leu Gly Ala Val Ala
   325 330 335
   Asp Gln Glu Gly Met Phe Ser Met Leu Pro Leu Ser Glu Ala Glu Val
   340 345 350
   Met Arg Leu Arg Thr Glu His Gly Ile Tyr Met Pro Ala Ser Gly Arg
   355 360 365
   Ile Asn Ile Ala Gly Leu Lys Thr Ala Glu Ala Ala Glu Ile Ala Gly
   370 375 380
   Lys Phe Thr Ser Leu
   385
<210> 3
   <211> 1260
   <212> DNA
   <213> Rhodobacter sphaeroides
<400> 3
   atgcgctcta cgacggctcc tggtccgagt ggggcatgta tgacgatctc aaggtcgcga      60
   aaggatgacg aaggaatgct gaccgccctg aagccgcagc ccgcggacaa gatcctgcaa     120
   ctgatccaga tgttccgcga ggatgcgcgc gcggacaaga tcgatctggg cgtgggcgtc     180
   tacaaggacc cgaccgggct caccccggtc atgcgggccg tgaaggcggc cgagaagcgg     240
   ctctgggagg tcgagaccac caagacctac accggccttg ccgacgagcc ggcctacaat     300
   gccgcgatgg cgaagctgat cctcgcgggc gcggtcccgg ccgaccgggt ggcctcggtc     360
   gccacccccg gcggcacggg cgcggtgcgt caggcgctcg agctgatccg catggcctcg     420
   cccgaggcca ccgtctggat ctcgaacccg acctggccga accatctgtc gatcgtgaaa     480
   tatctcggca tcccgatgcg ggaataccgc tatttcgacg ccgagaccgg cgccgtcgat     540
   gccgagggca tgatggagga tctggcccag gtgaaggcgg gcgacgtggt gctgctgcac     600
   ggctgctgcc acaacccgac cggcgccaac ccgaacccgg tgcagtggct ggccatctgc     660
   gagagcctgg cccggacagg cgcggtgccg ctgatcgacc tcgcctatca gggcttcggc     720
   gacgggctcg agatggatgc ggcggcgacg cggcttctgg ccaccagact gcccgaggtg     780
   ctgatcgcgg cctcctgctc gaagaacttc ggcatctacc gcgagcgcac gggcatcctg     840
   atcgccatcg gcgaggcggc gggccggggc acggtgcagg ccaacctcaa cttcctgaac     900
   cggcagaact actccttccc gccggaccat ggcgcgcggc tcgtgaccat gatcctcgag     960
   gacgagacgc tgagcgccga ctggaaggcg gaactcgagg aggtgcggct caacatgctg    1020
   acactgcgcc gccagcttgc cgatgcgctg caggccgaga ccggctcgaa ccgcttcggc    1080
   ttcgtggccg agcatcgcgg catgttctcg cgcctcggga tcacgcccgc cgaggtggag    1140
   cggctgcgga ccgagcacgg ggtctacatg gtgggcgatt cgcggctgaa catcgcgggg    1200
   ctgaaccgga cgaccgtgcc ggtgctggcg cgcgcggtgg ccaaggtgct gcgcggctga    1260
<210> 4
   <211> 419
   <212> PRT
   <213> Rhodobacter sphaeroides
<400> 4
   Met Arg Ser Thr Thr Ala Pro Gly Pro Ser Gly Ala Cys Met Thr Ile
   1               5                   10                  15
   Ser Arg Ser Arg Lys Asp Asp Glu Gly Met Leu Thr Ala Leu Lys Pro
               20                  25                  30
   Gln Pro Ala Asp Lys Ile Leu Gln Leu Ile Gln Met Phe Arg Glu Asp
           35                  40                  45
   Ala Arg Ala Asp Lys Ile Asp Leu Gly Val Gly Val Tyr Lys Asp Pro
       50                  55                  60
   Thr Gly Leu Thr Pro Val Met Arg Ala Val Lys Ala Ala Glu Lys Arg
   65                  70                  75                  80
   Leu Trp Glu Val Glu Thr Thr Lys Thr Tyr Thr Gly Leu Ala Asp Glu
                   85                  90                  95
   Pro Ala Tyr Asn Ala Ala Met Ala Lys Leu Ile Leu Ala Gly Ala Val
           100                 105                 110
   Pro Ala Asp Arg Val Ala Ser Val Ala Thr Pro Gly Gly Thr Gly Ala
       115                 120                 125
   Val Arg Gln Ala Leu Glu Leu Ile Arg Met Ala Ser Pro Glu Ala Thr
       130                 135                 140
   Val Trp Ile Ser Asn Pro Thr Trp Pro Asn His Leu Ser Ile Val Lys
   145                 150                 155                 160
   Tyr Leu Gly Ile Pro Met Arg Glu Tyr Arg Tyr Phe Asp Ala Glu Thr
                   165                 170                 175
   Gly Ala Val Asp Ala Glu Gly Met Met Glu Asp Leu Ala Gln Val Lys
               180                 185                 190
   Ala Gly Asp Val Val Leu Leu His Gly Cys Cys His Asn Pro Thr Gly
           195                 200                 205
   Ala Asn Pro Asn Pro Val Gln Trp Leu Ala Ile Cys Glu Ser Leu Ala
       210                 215                 220
   Arg Thr Gly Ala Val Pro Leu Ile Asp Leu Ala Tyr Gln Gly Phe Gly
   225                 230                 235                 240
   Asp Gly Leu Glu Met Asp Ala Ala Ala Thr Arg Leu Leu Ala Thr Arg
                   245                 250                 255
   Leu Pro Glu Val Leu Ile Ala Ala Ser Cys Ser Lys Asn Phe Gly Ile
               260                 265                 270
   Tyr Arg Glu Arg Thr Gly Ile Leu Ile Ala Ile Gly Glu Ala Ala Gly
           275                 280                 285
   Arg Gly Thr Val Gln Ala Asn Leu Asn Phe Leu Asn Arg Gln Asn Tyr
       290                 295                 300
   Ser Phe Pro Pro Asp His Gly Ala Arg Leu Val Thr Met Ile Leu Glu
   305                 310                 315                 320
   Asp Glu Thr Leu Ser Ala Asp Trp Lys Ala Glu Leu Glu Glu Val Arg
                   325                 330                 335
   Leu Asn Met Leu Thr Leu Arg Arg Gln Leu Ala Asp Ala Leu Gln Ala
               340                 345                 350
   Glu Thr Gly Ser Asn Arg Phe Gly Phe Val Ala Glu His Arg Gly Met
   355 360 365
   Phe Ser Arg Leu Gly Ile Thr Pro Ala Glu Val Glu Arg Leu Arg Thr
   370 375 380
   Glu His Gly Val Tyr Met Val Gly Asp Ser Arg Leu Asn Ile Ala Gly
   385 390 395 400
   Leu Asn Arg Thr Thr Val Pro Val Leu Ala Arg Ala Val Ala Lys Val
   405 410 415
   Leu Arg Gly
<210> 5
   <211> 1260
   <212> DNA
   <213> Rhodobacter sphaeroides
<400> 5
   atgcgctcta cgacggctcc tggtccgagt ggggcatgta tgacgatctc aaggtcgcga      60
   aaggatgacg aaggaatgct gaccgccctg aagccgcagc ccgcggacaa gatcctgcaa     120
   ctgatccaga tgttccgcga ggatgcgcgc gcggacaaga tcgatctggg cgtgggcgtc     180
   tacaaggacc cgaccgggct caccccggtc atgcgggccg tgaaggccgc cgagaagcgg     240
   ctctgggagg tcgagaccac caagacctac accggccttg ccggcgagcc cgcctacaat     300
   gccgcgatgg cgaagctgat cctcgcaggc gcggtcccgg ccgaccgggt ggcctcggtc     360
   gccacccccg gcggcacggg cgcggtgcgt caggcgctcg agctgatccg catggcctcg     420
   cccgaggcca ctgtctggat ctcgaacccg acctggccga accatctgtc gatcgtgaaa     480
   tatctcggca tcccgatgcg ggaataccgc tatttcgacg ccgagaccgg cgccgtcgat     540
   gccgagggct tgatggagga tctggcccag gtgaaggcgg gcgacgtggt gctgctgcac     600
   ggctgctgcc acaacccgac cggcgccaac ccgaacccgg tgcagtggct ggccgtctgc     660
   gagagcctgg cccggacagg cgcggtgccg ctgatcgacc tcgcctatca gggcttcggc     720
   gacgggctcg agatggatgc ggcggcgacg cggcttctgg ccaccagact gcccgaggtg     780
   ctgatcgcgg cctcctgctc gaagaacttc ggcatctacc gcgagcgaac gggcatcctg     840
   atcgccatcg gcgaggcggc gggccggggc acggtgcagg ccaacctcaa cttcctgaac     900
   cggcagaact actccttccc gccggaccat ggcgcgcggc tcgtgaccat gatcctcgag     960
   gacgagacgc tgagcgccga ctggaaggcg gaactcgagg aggtgcggct caacatgctg    1020
   acgctgcgcc gccagcttgc cgatgcgctg caggccgaga ccggctcgaa ccgcttcggc    1080
   ttcgtggccg agcatcgcgg catgttctcg cgcctcggga tcacgcccgc cgaggtggag    1140
   cggctgcgga ccgagcacgg ggtctacatg gtgggcgatt cgcggctgaa catcgcgggg    1200
   ctgaaccgga cgaccgtgcc ggtgctggcg cgcgcggtgg ccaaggtgct gcgcggctga    1260
<210> 6
   <211> 419
   <212> PRT
   <213> Rhodobacter sphaeroides
<400> 6
   Met Arg Ser Thr Thr Ala Pro Gly Pro Ser Gly Ala Cys Met Thr Ile
   1               5                   10                  15
   Ser Arg Ser Arg Lys Asp Asp Glu Gly Met Leu Thr Ala Leu Lys Pro
               20                  25                  30
   Gln Pro Ala Asp Lys Ile Leu Gln Leu Ile Gln Met Phe Arg Glu Asp
           35                  40                  45
   Ala Arg Ala Asp Lys Ile Asp Leu Gly Val Gly Val Tyr Lys Asp Pro
       50                  55                  60
   Thr Gly Leu Thr Pro Val Met Arg Ala Val Lys Ala Ala Glu Lys Arg
   65                  70                  75                  80
   Leu Trp Glu Val Glu Thr Thr Lys Thr Tyr Thr Gly Leu Ala Gly Glu
                   85                  90                  95
   Pro Ala Tyr Asn Ala Ala Met Ala Lys Leu Ile Leu Ala Gly Ala Val
               100                 105                 110
   Pro Ala Asp Arg Val Ala Ser Val Ala Thr Pro Gly Gly Thr Gly Ala
           115                 120                 125
   Val Arg Gln Ala Leu Glu Leu Ile Arg Met Ala Ser Pro Glu Ala Thr
       130                 135                 140
   Val Trp Ile Ser Asn Pro Thr Trp Pro Asn His Leu Ser Ile Val Lys
   145                 150                 155                 160
   Tyr Leu Gly Ile Pro Met Arg Glu Tyr Arg Tyr Phe Asp Ala Glu Thr
                   165                 170                 175
   Gly Ala Val Asp Ala Glu Gly Leu Met Glu Asp Leu Ala Gln Val Lys
               180                 185                 190
   Ala Gly Asp Val Val Leu Leu His Gly Cys Cys His Asn Pro Thr Gly
           195                 200                 205
   Ala Asn Pro Asn Pro Val Gln Trp Leu Ala Val Cys Glu Ser Leu Ala
       210                 215                 220
   Arg Thr Gly Ala Val Pro Leu Ile Asp Leu Ala Tyr Gln Gly Phe Gly
   225                 230                 235                 240
   Asp Gly Leu Glu Met Asp Ala Ala Ala Thr Arg Leu Leu Ala Thr Arg
                   245                 250                 255
   Leu Pro Glu Val Leu Ile Ala Ala Ser Cys Ser Lys Asn Phe Gly Ile
               260                 265                 270
   Tyr Arg Glu Arg Thr Gly Ile Leu Ile Ala Ile Gly Glu Ala Ala Gly
           275                 280                 285
   Arg Gly Thr Val Gln Ala Asn Leu Asn Phe Leu Asn Arg Gln Asn Tyr
       290                 295                 300
   Ser Phe Pro Pro Asp His Gly Ala Arg Leu Val Thr Met Ile Leu Glu
   305                 310                 315                 320
   Asp Glu Thr Leu Ser Ala Asp Trp Lys Ala Glu Leu Glu Glu Val Arg
                   325                 330                 335
   Leu Asn Met Leu Thr Leu Arg Arg Gln Leu Ala Asp Ala Leu Gln Ala
               340                 345                 350
   Glu Thr Gly Ser Asn Arg Phe Gly Phe Val Ala Glu His Arg Gly Met
           355                 360                 365
   Phe Ser Arg Leu Gly Ile Thr Pro Ala Glu Val Glu Arg Leu Arg Thr
       370                 375                 380
   Glu His Gly Val Tyr Met Val Gly Asp Ser Arg Leu Asn Ile Ala Gly
   385                 390                 395                 400
   Leu Asn Arg Thr Thr Val Pro Val Leu Ala Arg Ala Val Ala Lys Val
                   405                 410                 415
   Leu Arg Gly
<210> 7
   <211> 1239
   <212> DNA
   <213> Leishmania major
<400> 7
   atgtccatgc aggcggccat gaccacggcg gagcgctggc agaagattca ggcacaagct      60
   cccgatgtca tcttcgatct cgcaaaacgc gccgccgctg ccaagggccc caaggccaac     120
   ctcgtcattg gtgcctaccg cgacgagcag ggccgtccct atccgctacg cgtggtccgc     180
   aaggctgagc agcttctctt ggacatgaat ctcgactacg agtacctacc catctcgggc     240
   taccagccct tcatcgatga ggcggtaaag attatctacg gcaataccgt cgagctggag     300
   aacctggttg cggtgcagac gctgagcggg accggtgctg tctctctcgg ggcgaagctg     360
   ctgactcgcg tcttcgacgc tgagacgacg cccatctacc tttccgaccc cacgtggccc     420
   aaccactacg gcgtcgtgaa ggctgctggc tggaagaaca tctgcacgta cgcctactac     480
   gaccccaaga cggtcagcct gaatttcgag ggcatgaaga aagacattct ggcggcgccg     540
   gacggctccg tgttcattct gcaccagtgc gcgcacaacc ccaccggcgt ggacccgtcg     600
   caggagcagt ggaacgagat cgcgtcactg atgctggcca agcaccatca ggtgttcttc     660
   gactccgcct accaaggcta tgcgagcggc agcctcgaca cggacgcgta tgctgcccgc     720
   ctgtttgccc gccgcggcat cgaggtactg ctggcgcagt cgttctccaa gaacatgggc     780
   ttgtacagcg agcgtgcagg cacgctgtcg ctgctcctca aggacaagac gaagcgcgcg     840
   gatgtaaaga gcgtgatgga ttcgctgatc cgtgaggagt acacgtgccc cccagcccac     900
   ggtgcccgct tagcccacct aatcctgagc aacaacgaac tgcgaaagga gtgggaggca     960
   gagctatcag ccatggcaga gcgcatccgt acgatgcgcc gcaccgtgta cgacgagctg    1020
   ctgcgcctgc agacgcccgg gagctgggaa catgtcatta accagattgg catgttttcc    1080
   ttcctcgggc tgtcaaaggc gcagtgcgaa tactgccaaa accacaacat cttcatcaca    1140
   gtgtcgggcc gcgctaacat ggcaggtctg acgcatgaga cggcgctgat gctagcacag    1200
   acgatcaacg atgctgtgcg caatgtgaat cgtgagtga                           1239
<210> 8
   <211> 412
   <212> PRT
   <213> Leishmania major
<400> 8
   Met Ser Met Gln Ala Ala Met Thr Thr Ala Glu Arg Trp Gln Lys Ile
   1 5 10 15
   Gln Ala Gln Ala Pro Asp Val Ile Phe Asp Leu Ala Lys Arg Ala Ala
   20 25 30
   Ala Ala Lys Gly Pro Lys Ala Asn Leu Val Ile Gly Ala Tyr Arg Asp
   35 40 45
   Glu Gln Gly Arg Pro Tyr Pro Leu Arg Val Val Arg Lys Ala Glu Gln
   50 55 60
   Leu Leu Leu Asp Met Asn Leu Asp Tyr Glu Tyr Leu Pro Ile Ser Gly
   65                  70                  75                  80
   Tyr Gln Pro Phe Ile Asp Glu Ala Val Lys Ile Ile Tyr Gly Asn Thr
                   85                  90                  95
   Val Glu Leu Glu Asn Leu Val Ala Val Gln Thr Leu Ser Gly Thr Gly
               100                 105                 110
   Ala Val Ser Leu Gly Ala Lys Leu Leu Thr Arg Val Phe Asp Ala Glu
           115                 120                 125
   Thr Thr Pro Ile Tyr Leu Ser Asp Pro Thr Trp Pro Asn His Tyr Gly
       130                 135                 140
   Val Val Lys Ala Ala Gly Trp Lys Asn Ile Cys Thr Tyr Ala Tyr Tyr
   145                 150                 155                 160
   Asp Pro Lys Thr Val Ser Leu Asn Phe Glu Gly Met Lys Lys Asp Ile
                   165                 170                 175
   Leu Ala Ala Pro Asp Gly Ser Val Phe Ile Leu His Gln Cys Ala His
               180                 185                 190
   Asn Pro Thr Gly Val Asp Pro Ser Gln Glu Gln Trp Asn Glu Ile Ala
           195                 200                 205
   Ser Leu Met Leu Ala Lys His His Gln Val Phe Phe Asp Ser Ala Tyr
       210                 215                 220
   Gln Gly Tyr Ala Ser Gly Ser Leu Asp Thr Asp Ala Tyr Ala Ala Arg
   225                 230                 235                 240
   Leu Phe Ala Arg Arg Gly Ile Glu Val Leu Leu Ala Gln Ser Phe Ser
                   245                 250                 255
   Lys Asn Met Gly Leu Tyr Ser Glu Arg Ala Gly Thr Leu Ser Leu Leu
               260                 265                 270
   Leu Lys Asp Lys Thr Lys Arg Ala Asp Val Lys Ser Val Met Asp Ser
           275                 280                 285
   Leu Ile Arg Glu Glu Tyr Thr Cys Pro Pro Ala His Gly Ala Arg Leu
       290                 295                 300
   Ala His Leu Ile Leu Ser Asn Asn Glu Leu Arg Lys Glu Trp Glu Ala
   305                 310                 315                 320
   Glu Leu Ser Ala Met Ala Glu Arg Ile Arg Thr Met Arg Arg Thr Val
                   325                 330                 335
   Tyr Asp Glu Leu Leu Arg Leu Gln Thr Pro Gly Ser Trp Glu His Val
               340                 345                 350
   Ile Asn Gln Ile Gly Met Phe Ser Phe Leu Gly Leu Ser Lys Ala Gln
           355                 360                 365
   Cys Glu Tyr Cys Gln Asn His Asn Ile Phe Ile Thr Val Ser Gly Arg
       370                 375                 380
   Ala Asn Met Ala Gly Leu Thr His Glu Thr Ala Leu Met Leu Ala Gln
   385                 390                 395                 400
   Thr Ile Asn Asp Ala Val Arg Asn Val Asn Arg Glu
                   405                 410
<210> 9
   <211> 1182
   <212> DNA
   <213> Bacillus subtilis
<400> 9
   atggaacatt tgctgaatcc gaaagcaaga gagatcgaaa tttcaggaat acgcaaattc 60
   tcgaatcttg tagcccaaca cgaagacgtc atttcactta caatcggcca gcctgatttt 120
   ttcacaccgc atcatgtgaa agctgccgca aaaaaagcca ttgatgaaaa cgtgacgtca 180
   tatactccga atgccggcta cctggagctg agacaagctg tgcagcttta tatgaagaaa 240
   aaagcggatt tcaactatga tgctgaatct gaaattatca tcacaacagg cgcaagccaa 300
   gccattgatg ctgcattccg gacgatttta tctcccggtg atgaagtcat tatgccaggg 360
   cctatttatc cgggctatga acctattatc aatttgtgcg gggccaagcc tgtcattgtt 420
   gatactacgt cacacggctt taagcttacc gcccggctga ttgaagatgc tctgacaccc 480
   aacaccaagt gtgtcgtgct tccttatccg tcaaacccta ccggcgtgac tttatctgaa 540
   gaagaactga aaagcatcgc agctctctta aaaggcagaa atgtcttcgt attgtctgat 600
   gaaatataca gtgaattaac atatgacaga ccgcattact ccatcgcaac ctatttgcgg 660
   gatcaaacga ttgtcattaa cgggttgtca aaatcacaca gcatgaccgg ttggagaatt 720
   ggatttttat ttgcaccgaa agacattgca aagcacattt taaaggttca tcaatacaat 780
   gtgtcgtgcg cctcatccat ttctcaaaaa gccgcgcttg aagctgtcac aaacggcttt 840
   gacgatgcat tgattatgag agaacaatac aaaaaacgtc tggactatgt ttatgaccgt 900
   cttgtttcca tgggacttga cgtagttaaa ccgtccggtg cgttttatat cttcccttct 960
   attaaatcat ttggaatgac ttcatttgat tttagtatgg ctcttttgga agacgctggc 1020
   gtggcactcg tgccgggcag ctcgttctca acatatggtg aaggatatgt aaggctgtct 1080
   tttgcatgct caatggacac gctgagagaa ggcctagacc gtttagaatt atttgtatta 1140
   aaaaaacgtg aagcaatgca gacgataaac aacggcgttt aa 1182
<210> 10
   <211> 393
   <212> PRT
   <213> Bacillus subtilis
<400> 10
   Met Glu His Leu Leu Asn Pro Lys Ala Arg Glu Ile Glu Ile Ser Gly
   1               5                   10                  15
   Ile Arg Lys Phe Ser Asn Leu Val Ala Gln His Glu Asp Val Ile Ser
               20                  25                  30
   Leu Thr Ile Gly Gln Pro Asp Phe Phe Thr Pro His His Val Lys Ala
           35                  40                  45
   Ala Ala Lys Lys Ala Ile Asp Glu Asn Val Thr Ser Tyr Thr Pro Asn
       50                  55                  60
   Ala Gly Tyr Leu Glu Leu Arg Gln Ala Val Gln Leu Tyr Met Lys Lys
   65                  70                  75                  80
   Lys Ala Asp Phe Asn Tyr Asp Ala Glu Ser Glu Ile Ile Ile Thr Thr
                   85                  90                  95
   Gly Ala Ser Gln Ala Ile Asp Ala Ala Phe Arg Thr Ile Leu Ser Pro
               100                 105                 110
   Gly Asp Glu Val Ile Met Pro Gly Pro Ile Tyr Pro Gly Tyr Glu Pro
           115                 120                 125
   Ile Ile Asn Leu Cys Gly Ala Lys Pro Val Ile Val Asp Thr Thr Ser
       130                 135                 140
   His Gly Phe Lys Leu Thr Ala Arg Leu Ile Glu Asp Ala Leu Thr Pro
   145                 150                 155                 160
   Asn Thr Lys Cys Val Val Leu Pro Tyr Pro Ser Asn Pro Thr Gly Val
                   165                 170                 175
   Thr Leu Ser Glu Glu Glu Leu Lys Ser Ile Ala Ala Leu Leu Lys Gly
               180                 185                 190
   Arg Asn Val Phe Val Leu Ser Asp Glu Ile Tyr Ser Glu Leu Thr Tyr
           195                 200                 205
   Asp Arg Pro His Tyr Ser Ile Ala Thr Tyr Leu Arg Asp Gln Thr Ile
       210                 215                 220
   Val Ile Asn Gly Leu Ser Lys Ser His Ser Met Thr Gly Trp Arg Ile
   225                 230                 235                 240
   Gly Phe Leu Phe Ala Pro Lys Asp Ile Ala Lys His Ile Leu Lys Val
                   245                 250                 255
   His Gln Tyr Asn Val Ser Cys Ala Ser Ser Ile Ser Gln Lys Ala Ala
               260                 265                 270
   Leu Glu Ala Val Thr Asn Gly Phe Asp Asp Ala Leu Ile Met Arg Glu
           275                 280                 285
   Gln Tyr Lys Lys Arg Leu Asp Tyr Val Tyr Asp Arg Leu Val Ser Met
       290                 295                 300
   Gly Leu Asp Val Val Lys Pro Ser Gly Ala Phe Tyr Ile Phe Pro Ser
   305                 310                 315                 320
   Ile Lys Ser Phe Gly Met Thr Ser Phe Asp Phe Ser Met Ala Leu Leu
                   325                 330                 335
   Glu Asp Ala Gly Val Ala Leu Val Pro Gly Ser Ser Phe Ser Thr Tyr
               340                 345                 350
   Gly Glu Gly Tyr Val Arg Leu Ser Phe Ala Cys Ser Met Asp Thr Leu
           355                 360                 365
   Arg Glu Gly Leu Asp Arg Leu Glu Leu Phe Val Leu Lys Lys Arg Glu
       370                 375                 380
   Ala Met Gln Thr Ile Asn Asn Gly Val
   385                 390
<210> 11
   <211> 1176
   <212> DNA
   <213> Lactobacillus amylovorus
<400> 11
   atgccagaat tagctaatga tttaggatta agcaaaaaga tcactgatgt aaaagcttca 60
   ggaattagaa tctttgataa caaagtttca gctattcctg gcattatcaa attgactttg 120
   ggtgaaccag atatgaatac tcctgagcat gttaagcaag cggctattaa gaatattgca 180
   gataatgatt cacactatgc tccacaaaag ggaaagcttg aattaagaaa agctatcagt 240
   aaatatttga aaaagattac tggaattgaa tatgatccag aaacagaaat cgtagtaaca 300
   gttggtgcaa ctgaagcaat taacgctacc ttgtttgcta ttactaatcc gggtgacaag 360
   gttgcaattc ctacgccagt cttttctcta tattggcccg tggctacact tgctgatgcc 420
   gattatgttt tgatgaatac tgcagaagat ggttttaagt taacacctaa gaagttagaa 480
   gaaactatca aagaaaatcc aacaattaaa gcagtaattt tgaattatcc aactaaccca 540
   actggtgttg aatatagcga agatgaaatt aaagctttgg ctaaggtaat taaagataat 600
   catctgtacg taattaccga tgaaatttac agtactttga cttacggtgt aaaacacttt 660
   tcaattgcca gcttaattcc agaaagagca atttatatct ctggtttatc taaatcacat 720
   gcgatgactg gttatcgttt aggctatgtt gccggacctg caaaaattat ggcagaaatt 780
   ggtaaagttc atggccttat ggtgacgact acgacggatt catcacaagc tgccgcaatt 840
   gaagcacttg aacacggact tgatgaccct gagaaatata gggaagttta tgaaaagcgt 900
   cgtgactatg ttttaaagga attagccgag atagagatgc aagcagttaa gccagaaggt 960
   gcattttata tctttgctaa aattccagct aagtatggca aagacgatat gaaatttgcc 1020
   ttggatttag cttttaaaga aaaagtgggt atcactccag gtagtgcatt tggtcctggt 1080
   ggtgaaggtc atattagatt atcttatgca tcaagtgatg aaaacttgca tgaggcaatg 1140
   aagcgaatga agaaagtttt acaagaggac gaataa 1176
<210> 12
   <211> 391
   <212> PRT
   <213> Lactobacillus amylovorus
<400> 12
   Met Pro Glu Leu Ala Asn Asp Leu Gly Leu Ser Lys Lys Ile Thr Asp
   1               5                   10                  15
   Val Lys Ala Ser Gly Ile Arg Ile Phe Asp Asn Lys Val Ser Ala Ile
               20                  25                  30
   Pro Gly Ile Ile Lys Leu Thr Leu Gly Glu Pro Asp Met Asn Thr Pro
           35                  40                  45
   Glu His Val Lys Gln Ala Ala Ile Lys Asn Ile Ala Asp Asn Asp Ser
       50                  55                  60
   His Tyr Ala Pro Gln Lys Gly Lys Leu Glu Leu Arg Lys Ala Ile Ser
   65                  70                  75                  80
   Lys Tyr Leu Lys Lys Ile Thr Gly Ile Glu Tyr Asp Pro Glu Thr Glu
   85 90 95
   Ile Val Val Thr Val Gly Ala Thr Glu Ala Ile Asn Ala Thr Leu Phe
   100 105 110
   Ala Ile Thr Asn Pro Gly Asp Lys Val Ala Ile Pro Thr Pro Val Phe
   115 120 125
   Ser Leu Tyr Trp Pro Val Ala Thr Leu Ala Asp Ala Asp Tyr Val Leu
   130 135 140
   Met Asn Thr Ala Glu Asp Gly Phe Lys Leu Thr Pro Lys Lys Leu Glu
   145 150 155 160
   Glu Thr Ile Lys Glu Asn Pro Thr Ile Lys Ala Val Ile Leu Asn Tyr
   165 170 175
   Pro Thr Asn Pro Thr Gly Val Glu Tyr Ser Glu Asp Glu Ile Lys Ala
   180 185 190
   Leu Ala Lys Val Ile Lys Asp Asn His Leu Tyr Val Ile Thr Asp Glu
   195 200 205
   Ile Tyr Ser Thr Leu Thr Tyr Gly Val Lys His Phe Ser Ile Ala Ser
   210 215 220
   Leu Ile Pro Glu Arg Ala Ile Tyr Ile Ser Gly Leu Ser Lys Ser His
   225 230 235 240
   Ala Met Thr Gly Tyr Arg Leu Gly Tyr Val Ala Gly Pro Ala Lys Ile
   245 250 255
   Met Ala Glu Ile Gly Lys Val His Gly Leu Met Val Thr Thr Thr Thr
   260 265 270
   Asp Ser Ser Gln Ala Ala Ala Ile Glu Ala Leu Glu His Gly Leu Asp
   275 280 285
   Asp Pro Glu Lys Tyr Arg Glu Val Tyr Glu Lys Arg Arg Asp Tyr Val
   290 295 300
   Leu Lys Glu Leu Ala Glu Ile Glu Met Gln Ala Val Lys Pro Glu Gly
   305 310 315 320
   Ala Phe Tyr Ile Phe Ala Lys Ile Pro Ala Lys Tyr Gly Lys Asp Asp
                   325                     330                 335
   Met Lys Phe Ala Leu Asp Leu Ala Phe Lys Glu Lys Val Gly Ile Thr
               340                 345                 350
   Pro Gly Ser Ala Phe Gly Pro Gly Gly Glu Gly His Ile Arg Leu Ser
           355                 360                 365
   Tyr Ala Ser Ser Asp Glu Asn Leu His Glu Ala Met Lys Arg Met Lys
       370                 375                 380
   Lys Val Leu Gln Glu Asp Glu
   385                 390
<210> 13
   <211> 1413
   <212> DNA
   <213> R. sphaeroides
<400> 13
   atgcgcgagc ctcttgccct cgagatcgac ccgggccacg gcggcccgct gttcctcgcc     60
   atcgccgagg cgatcaccct cgacatcacc cgcgggcggc tgaggcccgg agcgagactg    120
   cccggcacac gcgcgctggc gcgggcgctc ggcgtgcatc gcaacacggt ggatgccgcc    180
   tatcaggagt tgctgaccca gggctggctg caggccgagc ccgcgcgggg caccttcgtg    240
   gcgcaggatc tgccgcaggg gatgctggtg cacaggcccg cgcccgcgcc ggtcgagccg    300
   gtcgcgatgc gcgcggggct cgccttctcc gatggcgcgc cggaccccga gctggtgccc    360
   gacaaggcgc tggcgcgggc ctttcgccgg gcgctcctgt cgcccgcctt ccgcgccgga    420
   gcggattacg gcgatgcccg cggcacctcc tcgctgcggg aggcgctggc agcctatctc    480
   gcctcggacc ggggcgtggt cgcggatcct gcgcggctgc tgatcgcgcg gggcagccag    540
   atggcgctgt tcctggtagc ccgggcggcg ctggcgccgg gagaggcgat cgcggtcgag    600
   gagccgggct atccgctggc ctgggaggcg ttccgcgcag cgggagcgga ggtgcgcggc    660
   gtgccggtgg atggcggcgg cctcaggatc gacgcgctcg aggccgcgct ggcccgggat    720
   ccgcgaatcc gggcggtcta tgtcacgccc catcaccagt atccgacgac cgtcaccatg    780
   ggcgcggcgc ggcggttgca gcttctggaa ctggcagagc gccaccggct cgcgctgatc    840
   gaggacgact acgaccacga ataccgcttc gagggccgtc cggtgctgcc gctggctgcc    900
   cgcgcgccgg aaggtctgcc gctgatctat gtgggctcgc tgtcgaaact gctctcgccc    960
   ggtatccggc tgggatacgc gctggcgccc gagcggctgc tgacccgcat ggccgcggcg   1020
   cgcgccgcca tcgaccggca gggcgacgcg ccgctcgagg cggcgctggc cgagctgatc   1080
   cgcgacggcg atctgggccg tcatgcccgc aaggcgcgca gggtctaccg ggcgcggcgg   1140
   gatctgctgg cggagcgtct cacggcgcag ctggccgggc gcgccgcctt cgatctgccg   1200
   gccgggggcc tcgcgctgtg gctgcgctgc gcgggcgtct cggccgagac ctgggccgaa   1260
   gccgcagggc aggcggggct cgccctgctg ccgggcacgc gcttcgcgct ggagagcccg   1320
   gcgccgcagg ccttccggct gggctatgcg gcgctggacg aggggcagat cgcccgggcg   1380
   gtggagatcc tcgcccggag cttccccggc tga                                 1413
<210> 14
   <211> 470
   <212> PRT
   <213> R. sphaeroides
<400> 14
   Met Arg Glu Pro Leu Ala Leu Glu Ile Asp Pro Gly His Gly Gly Pro
   1 5 10 15
   Leu Phe Leu Ala Ile Ala Glu Ala Ile Thr Leu Asp Ile Thr Arg Gly
   20 25 30
   Arg Leu Arg Pro Gly Ala Arg Leu Pro Gly Thr Arg Ala Leu Ala Arg
   35 40 45
   Ala Leu Gly Val His Arg Asn Thr Val Asp Ala Ala Tyr Gln Glu Leu
   50 55 60
   Leu Thr Gln Gly Trp Leu Gln Ala Glu Pro Ala Arg Gly Thr Phe Val
   65 70 75 80
   Ala Gln Asp Leu Pro Gln Gly Met Leu Val His Arg Pro Ala Pro Ala
   85 90 95
   Pro Val Glu Pro Val Ala Met Arg Ala Gly Leu Ala Phe Ser Asp Gly
   100 105 110
   Ala Pro Asp Pro Glu Leu Val Pro Asp Lys Ala Leu Ala Arg Ala Phe
   115 120 125
   Arg Arg Ala Leu Leu Ser Pro Ala Phe Arg Ala Gly Ala Asp Tyr Gly
   130 135 140
   Asp Ala Arg Gly Thr Ser Ser Leu Arg Glu Ala Leu Ala Ala Tyr Leu
   145 150 155 160
   Ala Ser Asp Arg Gly Val Val Ala Asp Pro Ala Arg Leu Leu Ile Ala
   165 170 175
   Arg Gly Ser Gln Met Ala Leu Phe Leu Val Ala Arg Ala Ala Leu Ala
   180 185 190
   Pro Gly Glu Ala Ile Ala Val Glu Glu Pro Gly Tyr Pro Leu Ala Trp
   195 200 205
   Glu Ala Phe Arg Ala Ala Gly Ala Glu Val Arg Gly Val Pro Val Asp
   210 215 220
   Gly Gly Gly Leu Arg Ile Asp Ala Leu Glu Ala Ala Leu Ala Arg Asp
   225 230 235 240
   Pro Arg Ile Arg Ala Val Tyr Val Thr Pro His His Gln Tyr Pro Thr
   245 250 255
   Thr Val Thr Met Gly Ala Ala Arg Arg Leu Gln Leu Leu Glu Leu Ala
   260 265 270
   Glu Arg His Arg Leu Ala Leu Ile Glu Asp Asp Tyr Asp His Glu Tyr
   275 280 285
   Arg Phe Glu Gly Arg Pro Val Leu Pro Leu Ala Ala Arg Ala Pro Glu
   290 295 300
   Gly Leu Pro Leu Ile Tyr Val Gly Ser Leu Ser Lys Leu Leu Ser Pro
   305 310 315 320
   Gly Ile Arg Leu Gly Tyr Ala Leu Ala Pro Glu Arg Leu Leu Thr Arg
   325 330 335
   Met Ala Ala Ala Arg Ala Ala Ile Asp Arg Gln Gly Asp Ala Pro Leu
   340 345 350
   Glu Ala Ala Leu Ala Glu Leu Ile Arg Asp Gly Asp Leu Gly Arg His
   355 360 365
   Ala Arg Lys Ala Arg Arg Val Tyr Arg Ala Arg Arg Asp Leu Leu Ala
   370 375 380
   Glu Arg Leu Thr Ala Gln Leu Ala Gly Arg Ala Ala Phe Asp Leu Pro
   385 390 395 400
   Ala Gly Gly Leu Ala Leu Trp Leu Arg Cys Ala Gly Val Ser Ala Glu
   405 410 415
   Thr Trp Ala Glu Ala Ala Gly Gln Ala Gly Leu Ala Leu Leu Pro Gly
   420 425 430
   Thr Arg Phe Ala Leu Glu Ser Pro Ala Pro Gln Ala Phe Arg Leu Gly
           435                 440                 445
   Tyr Ala Ala Leu Asp Glu Gly Gln Ile Ala Arg Ala Val Glu Ile Leu
       450                 455                 460
   Ala Arg Ser Phe Pro Gly
   465                 470
<210> 15
   <211> 35
   <212> DNA
   <213> Artificial sequence
<220>
   <223> primer
<400> 15
   ggtattgagg gtcgcatgaa ggttttagtc aatgg 35
<210> 16
   <211> 37
   <212> DNA
   <213> Artificial sequence
<220>
   <223> primer
<400> 16
   agaggagagt tagagcctta tgaaatgcta gcagcct 37
<210> 17
   <211> 35
   <212> DNA
   <213> Artificial sequence
<220>
   <223> primer
<400> 17
   ggtattgagg gtcgcatgtt cgacgccctc gcccg 35
<210> 18
   <211> 37
   <212> DNA
   <213> Artificial sequence
<220>
   <223> primer
<400> 18
   agaggagagt tagagcctca gagactggtg aacttgc 37
<210> 19
   <211> 35
   <212> DNA
   <213> Artificial sequence
<220>
   <223> primer
<400> 19
   ggtattgagg gtcgcatgga acatttgctg aatcc 35
<210> 20
   <211> 37
   <212> DNA
   <213> Artificial sequence
<220>
   <223> primer
<400> 20
   agaggagagt tagagcctta aacgccgttg tttatcg 37
<210> 21
   <211> 35
   <212> DNA
   <213> Artificial sequence
<220>
   <223> primer
<400> 21
   ggtattgagg gtcgcatgcg cgagcctctt gccct 35
<210> 22
   <211> 37
   <212> DNA
   <213> Artificial sequence
<220>
   <223> primer
<400> 22
   agaggagagt tagagcctca gccggggaag ctccggg 37
<210> 23
   <211> 35
   <212> DNA
   <213> Artificial sequence
<220>
   <223> primer
<400> 23
   ggtattgagg gtcgcatgtc cacgcaggcg gccat 35
<210> 24
   <211> 37
   <212> DNA
   <213> Artificial sequence
<220>
   <223> primer
<400> 24
   agaggagagt tagagcctca ctcacgattc acattgc 37
<210> 25
   <211> 35
   <212> DNA
   <213> Artificial sequence
<220>
   <223> primer
<400> 25
   ggtattgagg gtcgcatgcc agaattagct aatga 35
<210> 26
   <211> 37
   <212> DNA
   <213> Artificial sequence
<220>
   <223> primer
<400> 26
   agaggagagt tagagcctta ttcgtcctct tgtaaaa 37
<210> 27
   <211> 35
   <212> DNA
   <213> Artificial sequence
<220>
   <223> primer
<400> 27
   ggtattgagg gtcgcatgcg ctctacgacg gctcc 35
<210> 28
   <211> 37
   <212> DNA
   <213> Artificial sequence
<220>
   <223> primer
<400> 28
   agaggagagt tagagcctca gccgcgcagc accttgg 37
<210> 29
   <211> 35
   <212> DNA
   <213> Artificial sequence
<220>
   <223> primer
<400> 29
   ggtattgagg gtcgcatgtt tgagaacatt accgc 35
<210> 30
   <211> 37
   <212> DNA
   <213> Artificial sequence
<220>
   <223> primer
<400> 30
   agaggagagt tagagcctta cagcactgcc acaatcg 37
<210> 31
   <211> 1194
   <212> DNA
   <213> E. coli
<400> 31
   gtgtttcaaa aagttgacgc ctacgctggc gacccgattc ttacgcttat ggagcgtttt      60
   aaagaagacc ctcgcagcga caaagtgaat ttaagtatcg gtctgtacta caacgaagac     120
   ggaattattc cacaactgca agccgtggcg gaggcggaag cgcgcctgaa tgcgcagcct     180
   catggcgctt cgctttattt accgatggaa gggcttaact gctatcgcca tgccattgcg     240
   ccgctgctgt ttggtgcgga ccatccggta ctgaaacaac agcgcgtagc aaccattcaa     300
   acccttggcg gctccggggc attgaaagtg ggcgcggatt tcctgaaacg ctacttcccg     360
   gaatcaggcg tctgggtcag cgatcctacc tgggaaaacc gcgtagcaat attcgccggg     420
   gctggattcg aagtgagtac ttacccctgg tatgacgaag cgactaacgg cgtgcgcttt     480
   aatgacctgt tggcgacgct gaaaacatta cctgcccgca gtattgtgtt gctgcatcca     540
   tgttgccaca acccaacggg tgccgatctc actaatgatc agtgggatgc ggtgattgaa     600
   attctcaaag cccgcgagct tattccattc ctcgatattg cctatcaagg atttggtgcc     660
   ggtatggaag aggatgccta cgctattcgc gccattgcca gcgctggatt acccgctctg     720
   gtgagcaatt cgttctcgaa aattttctcc ctttacggcg agcgcgtcgg cggactttct     780
   gttatgtgtg aagatgccga agccgctggc cgcgtactgg ggcaattgaa agcaacagtt     840
   cgccgcaact actccagccc gccgaatttt ggtgcgcagg tggtggctgc agtgctgaat     900
   gacgaggcat tgaaagccag ctggctggcg gaagtagaag agatgcgtac tcgcattctg     960
   gcaatgcgtc aggaattggt gaaggtatta agcacagaga tgccagaacg caatttcgat    1020
   tatctgctta atcagcgcgg catgttcagt tataccggtt taagtgccgc tcaggttgac    1080
   cgactacgtg aagaatttgg tgtctatctc atcgccagcg gtcgcatgtg tgtcgccggg    1140
   ttaaatacgg caaatgtaca acgtgtggca aaggcgtttg ctgcggtgat gtaa          1194
<210> 32
   <211> 397
   <212> PRT
   <213> E. coli
<400> 32
   Val Phe Gln Lys Val Asp Ala Tyr Ala Gly Asp Pro Ile Leu Thr Leu
   1               5                   10                  15
   Met Glu Arg Phe Lys Glu Asp Pro Arg Ser Asp Lys Val Asn Leu Ser
               20                  25                  30
   Ile Gly Leu Tyr Tyr Asn Glu Asp Gly Ile Ile Pro Gln Leu Gln Ala
           35                  40                  45
   Val Ala Glu Ala Glu Ala Arg Leu Asn Ala Gln Pro His Gly Ala Ser
       50                  55                  60
   Leu Tyr Leu Pro Met Glu Gly Leu Asn Cys Tyr Arg His Ala Ile Ala
   65                  70                  75                  80
   Pro Leu Leu Phe Gly Ala Asp His Pro Val Leu Lys Gln Gln Arg Val
                   85                  90                  95
   Ala Thr Ile Gln Thr Leu Gly Gly Ser Gly Ala Leu Lys Val Gly Ala
               100                 105                 110
   Asp Phe Leu Lys Arg Tyr Phe Pro Glu Ser Gly Val Trp Val Ser Asp
           115                 120                 125
   Pro Thr Trp Glu Asn Arg Val Ala Ile Phe Ala Gly Ala Gly Phe Glu
       130                 135                 140
   Val Ser Thr Tyr Pro Trp Tyr Asp Glu Ala Thr Asn Gly Val Arg Phe
   145                 150                 155                 160
   Asn Asp Leu Leu Ala Thr Leu Lys Thr Leu Pro Ala Arg Ser Ile Val
                   165                 170                 175
   Leu Leu His Pro Cys Cys His Asn Pro Thr Gly Ala Asp Leu Thr Asn
               180                 185                 190
   Asp Gln Trp Asp Ala Val Ile Glu Ile Leu Lys Ala Arg Glu Leu Ile
           195                 200                 205
   Pro Phe Leu Asp Ile Ala Tyr Gln Gly Phe Gly Ala Gly Met Glu Glu
       210                 215                 220
   Asp Ala Tyr Ala Ile Arg Ala Ile Ala Ser Ala Gly Leu Pro Ala Leu
   225 230 235 240
   Val Ser Asn Ser Phe Ser Lys Ile Phe Ser Leu Tyr Gly Glu Arg Val
   245 250 255
   Gly Gly Leu Ser Val Met Cys Glu Asp Ala Glu Ala Ala Gly Arg Val
   260 265 270
   Leu Gly Gln Leu Lys Ala Thr Val Arg Arg Asn Tyr Ser Ser Pro Pro
   275 280 285
   Asn Phe Gly Ala Gln Val Val Ala Ala Val Leu Asn Asp Glu Ala Leu
   290 295 300
   Lys Ala Ser Trp Leu Ala Glu Val Glu Glu Met Arg Thr Arg Ile Leu
   305 310 315 320
   Ala Met Arg Gln Glu Leu Val Lys Val Leu Ser Thr Glu Met Pro Glu
   325 330 335
   Arg Asn Phe Asp Tyr Leu Leu Asn Gln Arg Gly Met Phe Ser Tyr Thr
   340 345 350
   Gly Leu Ser Ala Ala Gln Val Asp Arg Leu Arg Glu Glu Phe Gly Val
   355 360 365
   Tyr Leu Ile Ala Ser Gly Arg Met Cys Val Ala Gly Leu Asn Thr Ala
   370 375 380
   Asn Val Gln Arg Val Ala Lys Ala Phe Ala Ala Val Met
   385 390 395
<210> 33
   <211> 35
   <212> DNA
   <213> Artificial sequence
<220>
   <223> primer
<400> 33
   ggtattgagg gtcgcgtgtt tcaaaaagtt gacgc 35
<210> 34
   <211> 37
   <212> DNA
   <213> Artificial sequence
<220>
   <223> primer
<400> 34
   agaggagagt tagagcctta catcaccgca gcaaacg 37
<210> 35
   <211> 35
   <212> DNA
   <213> Artificial sequence
<220>
   <223> primer
<400> 35
   ggtattgagg gtcgcatgga gtccaaagtc gttga 35
<210> 36
   <211> 37
   <212> DNA
   <213> Artificial sequence
<220>
   <223> primer
<400> 36
   agaggagagt tagagcctta cacttggaaa acagcct 37
<210> 37
   <211> 35
   <212> DNA
   <213> Artificial sequence
<220>
   <223> primer
<400> 37
   ggtattgagg gtcgcatgaa aaactggaaa acaag 35
<210> 38
   <211> 37
   <212> DNA
   <213> Artificial sequence
<220>
   <223> primer
<400> 38
   agaggagagt tagagcctta cagcttagcg ccttcta 37
<210> 39
   <211> 35
   <212> DNA
   <213> Artificial sequence
<220>
   <223> primer
<400> 39
   ggtattgagg gtcgcatgcg aggggcatta ttcaa 35
<210> 40
   <211> 36
   <212> DNA
   <213> Artificial sequence
<220>
   <223> primer
<400> 40
   agaggagagt tagagcctca gcccttgagc gcgaag 36
<210> 41
   <211> 1416
   <212> DNA
   <213> E. coli
<400> 41
   atggaaaact ttaaacatct ccctgaaccg ttccgcattc gtgttattga gccagtaaaa      60
   cgtaccaccc gcgcttatcg tgaagaggca attattaaat ccggtatgaa cccgttcctg     120
   ctggatagcg aagatgtttt tatcgattta ctgaccgaca gcggcaccgg ggcggtgacg     180
   cagagcatgc aggctgcgat gatgcgcggc gacgaagcct acagcggcag tcgtagctac     240
   tatgcgttag ccgagtcagt gaaaaatatc tttggttatc aatacaccat tccgactcac     300
   cagggccgtg gcgcagagca aatctatatt ccggtactga ttaaaaaacg cgagcaggaa     360
   aaaggcctgg atcgcagcaa aatggtggcg ttctctaact atttctttga taccacgcag     420
   ggccatagcc agatcaacgg ctgtaccgtg cgtaacgtct atatcaaaga agccttcgat     480
   acgggcgtgc gttacgactt taaaggcaac tttgaccttg agggattaga acgcggtatt     540
   gaagaagttg gtccgaataa cgtgccgtat atcgttgcaa ccatcaccag taactctgca     600
   ggtggtcagc cggtttcact ggcaaactta aaagcgatgt acagcatcgc gaagaaatac     660
   gatattccgg tggtaatgga ctccgcgcgc tttgctgaaa acgcctattt catcaagcag     720
   cgtgaagcag aatacaaaga ctggaccatc gagcagatca cccgcgaaac ctacaaatat     780
   gccgatatgc tggcgatgtc cgccaagaaa gatgcgatgg tgccgatggg cggcctgctg     840
   tgcatgaaag acgacagctt ctttgatgtg tacaccgagt gcagaaccct ttgcgtggtg     900
   caggaaggct tcccgacata tggcggcctg gaaggcggcg cgatggagcg tctggcggta     960
   ggtctgtatg acggcatgaa tctcgactgg ctggcttatc gtatcgcgca ggtacagtat    1020
   ctggtcgatg gtctggaaga gattggcgtt gtctgccagc aggcgggcgg tcacgcggca    1080
   ttcgttgatg ccggtaaact gttgccgcat atcccggcag accagttccc ggcacaggcg    1140
   ctggcctgcg agctgtataa agtcgccggt atccgtgcgg tagaaattgg ctctttcctg    1200
   ttaggccgcg atccgaaaac cggtaaacaa ctgccatgcc cggctgaact gctgcgttta    1260
   accattccgc gcgcaacata tactcaaaca catatggact tcattattga agcctttaaa    1320
   catgtgaaag agaacgcggc gaatattaaa ggattaacct ttacgtacga accgaaagta    1380
   ttgcgtcact tcaccgcaaa acttaaagaa gtttaa                              1416
<210> 42
   <211> 1371
   <212> DNA
   <213> Citrobacter freundii
<400> 42
   atgaattatc cggcagaacc cttccgtatt aaaagcgttg aaactgtatc tatgatcccg      60
   cgtgatgaac gcctcaagaa aatgcaggaa gcgggttaca atactttcct gttaaattcg     120
   aaagatattt atattgacct gctgacagac agtggcacta acgcaatgag cgacaagcag     180
   tgggccggaa tgatgatggg tgatgaagcg tacgcgggca gcgaaaactt ctatcatctg     240
   gaaagaaccg tgcaggaact gtttggcttt aaacatattg ttccgactca ccaggggcgt     300
   ggcgcagaaa acctgttatc gcagctggct attaaacctg ggcaatatgt tgccgggaat     360
   atgtatttca ctaccacccg ttatcaccag gaaaaaaatg gtgcggtgtt tgtcgatatc     420
   gttcgtgacg aagcgcacga tgccggtctg aatattgcgt ttaaaggtga tatcgatctt     480
   aaaaaattac aaaagctgat tgatgaaaaa ggcgcagaga atattgcgta tatctgcctg     540
   gcggtgacgg ttaacctcgc gggcggccaa ccggtctcga tggctaacat gcgtgcggtg     600
   cgtgaactga cagaagcgca tggcattaaa gtgttctacg acgctacccg ctgcgtagaa     660
   aacgcctact ttatcaaaga gcaagagcag ggctttgaga acaagagcat cgccgagatc     720
   gtgcatgaga tgttcagcta cgccgacggt tgtaccatga gtggtaaaaa agactgtctg     780
   gtgaacatcg gcggcttcct gtgcatgaac gatgacgaaa tgttctcttc tgccaaagag     840
   ttagtcgtgg tctacgaagg gatgccatct tacggcggcc tggccggacg tgatatggaa     900
   gcgatggcga ttggcctgcg tgaagccatg cagtacgaat atattgagca ccgcgtgaag     960
   caggttcgct acctgggcga taagctgaaa gccgctggcg taccgattgt tgaaccggta    1020
   ggcggtcacg cggtattcct cgatgcgcgt cgcttctgcg agcatctgac gcaagatgag    1080
   ttcccggcac aaagtctggc tgccagcatc tatgtggaaa ccggcgtgcg cagtatggag    1140
   cgcggaatta tctctgcggg ccgtaataac gtgaccggtg aacaccacag accgaaactg    1200
   gaaaccgtgc gtctgactat tccacgtcgt gtttatacct acgcacatat ggatgttgtg    1260
   gctgacggta ttattaaact ttaccagcac aaagaagata ttcgcgggct gaagtttatt    1320
   tacgagccga agcagttgcg tttctttact gcacgctttg attacatcta a             1371
<210> 43
   <211> 35
   <212> DNA
   <213> Artificial sequence
<220>
   <223> primer
<400> 43
   ggtattgagg gtcgcatgga aaactttaaa catct 35
<210> 44
   <211> 37
   <212> DNA
   <213> Artificial sequence
<220>
   <223> primer
<400> 44
   agaggagagt tagagcctta aacttcttta agttttg 37
<210> 45
   <211> 35
   <212> DNA
   <213> Artificial sequence
<220>
   <223> primer
<400> 45
   ggtattgagg gtcgcatgaa ttatccggca gaacc 35
<210> 46
   <211> 37
   <212> DNA
   <213> Artificial sequence
<220>
   <223> primer
<400> 46
   agaggagagt tagagcctta gatgtaatca aagcgtg 37
<210> 47
   <211> 31
   <212> DNA
   <213> Artificial sequence
<220>
   <223> primer
<400> 47
   ccagggcacc ggcgcagagc aaatctatat t 31
<210> 48
   <211> 30
   <212> DNA
   <213> Artificial sequence
<220>
   <223> primer
<400> 48
   tgcgccggtg ccctggtgag tcggaatggt 30
<210> 49
   <211> 32
   <212> DNA
   <213> Artificial sequence
<220>
   <223> primer
<400> 49
   tcctgcacgc ggcaaagggt tctgcactcg gt 32
<210> 50
   <211> 30
   <212> DNA
   <213> Artificial sequence
<220>
   <223> primer
<400> 50
   ctttgccgcg tgcaggaagg cttcccgaca 30
<210> 51
   <211> 29
   <212> DNA
   <213> Artificial sequence
<220>
   <223> primer
<400> 51
   aggggaccgg cgcagaaaac ctgttatcg 29
<210> 52
   <211> 32
   <212> DNA
   <213> Artificial sequence
<220>
   <223> primer
<400> 52
   tctgcgccgg tcccctggtg agtcggaaca at 32
<210> 53
   <211> 29
   <212> DNA
   <213> Artificial sequence
<220>
   <223> primer
<400> 53
   gttagtccgc gtctacgaag ggatgccat 29
<210> 54
   <211> 29
   <212> DNA
   <213> Artificial sequence
<220>
   <223> primer
<400> 54
   gtagacgcgg actaactctt tggcagaag 29
<210> 55
   <211> 35
   <212> DNA
   <213> Artificial sequence
<220>
   <223> primer
<400> 55
   ggtattgagg gtcgcatgta cgaactggga gttgt 35
<210> 56
   <211> 37
   <212> DNA
   <213> Artificial sequence
<220>
   <223> primer
<400> 56
   agaggagagt tagagcctta gtcaatatat ttcaggc 37
<210> 57
   <211> 35
   <212> DNA
   <213> Artificial sequence
<220>
   <223> primer
<400> 57
   ggtattgagg gtcgcatgtc cggcatcgtt gtcca 35
<210> 58
   <211> 37
   <212> DNA
   <213> Artificial sequence
<220>
   <223> primer
<400> 58
   agaggagagt tagagcctca gacatatttc agtccca 37
<210> 59
   <211> 35
   <212> DNA
   <213> Artificial sequence
<220>
   <223> primer
<400> 59
   ggtattgagg gtcgcatgcg actgaacaac ctcgg 35
<210> 60
   <211> 37
   <212> DNA
   <213> Artificial sequence
<220>
   <223> primer
<400> 60
   agaggagagt tagagcctca gttctccacg tattcca 37
<210> 61
   <211> 35
   <212> DNA
   <213> Artificial sequence
<220>
   <223> primer
<400> 61
   ggtattgagg gtcgcatgag cgtggttcac cggaa 35
<210> 62
   <211> 37
   <212> DNA
   <213> Artificial sequence
<220>
   <223> primer
<400> 62
   agaggagagt tagagcctca atcgatatat ttcagtc 37
<210> 63
   <211> 35
   <212> DNA
   <213> Artificial sequence
<220>
   <223> primer
<400> 63
   ggtattgagg gtcgcatgag cctggttaat atgaa 35
<210> 64
   <211> 37
   <212> DNA
   <213> Artificial sequence
<220>
   <223> primer
<400> 64
   agaggagagt tagagcctta tgactttaac gcgttga 37
<210> 65
   <211> 684
   <212> DNA
   <213> C. testosteroni
<400> 65
   atgtacgaac tgggagttgt ctaccgcaat atccagcgcg ccgaccgcgc tgctgctgac      60
   ggcctggccg ccctgggctc cgccaccgtg cacgaggcca tgggccgcgt cggtctgctc     120
   aagccctata tgcgccccat ctatgccggc aagcaggtct cgggcaccgc cgtcacggtg     180
   ctgctgcagc ccggcgacaa ctggatgatg catgtggctg ccgagcagat tcagcccggc     240
   gacatcgtgg tcgcagccgt caccgcagag tgcaccgacg gctacttcgg cgatctgctg     300
   gccaccagct tccaggcgcg cggcgcacgt gcgctgatca tcgatgccgg cgtgcgcgac     360
   gtgaagacgc tgcaggagat ggactttccg gtctggagca aggccatctc ttccaagggc     420
   acgatcaagg ccaccctggg ctcggtcaac atccccatcg tctgcgccgg catgctggtc     480
   acgcccggtg acgtgatcgt ggccgacgac gacggcgtgg tctgcgtgcc cgccgcgcgt     540
   gccgtggaag tgctggccgc cgcccagaag cgtgaaagct tcgaaggcga aaagcgcgcc     600
   aagctggcct cgggcatcct cggcctggat atgtacaaga tgcgcgagcc cctggaaaag     660
   gccggcctga aatatattga ctaa                                            684
<210> 66
   <211> 227
   <212> PRT
   <213> C. testosteroni
<400> 66
   Met Tyr Glu Leu Gly Val Val Tyr Arg Asn Ile Gln Arg Ala Asp Arg
   1               5                   10                  15
   Ala Ala Ala Asp Gly Leu Ala Ala Leu Gly Ser Ala Thr Val His Glu
               20                  25                  30
   Ala Met Gly Arg Val Gly Leu Leu Lys Pro Tyr Met Arg Pro Ile Tyr
           35                  40                  45
   Ala Gly Lys Gln Val Ser Gly Thr Ala Val Thr Val Leu Leu Gln Pro
       50                  55                  60
   Gly Asp Asn Trp Met Met His Val Ala Ala Glu Gln Ile Gln Pro Gly
   65                  70                  75                  80
   Asp Ile Val Val Ala Ala Val Thr Ala Glu Cys Thr Asp Gly Tyr Phe
                   85                  90                  95
   Gly Asp Leu Leu Ala Thr Ser Phe Gln Ala Arg Gly Ala Arg Ala Leu
               100                 105                 110
   Ile Ile Asp Ala Gly Val Arg Asp Val Lys Thr Leu Gln Glu Met Asp
           115                 120                 125
   Phe Pro Val Trp Ser Lys Ala Ile Ser Ser Lys Gly Thr Ile Lys Ala
       130                 135                 140
   Thr Leu Gly Ser Val Asn Ile Pro Ile Val Cys Ala Gly Met Leu Val
   145                 150                 155                 160
   Thr Pro Gly Asp Val Ile Val Ala Asp Asp Asp Gly Val Val Cys Val
                   165                 170                 175
   Pro Ala Ala Arg Ala Val Glu Val Leu Ala Ala Ala Gln Lys Arg Glu
               180                 185                 190
   Ser Phe Glu Gly Glu Lys Arg Ala Lys Leu Ala Ser Gly Ile Leu Gly
           195                 200                 205
   Leu Asp Met Tyr Lys Met Arg Glu Pro Leu Glu Lys Ala Gly Leu Lys
       210                 215                 220
   Tyr Ile Asp
   225
<210> 67
   <211> 42
   <212> DNA
   <213> Artificial sequence
<220>
   <223> primer
<400> 67
   actcggatcc gaaggagata tacatatgta cgaactggga ct 42
<210> 68
   <211> 33
   <212> DNA
   <213> Artificial sequence
<220>
   <223> primer
<400> 68
   cggctgtcga ccgttagtca atatatttca ggc 33
<210> 69
   <211> 31
   <212> DNA
   <213> Artificial sequence
<220>
   <223> primer
<400> 69
   cgcggatcca taatggttga gaacattacc g 31
<210> 70
   <211> 30
   <212> DNA
   <213> Artificial sequence
<220>
   <223> primer
<400> 70
   acgcgtcgac ttacagcact gccacaatcg 30
<210> 71
   <211> 32
   <212> DNA
   <213> Artificial sequence
<220>
   <223> primer
<400> 71
   ccggaattca taatggtcga actgggagtt gt 32
<210> 72
   <211> 33
   <212> DNA
   <213> Artificial sequence
<220>
   <223> primer
<400> 72
   gaatgcggcc gcttagtcaa tatatttcag gcc 33
<210> 73
   <211> 15
   <212> DNA
   <213> Artificial sequence
<220>
   <223> primer
<400> 73
   ggtattgagg gtcgc 15
<210> 74
   <211> 17
   <212> DNA
   <213> Artificial sequence
<220>
   <223> primer
<400> 74
   agaggagagt tagagcc 17